# EUROPEAN PATENT APPLICATION

(11) **EP 2 485 492 A1**
(43) Date of publication of application: **08.08.2012**
(21) Application number: 11823473.1
(22) Date of filing: 01.09.2011
(51) Int. Cl.: H04N 13/00, H04N 7/08, H04N 7/081

(54) **STEREOSCOPIC IMAGE DATA TRANSMISSION DEVICE, STEREOSCOPIC IMAGE DATA TRANSMISSION METHOD, AND STEREOSCOPIC IMAGE DATA RECEPTION DEVICE**

(30) Priority: 06.09.2010 JP 2010199370
(71) Applicant: Sony Corporation, Tokyo 108-0075 (JP)
(72) Inventor: TSUKAGOSHI, Ikuo, Tokyo 108-0075 (JP)
(74) Representative: Ealey, Douglas Ralph
(86) International application number: PCT/JP2011/069887
(87) International publication number: WO 2012/032997

(57) **Abstract**

[Problem] In displaying overlapping information at the time of displaying a stereoscopic image, for example, graphics information such as an OSD, the consistency in the perspective of each object within an image is easily maintained.

[Solution] A disparity information set generating unit (122) generates a disparity information set for a predetermined pixel position based on a disparity map. For example, the predetermined pixel position is a pixel position at which the disparity information value is the maximum, in other words, a pixel position that is recognized to be located on the foremost side or the like. The disparity information set includes position data that represents a relative position with respect to the whole image and the disparity data for the position. The disparity information set is spatially synchronized with stereoscopic image data. This disparity information set is independent from the resolution of a stereoscopic image and is also independent from the display resolution of the monitor or the monitor size. The disparity information set generating unit (122) generates a disparity information set for each period acquired by equally dividing a program period or the like of a predetermined program in a hierarchical manner. The disparity information set is synchronized with the stereoscopic image data in time.

## Description

### TECHNICAL FIELD

The present invention relates to a stereoscopic image data transmission device, a stereoscopic image data transmission method, and a stereoscopic image data reception device, and, more particularly, to a stereoscopic image data transmission device that can satisfactorily display graphics information included in an OSD or the like on the reception side.

### BACKGROUND ART

For example, in Patent Document 1, a transmission system of stereoscopic image data using television broadcast waves has been proposed. In such a case, stereoscopic image data including left-eye image data and right-eye image data is transmitted, and a stereoscopic image display using binocular parallax is performed in a television receiver.

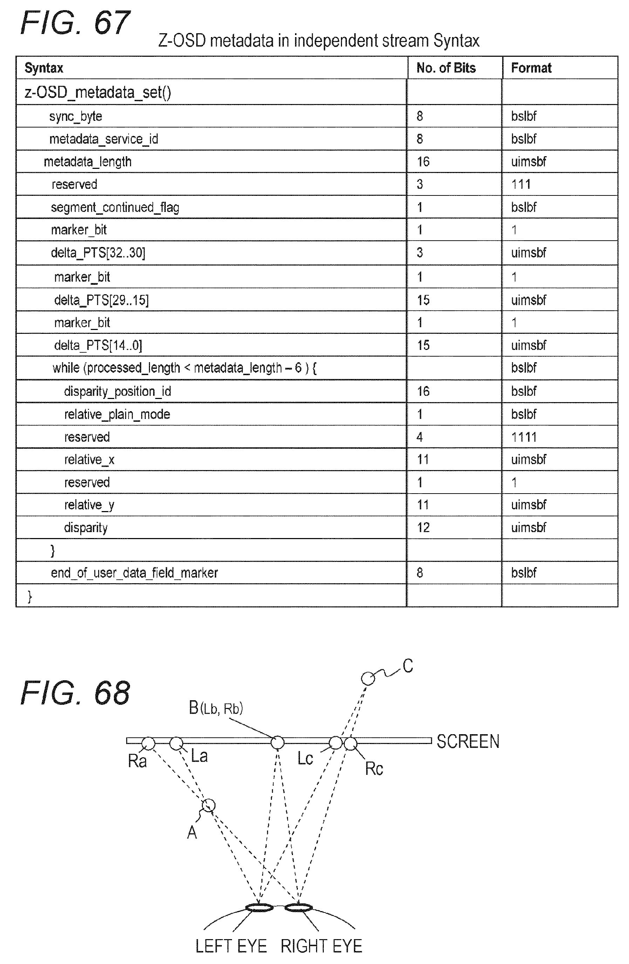

Fig. 68 illustrates the relation between a horizontal display position of an object (body) on a screen and a reproduction position of a stereoscopic image thereof in a stereoscopic image display using binocular parallax. For example, for an object A of which a left image La is displayed to be shifted to the right side and a right image Ra is displayed to be shifted to the left side as illustrated on the screen in the figure, the left and right lines of sights intersect with each other on a further front side than the screen face, whereby the reproduction position of the stereoscopic image is located on a further front side than the screen face.

In addition, for example, for an object B of which a left image Lb and a right image Rb are displayed at the same position as illustrated on the screen in the figure, the left and right lines of sights intersect with each other on the screen face, whereby the reproduction position of the stereoscopic image is on the screen face. Furthermore, for example, for an object C of which a left image Lc is displayed to be shifted to the left side and a right image Rc is displayed to be shifted to the right side as illustrated on the screen in the figure, the left and right lines of sights intersect with each other on a further inner side than the screen face, whereby the reproduction position of the stereoscopic image is located on a further inner side than the screen face.

### CITATION LIST

### PATENT DOCUMENT

Patent Document 1: Japanese Patent Application Laid-Open No. 2005-6114

### SUMMARY OF THE INVENTION

### PROBLEMS TO BE SOLVED BY THE INVENTION

As described above, in a stereoscopic image display, it is common for a viewer to recognize the perspective of a stereoscopic image by using binocular parallax. Also for overlapping information on overlapping images, for example, graphics information included in an on screen display (OSD) or the like, not only a two-dimensional depth but also a three-dimensional depth is expected to be rendered in accordance with a stereoscopic image display.

For example, in a case where graphics information included in an OSD or the like is displayed on a stereoscopic image in an overlapping manner (overlay display), unless the graphics information is displayed on a further front side than a body (object) within an image that is closest to the viewer in terms of the perspective, the viewer may sense a contradiction in the perspective. In other words, in a case where graphics information included in an OSD or the like is displayed on an image in an overlapping manner, it is expected to maintain the consistency of the perspective by performing parallax adjustment in accordance with the perspective of each object within the image.

An object of the present invention is to achieve maintaining the consistence of the perspective between objects within an image in a display of overlapping information, for example, graphics information included in an OSD or the like at the time of displaying a stereoscopic image.

### SOLUTION TO PROBLEMS

According to the concept of the present invention, there is provided a stereoscopic image data transmission device including: an image data output unit that outputs stereoscopic image data of a predetermined program that includes left-eye image data and right-eye image data; a disparity information set output unit that outputs a disparity information set for a predetermined pixel position corresponding to the stereoscopic image data of the predetermined program that is output from the image data output unit; and a transmission unit that transmits the stereoscopic image data output from the image data output unit and the disparity information set output from the disparity information set output unit, wherein the disparity information set includes position data that represents a relative position of the predetermined pixel position with respect to a whole image and disparity data for the predetermined pixel position.

According to the present invention, stereoscopic image data of a predetermined program that includes left-eye image data and right-eye image data is output by the image data output unit. In addition, the disparity information set for a predetermined pixel position that corresponds to the stereoscopic image data of the predetermined program is output by the disparity information set output unit. Then, the stereoscopic image data and the disparity information set are transmitted by the transmission unit.

The disparity information set includes position data that represents a relative position of a predetermined pixel position with respect to the whole image and disparity data for the predetermined pixel position. Accordingly, the disparity information set is spatially synchronized with the stereoscopic image data. In addition, this disparity information set is independent from the resolution of a stereoscopic image and is also independent from the display resolution of the monitor or the monitor size.

In the present invention, for example, the position data is formed by direction data that represents a direction of the predetermined pixel position from an origin and distance data that represents a distance from the origin to the predetermined pixel position. In such a case, for example, the disparity data may be data that represents a ratio of a value of the disparity information for the predetermined pixel position to the distance from the origin or may be a value of the disparity information at specific display resolution, for example, full HD for the predetermined pixel position.

In the present invention, for example, the position data is formed by horizontal distance data that represents a horizontal distance of the predetermined pixel position from the origin and vertical distance data that represents a vertical distance of the predetermined pixel position from the origin. In such a case, for example, the disparity data may be data that represents a ratio of a value of the disparity information for the predetermined pixel position with respect to specific display resolution or a value of the disparity information for the predetermined pixel position at specific display resolution.

In the present invention, for example, the number of the predetermined pixel position is not limited to one but may be two or more. For example, the predetermined pixel positions are a first pixel position at which a value of disparity information is maximum and a second pixel position at which the value of the disparity information is minimum. In such a case, the reception side can acquire a width between the maximum and the minimum of the disparity information values, whereby the depth of a stereoscopic image can be adjusted.

In the present invention, for example, the disparity information set output unit outputs the disparity information set of each divided period acquired by equally dividing a period of the predetermined program in a hierarchical manner. Accordingly, the disparity information set is synchronized with the stereoscopic image data in time.

In the present invention, for example, the transmission unit transmits a transport stream that includes the stereoscopic image data of the predetermined program output from the image data transmission unit and inserts a descriptor that includes the disparity information set output from the disparity information set output unit at a predetermined position of PSI information or SI information that is inserted into the transport stream. Accordingly, on the reception side, a disparity information set can be acquired regardless of the decoder of the image data.

In the present invention, for example, the transmission unit transmits the disparity information set with being included in an elementary stream that is used for transmitting predetermined information. In such a case, for example, the other information is the stereoscopic image data, and the disparity information set may be inserted into a user data region of a header section of the elementary stream. In addition, in such a case, for example, it may be configured such that the predetermined information is subtitle data or independent data, and the elementary stream includes a segment or a packet into which the disparity information set is inserted.

As above, according to the present invention, together with the stereoscopic image data of a predetermined program that includes the left-eye image data and the right-eye image data, a disparity information set for a predetermined pixel position, which corresponds to the stereoscopic image data of the predetermined program is transmitted. Accordingly, on the reception side, by using the disparity information set, the overlapping information overlapping the left-eye image and the right-eye image, for example, graphics information such as an OSD for which disparity adjustment has been performed in accordance with the perspective of each object within an image can be used. Therefore, in displaying graphics information such as an OSD, the consistency in the perspective of each object within the image can be maintained.

In addition, according to the present invention, the disparity information set includes position data that represents a relative position of a predetermined pixel position with respect to the whole image and disparity data for the predetermined pixel position. Accordingly, the disparity information set is independent from the resolution of a stereoscopic image and is also independent from the display resolution of the monitor or the monitor size. Therefore, on the reception side, disparity adjustment can be easily performed by using the disparity information set regardless of the display resolution of the monitor or the monitor size.

In addition, according to another concept of the present invention, there is provided a stereoscopic image data reception device including: a receiving unit that receives stereoscopic image data of a predetermined program that includes left-eye image data and right-eye image data and a disparity information set for a predetermined pixel position corresponding to the stereoscopic image data of the predetermined program; an overlapping information data output unit that outputs data of left-eye overlapping information corresponding to the left-eye image data that is included in the stereoscopic image data received by the receiving unit and data of right-eye overlapping information corresponding to the right eye image data that is included in the stereoscopic image data received by the receiving unit; and a data overlapping unit that overlaps the data of the left-eye overlapping information and the data of the right-eye overlapping information, which are output from the overlapping information data output unit, and the left-eye image data and the right-eye image data included in the stereoscopic image data received by the receiving unit each other, wherein the disparity information set includes position data that represents a relative position of the predetermined pixel position with respect to the whole image and disparity data for the predetermined pixel position, and wherein the overlapping information data output unit brings disparity to occur between the left-eye overlapping information and the right-eye overlapping information based on the disparity information set received by the receiving unit.
This concept can be realized in a general file format other than the transport stream, and the disparity information can be inserted into the inside of the stream.

According to the present invention, stereoscopic image data of a predetermined program that includes left-eye image data and right-eye image data and a disparity information set for a predetermined pixel position corresponding to the stereoscopic image data of the predetermined program are received by the receiving unit. Here, the disparity information set includes position data that represents a relative position of the predetermined pixel position with respect to the whole image and disparity data for the predetermined pixel position. Accordingly, the disparity information set is spatially synchronized with the stereoscopic image data. In addition, this disparity information set is independent from the resolution of a stereoscopic image and is also independent from the display resolution of the monitor or the monitor size.

By the overlapping information data output unit, data of left-eye overlapping information corresponding to the left-eye image data that is included in the stereoscopic image data received by the receiving unit and data of right-eye overlapping information corresponding to the right eye image data that is included in the stereoscopic image data received by the receiving unit are output. Then, by the data overlapping unit, the data of the left-eye overlapping information and the data of the right-eye overlapping information, which are output from the overlapping information data output unit, and the left-eye image data and the right-eye image data included in the stereoscopic image data received by the receiving unit overlap each other. Accordingly, graphics information such as an OSD can be displayed on a stereoscopic image in an overlapping manner.

By the overlapping information data output unit, disparity is brought to occur between the left-eye overlapping information and the right-eye overlapping information based on the disparity information set received by the receiving unit. Therefore, according to the present invention, in displaying graphics information such as an OSD, the consistency in the perspective of each object within the image can be maintained.

In addition, according to the present invention, the disparity information set includes position data that represents a relative position of the predetermined pixel position with respect to the whole image and disparity information for the predetermined pixel position. Accordingly, the disparity information set is independent from the resolution of a stereoscopic image and is also independent from the display resolution of the monitor or the monitor size. Therefore, disparity adjustment can be easily performed by using the disparity information set regardless of the display resolution of the monitor or the monitor size.

According to a further another concept of the present invention, there is provided a stereoscopic image data reception device including: a receiving unit that receives stereoscopic image data of a predetermined program that includes left-eye image data and right-eye image data and a disparity information set for a predetermined pixel position corresponding to the stereoscopic image data of the predetermined program; and a transmission unit that transmits the left-eye image data, the right-eye image data, and the disparity information set that are received by the receiving unit to an external device through a transmission line, wherein the disparity information set includes position data that represents a relative position of the predetermined pixel position with respect to the whole image and disparity data for the predetermined pixel position.

According to the present invention, by the receiving unit, stereoscopic image data of a predetermined program that includes left-eye image data and right-eye image data and a disparity information set for a predetermined pixel position corresponding to the stereoscopic image data of the predetermined program are received. Here, the disparity information set includes position data that represents a relative position of the predetermined pixel position with respect to the whole image and disparity data for the predetermined pixel position. Accordingly, the disparity information set is spatially synchronized with the stereoscopic image data. In addition, this disparity information set is independent from the resolution of a stereoscopic image and is also independent from the display resolution of the monitor or the monitor size.

Then, by the transmission unit, the left-eye image data, the right-eye image data, and the disparity information set that are received are transmitted to an external device through a transmission line. In the present invention, for example, the transmission unit transmits the image data through a plurality of channels to the external device through the transmission line by using differential signals, and the transmission unit transmits the disparity information to the external device by inserting the disparity information set in a blanking period of the image data.

In addition, in the present invention, for example, the transmission unit includes: a transmission data generating unit that generates transmission data in units of a video field period including a horizontal blanking interval, a vertical blanking interval, and an active video interval that are broken in accordance with a vertical synchronization signal; and a transmission data transmitting unit that transmits the transmission data generated by the transmission data generating unit to the external device through the transmission line through a plurality of channels by using differential signals, wherein the active video interval includes a main video region and an auxiliary video region, and the transmission data generating unit arranges image data in the main video region and arranges the disparity information set relating to the image data arranged in the main video region in the auxiliary video region.

As above, according to the present invention, together with the left-eye image data and the right-eye image data, a disparity information set for a predetermined pixel position, which corresponds to the stereoscopic image data of the predetermined program, is transmitted to an external device through the transmission line. Accordingly, in an external device, for example, an image display device such as a television receiver, by using the disparity information set, the overlapping information overlapping the left-eye image and the right-eye image, for example, graphics information such as an OSD for which disparity adjustment has been performed in accordance with the perspective of each object within an image can be used. Therefore, in displaying graphics information such as an OSD, the consistency in the perspective of each object within the image can be maintained.

In addition, according to the present invention, the disparity information set includes position data that represents a relative position of a predetermined pixel position with respect to the whole image and disparity data for the predetermined pixel position. Accordingly, the disparity information set is independent from the resolution of a stereoscopic image and is also independent from the display resolution of the monitor or the monitor size. Therefore, in an external device, for example, an image display device such as a television receiver, disparity adjustment can be easily performed by using the disparity information set regardless of the display resolution of the monitor or the monitor size.

In addition, according to a still further concept of the present invention, there is provided a stereoscopic image data transmission device including: an image data output unit that outputs stereoscopic image data of a predetermined program that includes left-eye image data and right-eye image data; a disparity information output unit that outputs disparity information corresponding to the stereoscopic image data of the predetermined program that is output from the image data output unit; and a transmission unit that transmits the stereoscopic image data output from the image data output unit and the disparity information output from the disparity information output unit, wherein the transmission unit inserts a segment or a packet that includes the disparity information into an elementary stream used for transmitting predetermined information, and the segment or the packet further includes timing information that represents usage timing of the disparity information.

According to the present invention, by the image data output unit, stereoscopic image data of a predetermined program that includes left-eye image data and right-eye image data are output. In addition, by the disparity information output unit, disparity information corresponding to the stereoscopic image data of the predetermined program is output. This disparity information, for example, is formed by position data that represents a position or an area and the disparity data for the area. In such a case, there is a case where the position data represents a relative position with respect to the whole image, a case where the position data represents the absolute position within the image, or the like.

By the transmission unit, the stereoscopic image data output from the image data output unit and the disparity information output from the disparity information output unit are transmitted. In such a case, in the transmission unit, a segment or a packet that includes the disparity information is inserted into an elementary stream used for transmitting predetermined information such as a subtitle or independent data. In this segment or packet, timing information that represents the usage timing of the disparity information is further included.

As above, according to the present invention, together with the stereoscopic image data of a predetermined program that includes the left-eye image data and the right-eye image data, the disparity information corresponding to the stereoscopic image data of the predetermined program and the usage timing information of the disparity information are transmitted. Accordingly, on the reception side, by using the disparity information, the overlapping information overlapping the left-eye image and the right-eye image, for example, graphics information such as an OSD for which disparity adjustment has been performed in accordance with the perspective of each object within an image can be used. Therefore, in displaying graphics information such as an OSD, the consistency in the perspective of each object within the image can be maintained.

In addition, in the present invention, for example, the segment or the packet may further include flag information that represents whether or not the segments or the packets are continuously present. In such a case, on the reception side, it can be checked whether or not segments or packets in which the disparity information is included are continuously present based on the flag information, and accordingly, the possibility of update of the disparity information and the like can be checked in advance.

### EFFECTS OF THE INVENTION

According to the present invention, in a display of overlapping information, for example, graphics information such as an OSD at the time of displaying a stereoscopic image, the consistency of the perspective between respective objects within an image can be easily maintained.

### BRIEF DESCRIPTION OF DRAWINGS

Fig. 1 is a block diagram that illustrates an example of the configuration of a stereoscopic image displaying system as an embodiment of the present invention.
Fig. 2 is a block diagram that illustrates an example of the configuration of a transmission data generating unit in a broadcasting station.
Fig. 3 is a diagram that illustrates image data having a pixel format of 1920 × 1080 p.
Fig. 4 is a diagram that illustrates a "Top & Bottom" type, a "Side By Side" type, and a "Frame Sequential" type that are transmission types of stereoscopic image data (3D image data).
Fig. 5 is a diagram that illustrates an example of detecting a disparity vector of a right-eye image with respect to a left-eye image.
Fig. 6 is a diagram that illustrates calculating a disparity vector in a block matching type.
Fig. 7 is a diagram that illustrates generating a disparity information set for each divided period acquired by equally dividing a program period in a hierarchical manner.
Fig. 8 is a diagram that illustrates an example of the configuration of a transport stream (a descriptor including the disparity information set is inserted under an EIT).
Fig. 9 is a diagram that illustrates an example of the configuration of a transport stream (a descriptor including a disparity information set is inserted into a program descriptor included in a PMT).
Fig. 10 is a diagram that illustrates an example of the configuration of a transport stream (a descriptor including a disparity information set is arranged in a descriptor part of a video elementary loop).
Fig. 11 is a diagram that illustrates a disparity information set that is generated in "Case 1".
Fig. 12 is a diagram that illustrates the disparity information set that is generated in "Case 1".
Fig. 13 is a flowchart that illustrates the processing sequence in generating a disparity information set in "Case 1".
Fig. 14 is a diagram that illustrates direction data included in a disparity information set that is generated in "Case 3".
Fig. 15 is a diagram that illustrates the disparity information set that is generated in "Case 3".
Fig. 16 is a diagram that illustrates the disparity information set that is generated in "Case 3".
Fig. 17 is a flowchart that illustrates the processing sequence in generating a disparity information set in "Case 3".
Fig. 18 is a diagram that illustrates a disparity information set (coordinate mode 0) that is generated in "Case 5".
Fig. 19 is a diagram that illustrates a disparity information set (coordinate mode 1) that is generated in "Case 5".
Fig. 20 is a flowchart that illustrates the processing sequence in generating a disparity information set in "Case 5".
Fig. 21 is a diagram that illustrates disparity data (Relative_Disparity_ratio) included in a disparity information set that is generated in "Case 6".
Fig. 22 is a diagram that illustrates an example of the content of a disparity information set that is generated in "Case 1".
Fig. 23 is a diagram that illustrates an example of the content of a disparity information set that is generated in "Case 2".
Fig. 24 is a diagram that illustrates an example of the content of a disparity information set that is generated in "Case 3".
Fig. 25 is a diagram that illustrates an example of the content of a disparity information set that is generated in "Case 4".
Fig. 26 is a diagram that illustrates a major data specifying content (semantics) in the example of the content of the disparity information set.
Fig. 27 is a diagram that illustrates an example of the content of a disparity information set that is generated in "Case 5".
Fig. 28 is a diagram that illustrates an example of the content of a disparity information set that is generated in "Case 6".
Fig. 29 is a diagram that illustrates a major data specifying content (semantics) in the example of the content of the disparity information set.
Fig. 30 is a diagram that illustrates an example of a descriptor (z-OSD Descriptor) including the disparity information set that is generated in "Case 1".
Fig. 31 is a diagram that illustrates an example of a descriptor (z-OSD Descriptor) including the disparity information set that is generated in "Case 2".
Fig. 32 is a diagram that illustrates an example of a descriptor (z-OSD Descriptor) including the disparity information set that is generated in "Case 3".
Fig. 33 is a diagram that illustrates an example of a descriptor (z-OSD Descriptor) including the disparity information set that is generated in "Case 4".
Fig. 34 is a diagram that illustrates an example of a descriptor (z-OSD Descriptor) including the disparity information set that is generated in "Case 5".
Fig. 35 is a diagram that illustrates an example of a descriptor (z-OSD Descriptor) including the disparity information set that is generated in "Case 6".
Fig. 36 is a block diagram that illustrates an example of the configuration of a set-top box.
Fig. 37 is a block diagram that illustrates an example of the configuration of a television receiver.
Fig. 38 is a flowchart that illustrates the sequence of a reproduction process on the reception side for the disparity information set that is generated in "Case 1".
Fig. 39 is a diagram that illustrates the reproduction process on the reception side for the disparity information set that is generated in "Case 1".
Fig. 40 is a diagram that illustrates the reproduction process on the reception side for the disparity information set that is generated in "Case 1".
Fig. 41 is a flowchart that illustrates the sequence of a reproduction process on the reception side for the disparity information set that is generated in "Case 6".
Fig. 42 is a diagram that illustrates the relation between disparity information and the position according to a difference in the size of a monitor.
Fig. 43 is a diagram that illustrates the relation between disparity information and the position according to a difference in the resolution.
Fig. 44 is a diagram that schematically illustrates an example of interpolation in a case where pixels are shifted by a half pixel in the horizontal direction.
Fig. 45 is a block diagram that illustrates the configuration of an HDMI transmission unit (HDMI source) and an HDMI receiving unit (HDMI sink).
Fig. 46 is a diagram that illustrates an example of the structure of TMDS transmission data (in a case where image data having horizontal 1920 pixels x vertical 1080 lines is transmitted).
Fig. 47 is a diagram that illustrates the pin arrangement (type A) of an HDMI terminal to which an HDMI cable of the source device or the sink device is connected.
Fig. 48 is a diagram that illustrates an example of the data structure of E-EDID.
Fig. 49 is a diagram that illustrates an example of the data structure of a vender specific region (HDMI Vendor Specific Data Block).
Fig. 50 is a diagram that illustrates the 3D video format of a frame packing type that is one of TMDS transmission data structures of stereoscopic image data.
Fig. 51 is a diagram that illustrates an example of the packet structure of an HDMI Vendor Specific Info Frame in a case where the HDMI Vendor Specific Info Frame is used for the transmission of a disparity information set.
Fig. 52 is a diagram that illustrates an example of the packet structure of an HDMI Vendor Specific Info Frame in a case where an active space area is used for the transmission of a disparity information set.
Fig. 53 is a diagram that illustrates the structure of a disparity information set that is arranged in the active space area.

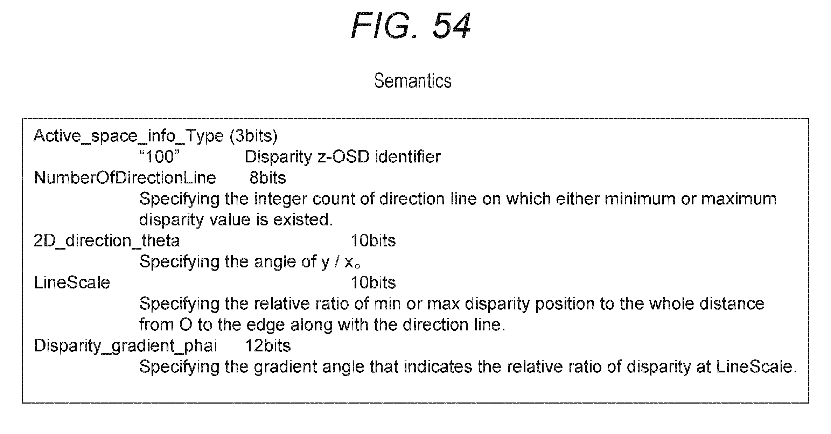

Fig. 54 is a diagram that illustrates each information content of a disparity information set structure.
Fig. 55 is a diagram that illustrates another example of the configuration of a stereoscopic image displaying system.
Fig. 56 is a diagram that illustrates an example of the configuration of a transport stream in a case where a disparity information set is transmitted by being inserted into a video elementary stream (video data stream).
Fig. 57 is a diagram that schematically illustrates an example of the structure of a video elementary stream (Video Elementary Stream).
Fig. 58 is a diagram that illustrates an example of the configuration of user data that is embedded in a user data region of a picture header section.
Fig. 59 is a diagram that illustrates an example of the structure (Syntax) of user data that includes a disparity information set.
Fig. 60 is a diagram that illustrates major data specifying contents (Semantics) of various structure examples such as the structure (Syntax) of user data that includes a difference information set.
Fig. 61 is a diagram that illustrates an example of the configuration of a transport stream in a case where a disparity information set is transmitted by being inserted into a subtitle elementary stream (subtitle data stream).
Fig. 62 is a diagram that illustrates the segment types of various segments that are included in the subtitle element stream.
Fig. 63 is a diagram that illustrates an example of the structure (syntax) of a zOSD (z-OSD segment).
Fig. 64 is a diagram that illustrates the configuration of a PES header and PES payload data of the subtitle data stream.
Fig. 65 is a diagram that illustrates an example of the configuration of a transport stream in a case where a disparity information set is transmitted as an independent metadata (Metadata) stream.
Fig. 66 is a diagram that illustrates an example of the structure (syntax) of a metadata elementary stream into which metadata (z-OSD metadata) including a disparity information set is inserted.
Fig. 67 is a diagram that illustrates an example of the detailed structure of "z-OSD_Metadata_set()".
Fig. 68 is a diagram that illustrates the relation between a horizontal display position of an object on a screen and a reproduction position of a stereoscopic image thereof in a stereoscopic image display using binocular parallax.

### MODE FOR CARRYING OUT THE INVENTION

Hereinafter, a mode for carrying out the present invention (hereinafter, referred to as an "embodiment") will be described. The description will be presented in the following order.
1. Embodiment
2. Modified Example

### <1. Embodiment>

### [Example of Configuration of Stereoscopic Image Displaying System]

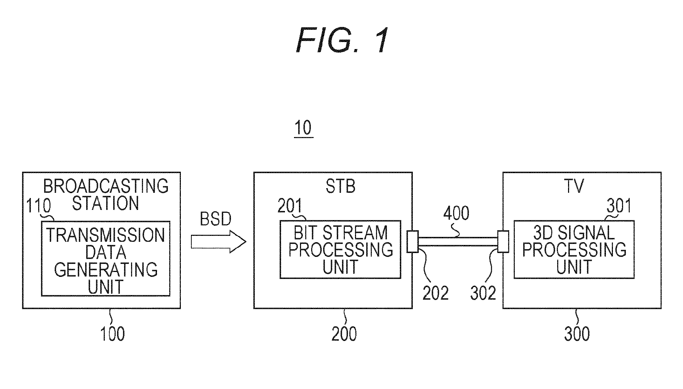

Fig. 1 illustrates an example of the configuration of a stereoscopic image displaying system 10 as the embodiment. The stereoscopic image transmitting and receiving system 10 includes a broadcasting station 100, a set-top box (STB) 200, and a television receiver (TV) 300.

The set-top box 200 and the television receiver 300 are interconnected through a high definition multimedia interface (HDMI) cable 400. An HDMI terminal 202 is disposed in the set-top box 200. In addition, an HDMI terminal 302 is disposed in the television receiver 300. One end of the HDMI cable 400 is connected to the HDMI terminal 202 of the set-top box 200, and the other end of the HDMI cable 400 is connected to the HDMI terminal 302 of the television receiver 300.

### [Description of Broadcasting Station]

The broadcasting station 100 transmits bit stream data BSD by carrying it in broadcast waves. The broadcasting station 100 includes a transmission data generating unit 110 that generates the bit stream data BSD. In the bit stream data BSD, stereoscopic image data, audio data, a disparity information set, and the like are included. Here, the stereoscopic image data is stereoscopic image data of a predetermined program that includes left-eye image data and right-eye image data. The audio data is audio data that corresponds to the stereoscopic image data. The disparity information set is a disparity information set of a predetermined pixel position corresponding to the stereoscopic image data.

### [Example of Configuration of Transmission Data Generating Unit]

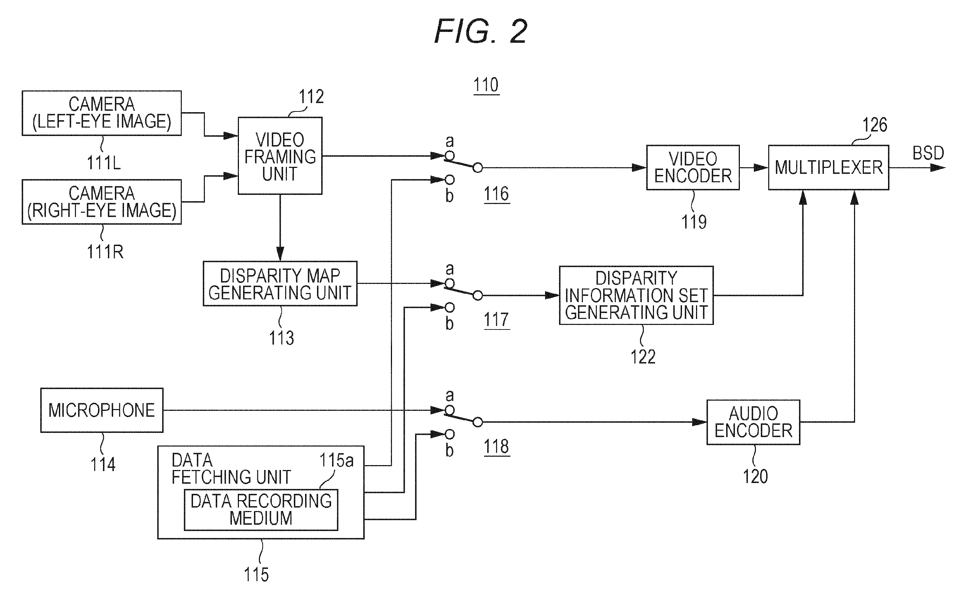

Fig. 2 illustrates an example of the configuration of the transmission data generating unit 110 that generates transmission data in the broadcasting station 100. The transmission data generating unit 110 includes: cameras 111L and 111R; a video framing unit 112; a disparity map generating unit 113; a microphone 114; a data fetching unit 115; and change-over switches 116 to 118. In addition, the transmission data generating unit 110 includes: a video encoder 119; an audio encoder 120; a disparity information set generating unit 122; and a multiplexer 126.

The camera 111L acquires left-eye image data used for a stereoscopic image display by photographing a left-eye image. The camera 111R acquires right-eye image data used for a stereoscopic image display by photographing a right-eye image. The video framing unit 112 processes the left-eye image data acquired by the camera 111L and the right image data acquired by the camera 111R into stereoscopic image data (3D image data) corresponding to the transmission format. The video framing unit 112 configures an image data output unit.

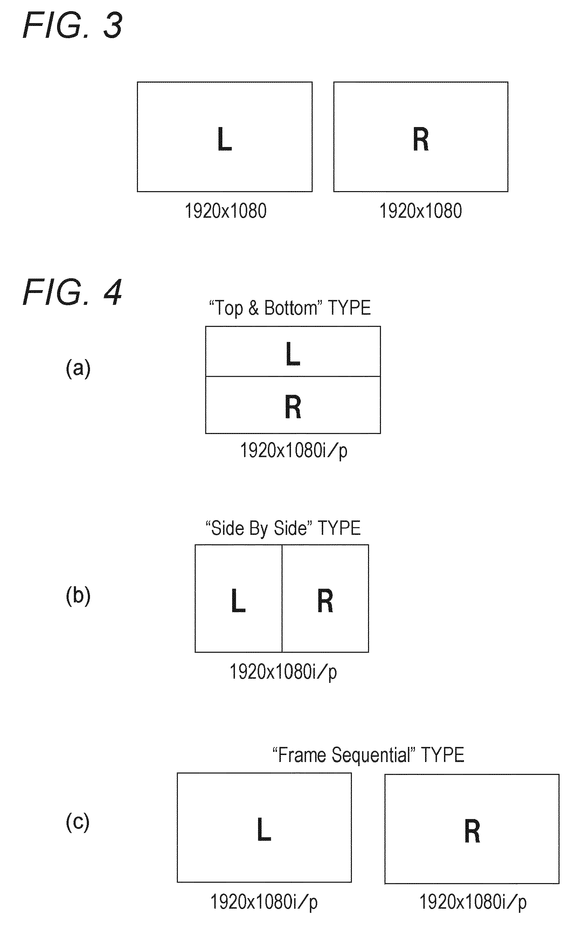

An example of the transmission format of the stereoscopic image data will be described. Here, although the following first to third transmission formats will be described, a transmission format other than these may be used. Here, as illustrated in Fig. 3, a case will be described as an example in which each one of image data of the left eye (L) and image data of the right eye (R) is image data of determined resolution, for example, a pixel format of 1920 x 1080.

The first transmission type is a top and bottom (Top & Bottom) type and, as illustrated in Fig. 4(a), is a transmission type in which data of each line of the left-eye image data is transmitted in the first half in the vertical direction, and data of each line of the left-eye image data is transmitted in the second half in the vertical direction. In such a case, since the lines of the left-eye image data and the lines of the right-eye image data are thinned out to 1/2, the vertical resolution becomes a half of that of the original signal.

The second transmission type is a side-by-side type and, as illustrated in Fig. 4(b), is a transmission type in which pixel data of the left-eye image data is transmitted in the first half in the horizontal direction, and pixel data of the right-eye image data is transmitted in the second half in the horizontal direction. In such a case, pixel data of each one of the left-eye image data and the right-eye image data in the horizontal direction is thinned out to 1/2. The horizontal resolution becomes a half of that of the original signal.

The third transmission type is a frame sequential type, and, as illustrated in Fig. 4(c), is a transmission type in which switching between left-eye image data and right-eye image data is performed sequentially for each frame. In addition, there are also cases where the frame sequential type is called as a full frame type or a backward compatible type.

Referring back to Fig. 2, the disparity map generating unit 113 generates a disparity map, for example, by detecting a disparity vector (disparity information) for each pixel configuring an image based on the left-eye image data and the right-eye image data. For example, the further a pixel is located on the front side, the greater the value of the disparity information is.

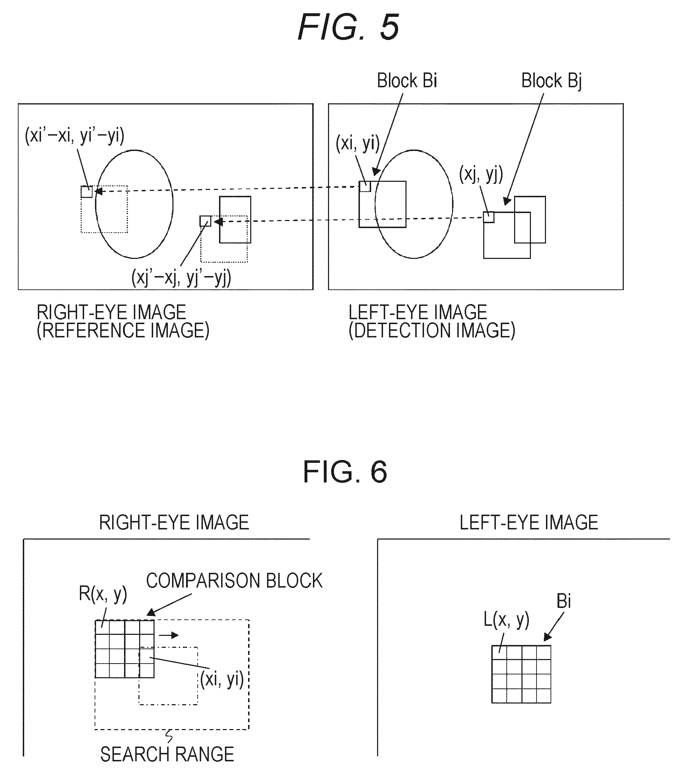

An example of detecting a disparity vector will be described. Here, an example will be described in which a disparity vector of a right-eye image with respect to a left-eye image is detected. As illustrated in Fig. 5, the left-eye image is set as a detection image, and the right-eye image is set as a reference image. In this example, disparity vectors at the positions of (xi, yi) and (xj, yj) are detected.

A case will be described as an example in which a disparity vector at the position of (xi, yi) is detected. In this case, in the left-eye image, a pixel located at the position of (xi, yi) is set as the upper left side, and, for example, a pixel block (disparity detection block) Bi of 4 × 4, 8 × 8, or 16 × 16 is set. Then, in the right-eye image, a pixel block that matches the pixel block Bi is searched for.

In such a case, in the right-eye image, a search range having the position of (xi, yi) as its center is set, and each pixel within the search range is sequentially set as a pixel of interest, and comparison blocks, for example, of 4 × 4, 8 × 8, or 16 × 16, which is the same as that of the above-described pixel block Bi, are sequentially set.

Between the pixel block Bi and each comparison block that is sequentially set, a sum of absolute values of differences between corresponding pixels is calculated. Here, as illustrated in Fig. 6, when a pixel value of the pixel block Bi is L(x, y), and a pixel value of the comparison block is R(x, y), a sum of the absolute values of differences between the pixel block Bi and a specific comparison block is represented as Σ|L(x, y) - R(x, y)|.

When n pixels are included in the search range set in the right-eye image, n sums S1 to Sn are finally acquired, and a minimum sum Smin is selected from among them. Then, the position (xi', yi') of the pixel located on the upper left side can be acquired from the comparison block from which the sum Smin is acquired. Accordingly, a disparity vector at the position of (xi, yi) is detected as (xi'-xi, yi'-yi). Although detailed description will not be presented, also for a disparity vector at the position of (xj, yj), a pixel located at the position of (xj, yj) is set as the upper left side in the left-eye image, and a pixel block Bj, for example, of 4 × 4, 8 × 8, or 16 × 16 is set, so that the disparity vector can be detected in a similar process.

The microphone 114 detects audio corresponding to the images photographed by the cameras 111L and 111R so as to acquire audio data.

The data fetching unit 115 is used in a state in which a data recording medium 115a is detachably attached thereto. The data recording medium 115a is a disk-shaped recording medium, a semiconductor memory, or the like. In the data recording medium 115a, together with stereoscopic image data including the left-eye image data and the right-eye image data, audio data and a disparity map are recorded in association therewith. The data fetching unit 115 fetches the stereoscopic image data, the audio data, and the disparity map from the data recording medium 115a and outputs the fetched data. The data fetching unit 115 configures an image data output unit.

Here, the stereoscopic image data recorded in the data recording medium 115a corresponds to the stereoscopic image data that is acquired by the video framing unit 112. In addition, the audio data recorded in the data recording medium 115a corresponds to the audio data that is acquired by the microphone 114. Furthermore, the disparity map recorded in the data recording medium 115a corresponds to the disparity vector that is generated by the disparity map generating unit 113.

The change-over switch 116 selectively fetches the stereoscopic image data acquired by the video framing unit 112 or the stereoscopic image data output from the data fetching unit 115. In such a case, the change-over switch 116 is connected to side "a" and fetches the stereoscopic image data acquired by the video framing unit 112 in a live mode, and is connected to side "b" and fetches the stereoscopic image data output from the data fetching unit 115 in a reproduction mode.

A change-over switch 117 selectively fetches the disparity map that is generated by the disparity map generating unit 113 or the disparity map that is output from the data fetching unit 115. In such a case, the change-over switch 117 is connected to side "a" and fetches the disparity map that is generated by the disparity map generating unit 113 in the live mode, and is connected to side "b" and fetches the disparity map that is output from the data fetching unit 115 in the reproduction mode.

The change-over switch 118 selectively fetches the audio data that is acquired by the microphone 114 or the audio data that is output from the data fetching unit 115. In such a case, the change-over switch 118 is connected to side "a" and fetches the audio data that is acquired by the microphone 114 in the live mode, and is connected to side "b" and fetches the audio data that is output from the data fetching unit 115 in the reproduction mode.

The video encoder 119 performs encoding such as MPEG4-AVC, MPEG2, or VC-1 on the stereoscopic image data that is fetched by the change-over switch 116 so as to generate a video data stream (video elementary stream). The audio encoder 120 performs encoding such as AC3 or AAC on the audio data that is fetched by the change-over switch 118 so as to generate an audio data stream (audio elementary stream).

The disparity information set generating unit 122 generates a disparity information set for a predetermined pixel position corresponding to the stereoscopic image data of a predetermined program that is output from the change-over switch 116, based on the disparity map that is fetched by the change-over switch 117. The predetermined pixel position, for example, is a pixel position at which the disparity information value is maximized, in other words, the pixel position that is recognized to be located on the foremost side, or the like.

The disparity information set includes position data that represents a relative position of a predetermined pixel position with respect to the whole image and disparity data of the predetermined pixel position. Accordingly, the disparity information set is spatially synchronized with the stereoscopic image data. In addition, the disparity information set is independent from the resolution of the stereoscopic image and is also independent from the display resolution of the monitor and the monitor size.

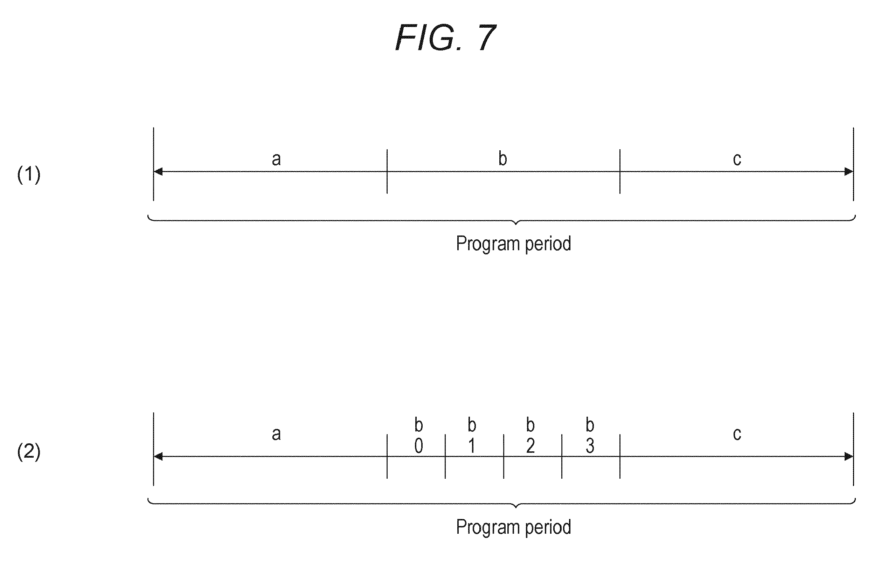

The disparity information set generating unit 122 generates a disparity information set for each divided period that is acquired by equally dividing a program period of a predetermined program or the like in a hierarchical manner. Accordingly, the disparity information set is synchronized with the stereoscopic image data in time. Fig. 7(1) illustrates a state in which the program period is equally divided into three periods a, b, and c. In addition, Fig. 7(2) illustrates a state in which the period b is further equally divided into four periods. Here, the number of hierarchies for the equally dividing is not limited to two. The generation of a disparity information set by using the disparity information set generating unit 122 will be descried later in detail.

The multiplexer 126 acquires a multiplexed data stream as bit stream data (transport stream) BSD by multiplexing the data streams transmitted from the video encoder 119 and the audio encoder 120. In addition, the multiplexer 126 inserts a disparity information set generated by the disparity information set generating unit 122 into the bit stream data BSD. More specifically, the multiplexer 126 inserts a descriptor (z-OSD descriptor) including a disparity information set at a predetermined position in PSI information or SI information that is inserted into the bit stream data BSD. The descriptor will be described later in detail.

The operation of the transmission data generating unit 110 illustrated in Fig. 2 will be briefly described. A left-eye image is photographed by the camera 111L. Left-eye image data, which is acquired by the camera 111L, used for displaying a stereoscopic image is supplied to the video framing unit 112. In addition, a right-eye image is photographed by the camera 111R. Right-eye image data, which is acquired by the camera 111R, used for displaying a stereoscopic image is supplied to the video framing unit 112. The left image data and the right image data are processed to be in a state corresponding to the transmission format by the video framing unit 112, whereby stereoscopic image data is acquired (see Figs. 4(a) to 4(c)).

The stereoscopic image data acquired by the video framing unit 112 is supplied to a fixed terminal of the change-over switch 116 that is located on side "a". In addition, the stereoscopic image data acquired by the data fetching unit 115 is supplied to a fixed terminal of the change-over switch 116 that is located on side "b". In the live mode, the change-over switch 116 is connected to side "a", and the stereoscopic image data acquired by the video framing unit 112 is fetched from the change-over switch 116. In the reproduction mode, the change-over switch 116 is connected to side "b", and the stereoscopic image data output from the data fetching unit 115 is fetched from the change-over switch 116.

The stereoscopic image data fetched by the change-over switch 116 is supplied to the video encoder 119. In the video encoder 119, encoding such as MPEG4-AVC, MPEG2, or VC-1 is performed for the stereoscopic image data, whereby a video data stream that includes encoded video data is generated. The video data stream is supplied to the multiplexer 126.

The audio data acquired by the microphone 114 is supplied to the fixed terminal of the change-over switch 118 that is located on side "a". In addition, the audio data acquired by the data fetching unit 115 is supplied to the fixed terminal of the change-over switch 118 that is located on side "b". In the live mode, the change-over switch 118 is connected to side "a", and the audio data acquired by the microphone 114 is fetched from the change-over switch 118. In the reproduction mode, the change-over switch 118 is connected to side "b", and the audio data that is output from the data fetching unit 115 is fetched from the change-over switch 118.

The audio data fetched by the change-over switch 118 is supplied to the audio encoder 120. In the audio encoder 120, encoding such as MPEG-2Audio AAC or MPEG-4 AAC is performed for the audio data, whereby an audio data stream that includes encoded audio data is generated. The audio data stream is supplied to the multiplexer 126.

The left-eye image data and the right-eye image data acquired by the cameras 111L and 111R are supplied to the disparity map generating unit 113 through the video framing unit 112. In the disparity map generating unit 113, based on the left-eye image data and the right-eye image data, a disparity vector is detected for each pixel, whereby a disparity map is generated. The disparity map is supplied to the fixed terminal of the change-over switch 117 that is located on side "a". In addition, the disparity map that is output from the data fetching unit 115 is supplied to the fixed terminal of the change-over switch 117 that is located on side "b".

In the live mode, the change-over switch 117 is connected to side "a", and the disparity map generated by the disparity map generating unit 113 is fetched from the change-over switch 117. In the reproduction mode, the change-over switch 117 is connected to side "b", and the disparity map output from the data fetching unit 115 is fetched from the change-over switch 117.

The disparity map fetched by the change-over switch 117 is supplied to the disparity information set generating unit 122. In the disparity information set generating unit 122, based on the disparity map, a disparity information set for a predetermined pixel position corresponding to the stereoscopic image data of a predetermined program that is output from the change-over switch 116 is generated in correspondence with each divided period that is hierarchically divided. In the disparity information set, position data that represents a relative position of the predetermined pixel position with respect to the whole image and disparity information for the predetermined pixel position are included. The disparity information set is supplied to the multiplexer 126.

In the multiplexer 126, data streams transmitted from the video encoder 119 and the audio encoder 120 are multiplexed, whereby a multiplexed data stream as a bit stream data (transport stream) BSD is acquired.

In addition, in the multiplexer 126, the disparity information set generated by the disparity information set generating unit 122 is inserted into the bit stream data BSD. In other words, in the multiplexer 126, a descriptor (z-OSD descriptor) including the disparity information set is inserted into a predetermined position of the PSI information or the SI information that is inserted into the bit stream data BSD.

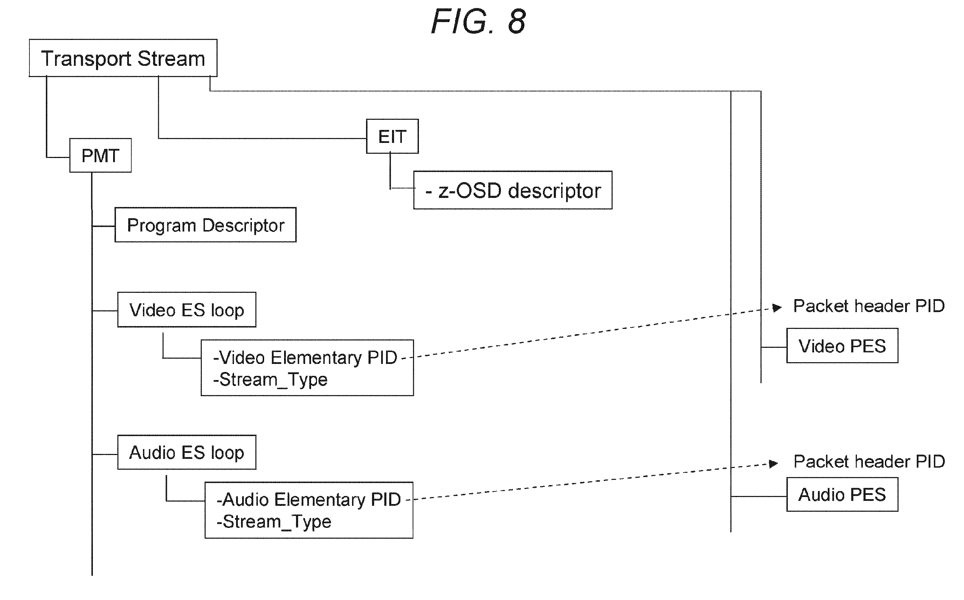

Figs. 8 to 10 illustrate examples of the configuration of the transport stream (bit stream data). In the transport stream, a PES packet that is acquired by forming each elementary stream as a packet is included. In these examples of the configuration, a PES packet "Video PES" of the video elementary stream and a PES packet "Audio PES" of the audio elementary stream are included.

In addition, in the transport stream, a program map table (PMT) is included as a program specific information (PSI). The PSI is information that describes a program to which each elementary stream included in the transport stream belongs. In addition, in the transport stream, an event information table (EIT) as serviced information (SI) that performs management in units of events is included. In the EIT, meta data in units of programs is described.

In the PMT, there is a program descriptor that describes information relating to the whole program. In addition, in the PMT, there is an elementary loop that has information relating to each elementary stream. In this configuration example, there are a video elementary loop and an audio element loop. In each elementary loop, for each stream, information such as a packet identifier (PID) is arranged, and, although not illustrated in the figure, a descriptor that describes information relating to the elementary stream is also arranged.

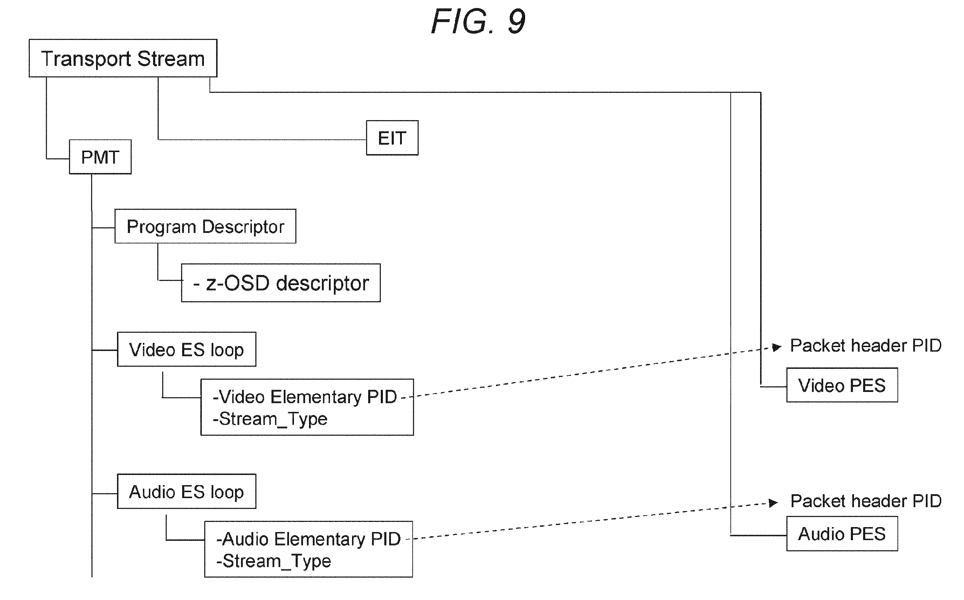

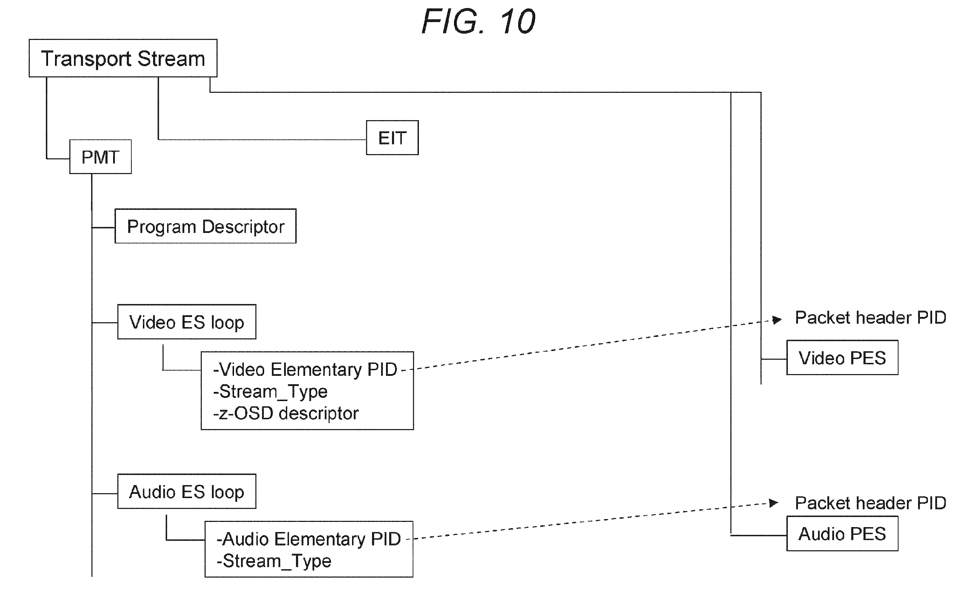

In an example of the configuration of a transport stream illustrated in Fig. 8, under the EIT, a descriptor (z-OSD descriptor) that includes a disparity information set is inserted. In addition, in an example of the configuration of a transport stream illustrated in Fig. 9, a descriptor (z-OSD descriptor) that includes a disparity information set is inserted into a program descriptor included in the PMT. Furthermore, in an example of the configuration of a transport stream illustrated in Fig. 10, a descriptor including a disparity information set is arranged in a descriptor part of a video elementary loop (Video ES loop).

### [Disparity Information Set Generating Unit]

The generation of a disparity information set using the disparity information set generating unit 122 (see Fig. 2) will be described in detail. The disparity information set generating unit 122 generates a disparity information set, for example, in accordance with the following Case 1 to Case 6.

### [Case 1]

The disparity information set generating unit 122, as described above, generates a disparity information set for a predetermined pixel position corresponding to stereoscopic image data of a predetermined program. In the disparity information set, position data for the predetermined pixel position and disparity data for the predetermined pixel position are included. The predetermined pixel positions are arbitrarily set by a user's setting operation or are automatically set, and the number of the predetermined pixel positions is not limited. Here, the predetermined pixel position (x, y) is represented by coordinates in which an image center O is set as its origin (0, 0). In addition, in "Case 1", the origin (0, 0) is excluded from the domain of the predetermined pixel positions.

In this "Case 1", the position data is formed by direction data that represents the direction for a predetermined pixel position from the origin (0, 0) and distance data that represents a distance from the origin (0, 0) to the predetermined pixel position. The direction data for a pixel position (x, y) is configured by tangent data (tan θ = y/x) and a zone identifier (Zone_id) of two bits that are used for identifying a quadrant in which the pixel position (x, y) is located. For example, "Zone_id = 00" represents the first quadrant, "Zone_id =01" represents the second quadrant, "Zone_id = 10" represents the third quadrant, and "Zone_id =11" represents the fourth quadrant.

In addition, the distance data (Line Scale) for the pixel position (x, y) is configured to represent the ratio to the length of a segment from the origin (0, 0) which passes through the pixel position (x, y) and arrives at the end of an image region. In such a case, when a distance from the origin (0, 0) to the pixel position (x, y) is L, and the length of a segment that passes through the pixel position (x, y) from the origin and arrives at the end of the image region is LineFull, Line Scale = L/LineFull.

In this "Case 1", disparity data for the pixel position (x, y) is configured to be data that represents the ratio of the value of the disparity information (disparity vector) at the pixel position (x, y) to a distance from the origin (0, 0) to the pixel position (x, y). In other words, when the distance from the origin (0, 0) to the pixel position (x, y) is L, and the value of the disparity information (disparity vector) for the pixel position (x, y) is D, the disparity data (Disparity Gradient: tan φ) is tan φ = D/L.

Hereinafter, a case will be described in which a first pixel position at which the value of the disparity information is the maximum (Max) and a pixel position (second pixel position) at which the value of the disparity information is the minimum (Min) are set as predetermined positions. The pixel position at which the value of the disparity information is the maximum represents a position at which an image is recognized to be closest. In addition, the pixel position at which the value of the disparity information is the minimum represents a position at which an image is recognized to be farthest. In such a case, the reception side can acquire a width between the maximum and the minimum of the disparity information values, whereby the depth of a stereoscopic image can be adjusted.

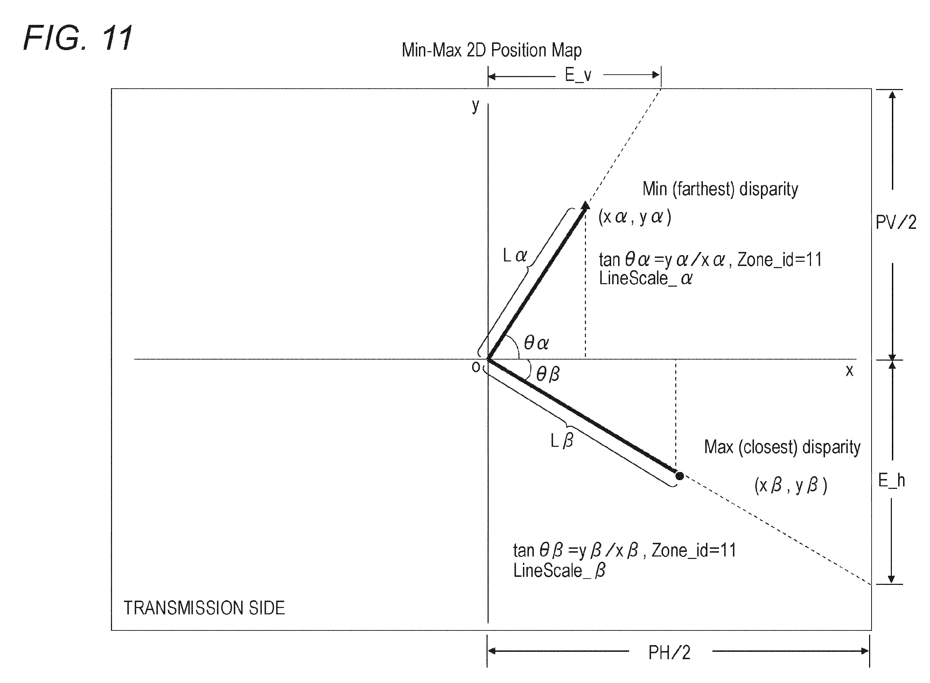

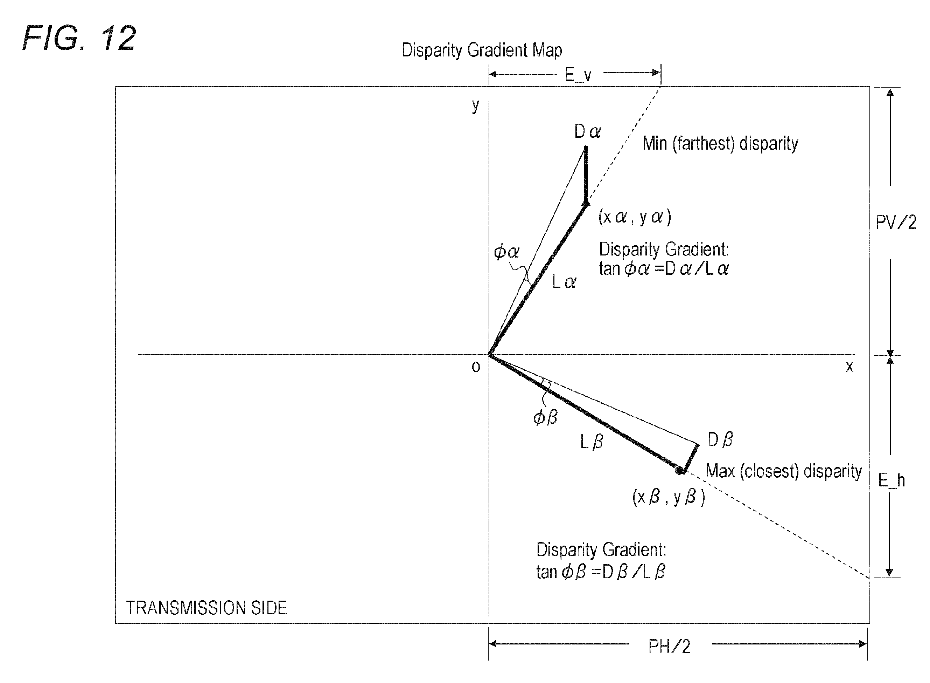

Figs. 11 and 12 illustrate examples of two-dimensional positions (2D Direction) of the first pixel position (xβ, yβ) and the second pixel position (xα, yα) in the whole image. The coordinates (xβ, yβ) and the coordinates (xα, yα) represent the coordinates of the pixel positions when the center of the image is set as the origin (0, 0).

The disparity information set for the first pixel position (xβ, yβ) will be described. The position data is formed by direction data and distance data (Line Scale_β). In addition, the direction data is configured by tangent data (tan θβ) and a zone identifier (Zone_id_β). The disparity information set generating unit 122, as illustrated in Fig. 11, acquires the tangent data (tan θβ) as "tan θβ = yβ/xβ". In addition, since (xβ, yβ) is in the fourth quadrature as illustrated in Fig. 11, the disparity information set generating unit 122 sets the zone identifier (Zone_id_β) to be "Zone_id_β = 11".

In addition, the disparity information set generating unit 122 acquires the distance data (Line Scale_β), as illustrated in Fig. 11, as "Line Scale_β = Lβ/LineFull_β". Here Lβ = √(xβ² + yβ²), and LineFull_β = √((E_h)² + (PV/2)²).

Furthermore, the disparity information set generating unit 122, as illustrated in Fig. 12, acquires the disparity data (DisparityGradient: tan φβ) as "tan φβ = Dβ/Lβ". Here, Dβ is the value of the disparity information (disparity vector) for the pixel position (xβ, yβ), and Lβ = √(xβ² + yβ²).

Next, the disparity information set for the second pixel position (xα, yα) will be described. The position data is formed by direction data and distance data (Line Scale_α). In addition, the direction data is configured by tangent data (tan θα) and a zone identifier (Zone_id_α). The disparity information set generating unit 122, as illustrated in Fig. 11, acquires the tangent data (tan θα) as "tan θα = yα/xα". In addition, since (xα, yα) is in the first quadrature as illustrated in Fig. 11, the disparity information set generating unit 122 sets the zone identifier (Zone_id_α) to be "Zone_id_α = 00".

In addition, the disparity information set generating unit 122 acquires the distance data (Line Scale_α), as illustrated in Fig. 11, as "Line Scale_α = Lα/LineFull_α". Here Lα = √(xα² + yα²), and LineFull_α = √((PH/2)² +(E_v)²).

In addition, the disparity information set generating unit 122, as illustrated in Fig. 12, acquires the disparity data (DisparityGradient: tan φα) as "tan φα = Dα/Lα". Here Dα is the value of the disparity information (disparity vector) for the pixel position (xα, yα), and Lα = √(xα² + yα²).

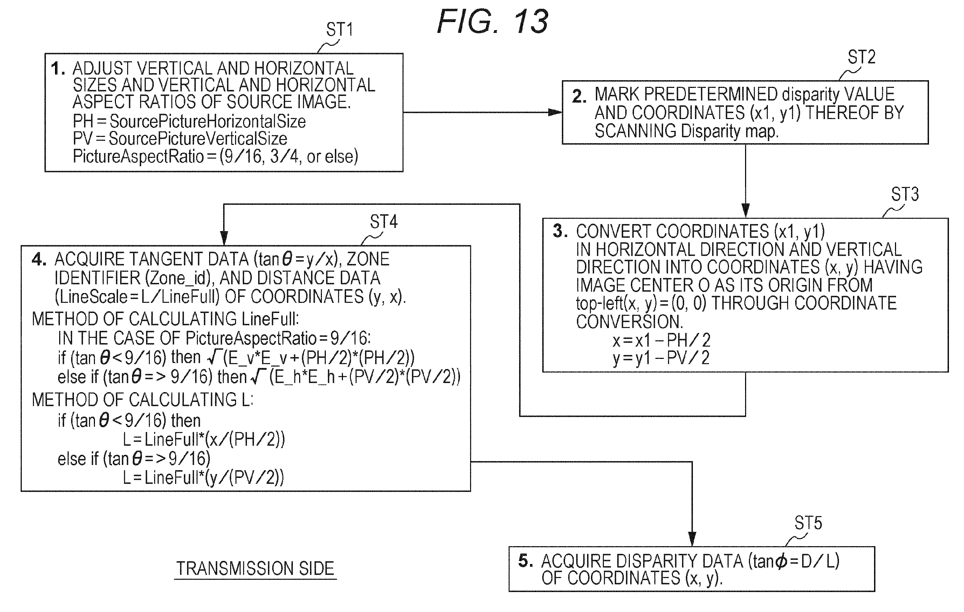

A flowchart of Fig. 13 illustrates the processing sequence of generating a disparity information set in "Case 1" in the disparity information set generating unit 122. The disparity information set generating unit 122, in Step ST1, checks the vertical size (PV = Source Picture Vertical Size), the horizontal size (PH = Source Picture Horizontal Size), and the aspect ratio (Picture Aspect Ratio) of a source image.

Next, the disparity information set generating unit 122, in Step ST2, marks the value of a predetermined disparity information (disparity vector) and the coordinates (x1, y1) thereof by scanning the disparity map. In these coordinates (x1, y1), the top left side (top-left) of the image is set as the origin (0, 0).

Next, the disparity information set generating unit 122, in Step ST3, converts the coordinates (x1, y1) into coordinates (x, y) that have the image center O as its origin (0, 0). The conversion equations in this case are x = x1 - PH/2 and y = y1 - PV/2.

Next, the disparity information set generating unit 122, in Step ST4, acquires tangent data (tan θ = y/x) that configures the direction data of the pixel position (x, y) and a zone identifier (Zone_id) of two bits that are used for identifying the quadrature in which the pixel position (x, y) is located. In addition, the disparity information set generating unit 122, in Step ST4, acquires distance data (Line Scale = L/LineFull) for the pixel position (x, y).

Here, the "LineFull" is acquired as below based on the relation with the aspect ratio. Here, although a case is illustrated in which the aspect ratio is 9/16, it may be similarly applied to a case where the aspect ratio is other than the above-described aspect ratio. In a case where |tan θ| < 9/16, "LineFull = √((E_v)² + (PH/2)²)". On the other hand, in a case where |tan θ| ≥ 9/16, "LineFull = √((E_h)² + (PV/2)²)".

In addition, "L" is acquired as below based on the relation with the aspect ratio. In a case where |tan θ| < 9/16, "L = LineFull*(x/(PH/2))". On the other hand, in a case where |tan θ| ≥ 9/16, "L = LineFull*(y/(PV/2))".

Next, the disparity information set generating unit 122, in Step ST5, acquires disparity data (Disparity Gradient: tan φ = D/L) for the pixel position (x, y).

### [Case 2]

The disparity information set generating unit 122, as described above, generates a disparity information set for a predetermined pixel position corresponding to stereoscopic image data of a predetermined program. In the disparity information set, position data for the predetermined pixel position and disparity data for the predetermined pixel position are included. The predetermined pixel positions are arbitrarily set by a user's setting operation or are automatically set, and the number of the predetermined pixel positions is not limited. Here, the predetermined pixel position (x, y) is represented by coordinates in which an image center O is set as the origin (0, 0). In addition, in "Case 2", the origin (0, 0) is excluded from the domain of the predetermined pixel positions.

In this "Case 2", the position data, similarly to "Case 1" described above, is formed by direction data that represents the direction for a predetermined pixel position from the origin (0, 0) and distance data that represents a distance from the origin (0, 0) to the predetermined pixel position. The direction data for a pixel position (x, y) is configured by tangent data (tan θ = y/x) and a zone identifier (Zone_id) of two bits that are used for identifying a quadrant in which the pixel position (x, y) is located.

In addition, the distance data (Line Scale) for the pixel position (x, y) is configured to represent the ratio to the length of a segment from the origin (0, 0) which passes through the pixel position (x, y) and arrives at the end of an image region. In such a case, when a distance from the origin (0, 0) to the pixel position (x, y) is Lα, and the length of a segment that passes through the pixel position (x, y) from the origin and arrives at the end of the image region is LineFull, Line Scale = Lα/LineFull.

In addition, in this "Case 2", the disparity data for the pixel position (x, y) is set as a value of the disparity information (disparity vector) at specific display resolution for the pixel position (x, y).

As above, in this "Case 2", the disparity information set generating unit 122 generates position data (direction data and distance data) that is similar to that of the above-described "Case 1" as the position data for a predetermined pixel position. In addition, in this "Case 2", the disparity information set generating unit 122, as the disparity data for the predetermined pixel position, generates disparity information (disparity vector) at specific display resolution for the pixel position (x, y). The specific display resolution, for example, is the resolution of full HD of 1920 x 1080.

Accordingly, the processing sequence of generating a disparity information set in "Case 2" in the disparity information set generating unit 122 is performed similarly to the processing sequence illustrated in the above-described flowchart of Fig. 13 except for the process of requesting the disparity data of Step ST5. In other words, in the processing sequence of generating a disparity information set in "Case 2", as disparity data for coordinates (x, y), disparity information (disparity vector) at a specific display resolution for the coordinates (x, y) is acquired.

### [Case 3]

The disparity information set generating unit 122, as described above, generates a disparity information set for a predetermined pixel position corresponding to stereoscopic image data of a predetermined program. In the disparity information set, position data for the predetermined pixel position and disparity data for the predetermined pixel position are included. The predetermined pixel positions are arbitrarily set by a user's setting operation or are automatically set, and the number of the predetermined pixel positions is not limited. Here, the predetermined pixel position (x, y) is represented by coordinates in which an image center O is set as the origin (0, 0). In addition, in "Case 3", the origin (0, 0) is excluded from the domain of the predetermined pixel positions.

In this "Case 3", the position data is formed by direction data that represents the direction for a predetermined pixel position from the origin (0, 0) and distance data that represents a distance from the origin (0, 0) to the predetermined pixel position. The direction for a pixel position (x, y) is selected from eight directions including upward, downward, leftward, and rightward directions and directions interposed therebetween, which are set in advance, 16 directions including directions interposed therebetween, or the like. In other words, the direction data for the pixel position (x, y) is set as data that directly represents a direction.

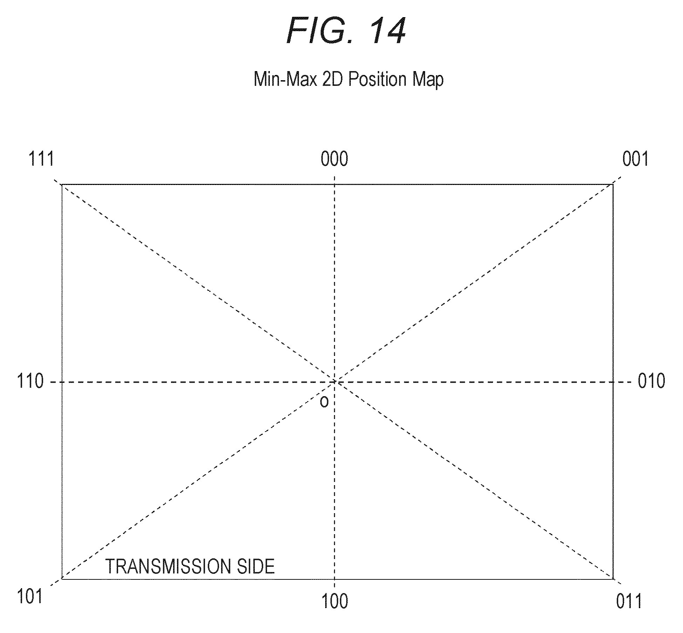

For example, in a case where the direction data is configured by 3-bit data, as illustrated in Fig. 14, one direction can be selectively designated from among eight directions including the upward, downward, leftward, and rightward directions and directions interposed therebetween by using the 3-bit data.

In addition, the distance data (Line Scale) for the pixel position (x, y), similarly to the above-described "Case 1", is configured to represent the ratio to the length of a segment from the origin (0, 0) which passes through the pixel position (x, y) and arrives at the end of an image region. In such a case, when a distance from the origin (0, 0) to the pixel position (x, y) is L, and the length of a segment that passes through the pixel position (x, y) from the origin and arrives at the end of the image region is LineFull, Line Scale = L/LineFull.

In this "Case 3", disparity data for the pixel position (x, y) is configured to be data that represents the ratio of the value of the disparity information (disparity vector) at the pixel position (x, y) to a distance from the origin (0, 0) to the pixel position (x, y). In other words, when the distance from the origin (0, 0) to the pixel position (x, y) is L, and the value of the disparity information (disparity vector) for the pixel position (x, y) is D, the disparity data (Disparity Gradient: tan φ) is tan φ = D/L.

Hereinafter, a case will be described in which a pixel position located in a direction disposed between the upward direction and the rightward direction is set as the predetermined pixel position. For example, this pixel position is a pixel position at which the value of the disparity information (disparity vector) is the maximum (Max). The pixel position at which the value of the disparity information is the maximum represents a position at which the image is recognized to be the closest.

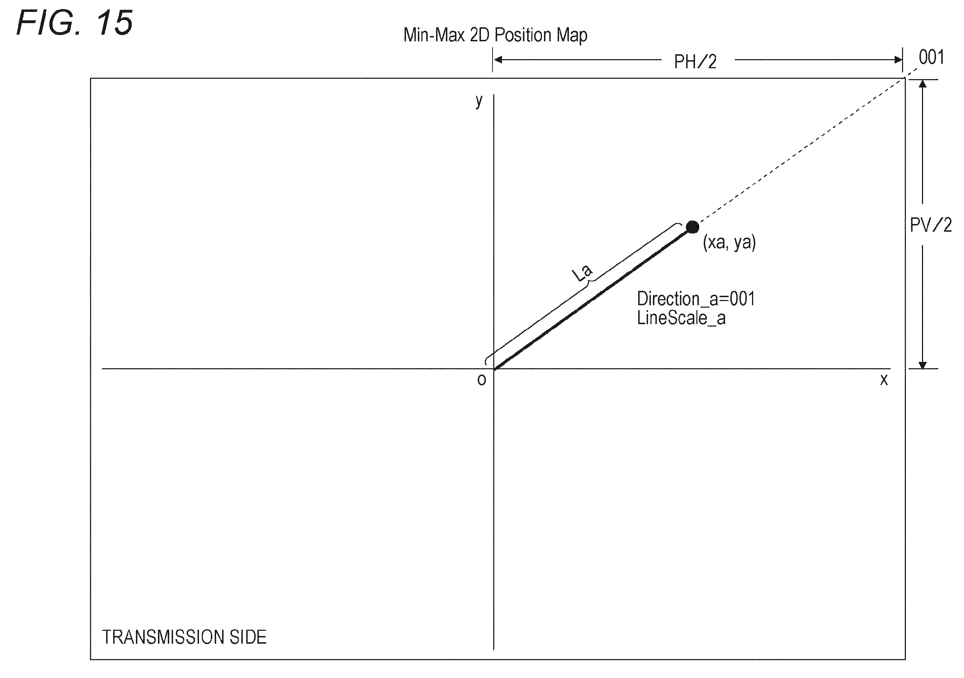

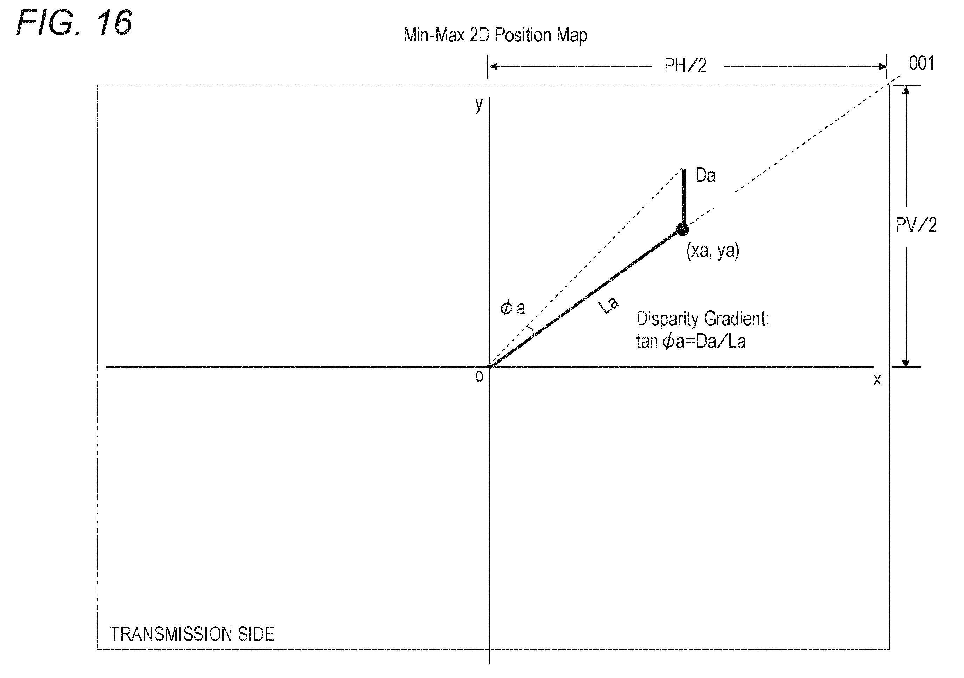

Figs. 15 and 16 illustrate examples of two-dimensional positions (2D Direction) of the pixel position (xa, ya) in the whole image. Here, (xa, ya) represents the coordinates of the pixel position when the center of the image is set as the origin (0, 0).

The disparity information set for the pixel position (xa, ya) will be described. The position data is formed by direction data (Direction_a) and distance data (Line Scale_a). The disparity information set generating unit 122, as illustrated in Fig. 15, sets the direction data (Direction_a) as "Direction_a = 001".

In addition, the disparity information set generating unit 122 acquires the distance data (Line Scale_β), as illustrated in Fig. 15, as "Line Scale_a = La/LineFull_a". Here La = √(xa² + ya²), and LineFull_a = √((PH/2)² + (PV/2)²).

Furthermore, the disparity information set generating unit 122, as illustrated in Fig. 16, acquires the disparity data (DisparityGradient: tan φa) as "tan φa = Da/La". Here, Da is the value of the disparity information (disparity vector) for the pixel position (xa, ya), and La = √(xa² + ya²).

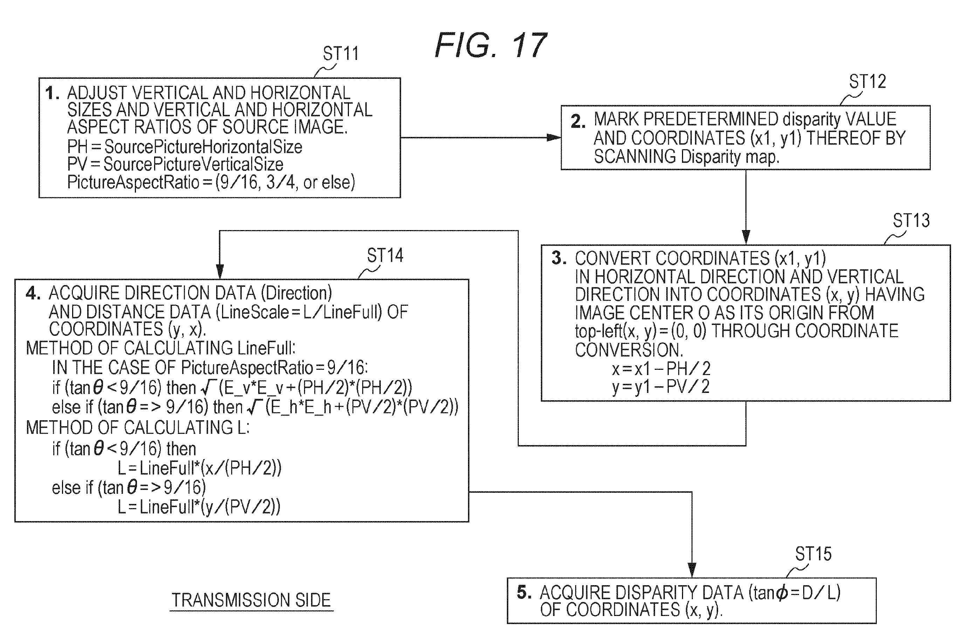

A flowchart of Fig. 17 illustrates the processing sequence of generating a disparity information set in "Case 3" in the disparity information set generating unit 122. The disparity information set generating unit 122, in Step ST11, checks the vertical size (PV = Source Picture Vertical Size), the horizontal size (PH = Source Picture Horizontal Size), and the aspect ratio (Picture Aspect Ratio) of a source image.

Next, the disparity information set generating unit 122, in Step ST12, marks the value of a predetermined disparity information (disparity vector) and the coordinates (x1, y1) thereof by scanning the disparity map. In these coordinates (x1, y1), the top left side (top-left) of the image is set as the origin (0, 0).

Next, the disparity information set generating unit 122, in Step ST13, converts the coordinates (x1, y1) into coordinates (x, y) having the image center O as its origin (0, 0). The conversion equations in this case are x = x1 - PH/2 and y = y1 - PV/2. Here, there are a case where the coordinates (x, y) after the conversion are located on one line disposed in one of eight directions, 16 directions, or the like that are set in advance from the origin (0, 0) and a case where the coordinates after the conversion are not on such a line. In a case where the coordinates are not on such a line, for example, instead of the coordinates (x, y) after the conversion, coordinates located on a line that is the closest are set as new coordinates (x, y).

Next, the disparity information set generating unit 122, in Step ST14, acquires direction data (Direction) for the pixel position (x, y) and distance data (Line Scale = L/LineFull) for the pixel position (x, y).

Here, the "LineFull" is acquired as below based on the relation with the aspect ratio. Here, although a case is illustrated in which the aspect ratio is 9/16, it may be similarly applied to a case where the aspect ratio is other than the above-described aspect ratio. In a case where |tan θ| < 9/16, "LineFull = √((E_v)² + (PH/2)²)". On the other hand, in a case where |tan θ| ≥ 9/16, "LineFull = √((E_h)² + (PV/2)²)". In addition, E_v satisfies 0≤ E_v ≤ PH/2, and E_h satisfies 0 ≤ E_h ≤ PV/2 (see Fig. 12).

In addition, "L" is acquired as below based on the relation with the aspect ratio. In a case where |tan θ| < 9/16, "L = LineFull*(x/(PH/2))". On the other hand, in a case where |tan θ| ≥ 9/16, "L = LineFull*(y/(PV/2))".

Next, the disparity information set generating unit 122, in Step ST15, acquires disparity data (Disparity Gradient: tan φ = D/L) for the pixel position (x, y).

### [Case 4]

The disparity information set generating unit 122, as described above, generates a disparity information set for a predetermined pixel position corresponding to stereoscopic image data of a predetermined program. In the disparity information set, position data for the predetermined pixel position and disparity data for the predetermined pixel position are included. The predetermined pixel positions are arbitrarily set by a user's setting operation or are automatically set, and the number of the predetermined pixel positions is not limited. Here, the predetermined pixel position (x, y) is represented by coordinates in which an image center O is set as the origin (0, 0). In addition, in "Case 4", the origin (0, 0) is excluded from the domain of the predetermined pixel positions.

In this "Case 4", the position data is formed by direction data that represents the direction for a predetermined pixel position from the origin (0, 0) and distance data that represents a distance from the origin (0, 0) to the predetermined pixel position. The direction for a pixel position (x, y) is selected from eight directions including upward, downward, leftward, and rightward directions and directions interposed therebetween, which are set in advance, 16 directions including directions interposed therebetween, or the like. In other words, the direction data for the pixel position (x, y) is set as data that directly represents a direction.

In addition, the distance data (Line Scale) for the pixel position (x, y), similarly to the above-described "Case 1", is configured to represent the ratio to the length of a segment from the origin (0, 0) which passes through the pixel position (x, y) and arrives at the end of an image region. In such a case, when a distance from the origin (0, 0) to the pixel position (x, y) is L, and the length of a segment that passes through the pixel position (x, y) from the origin and arrives at the end of the image region is LineFull, Line Scale = L/LineFull.

Furthermore, in this "Case 4", disparity data for the pixel position (x, y) is configured to be a value of the disparity information (disparity vector) at a specific display resolution for the pixel position (x, y).

As above, in this "Case 4", the disparity information set generating unit 122 generates position data (direction data and distance data) that is similar to that of the above-described "Case 3" as the position data for a predetermined pixel position. In addition, in this "Case 4", the disparity information set generating unit 122, as the disparity data for the predetermined pixel position, generates disparity information (disparity vector) at specific display resolution for the predetermined pixel position (x, y). The specific display resolution, for example, is the resolution of full HD of 1920 x 1080.

Accordingly, the processing sequence of generating a disparity information set in "Case 4" in the disparity information set generating unit 122 is performed similarly to the processing sequence illustrated in the above-described flowchart of Fig. 17 except for the process of requesting the disparity data of Step ST15. In other words, in the processing sequence of generating a disparity information set in "Case 4", as disparity data for coordinates (x, y), disparity information (disparity vector) at a specific display resolution for the coordinates (x, y) is acquired.

### [Case 5]

The disparity information set generating unit 122, as described above, generates a disparity information set for a predetermined pixel position corresponding to stereoscopic image data of a predetermined program. In the disparity information set, position data for the predetermined pixel position and disparity data for the predetermined pixel position are included. The predetermined pixel positions are arbitrarily set by a user's setting operation or are automatically set, and the number of the predetermined pixel positions is not limited.

Here, a predetermined pixel position (x, y) is represented by coordinates having the image center O as its origin point (0, 0) in Coordinate Mode 0. In addition, a predetermined pixel position (x, y) is represented by coordinates having the top left side (top-left) as its origin point (0, 0) in Coordinate Mode 1.

In this "Case 5", the position data is formed by horizontal distance data (Rxa) that represents a horizontal distance from the origin (0, 0) and vertical distance data (Rya) that represents a vertical distance from the origin (0, 0). The horizontal distance data Rxa is represented as a ratio with respect to the size of the image in the horizontal direction. In Coordinate Mode 0, "Rxa = x/(PH/2)*100". In addition, in Coordinate Mode 1, "Rxa = x/(PH)*100". Here, PH represents the size of the image in the horizontal direction. In addition, the vertical distance data Rya is represented as a ratio to the image in the vertical direction size. In Coordinate Mode 0, "Rya = y/(PV/2)*100". In addition, in Coordinate Mode 1, "Rya = y/(PV)*100". Here, PV illustrates the size of the image in the vertical direction.

In this "Case 5", disparity data for the pixel position (x, y) is configured to be a value of the disparity information (disparity vector) at a specific display resolution for the pixel position (x, y). The specific display resolution, for example, is the resolution of full HD of 1920 x 1080.

Hereinafter, a case will be described in which a first pixel position at which the value of the disparity information is the maximum (Max) and a pixel position (second pixel position) at which the value of the disparity information is the minimum (Min) are set as predetermined pixel positions. The pixel position at which the value of the disparity information is the maximum represents a position at which an image is recognized to be closest. In addition, the pixel position at which the value of the disparity information is the minimum represents a position at which an image is recognized to be farthest. In such a case, the reception side can acquire a width between the maximum and the minimum of the disparity information values, whereby the depth of a stereoscopic image can be adjusted.

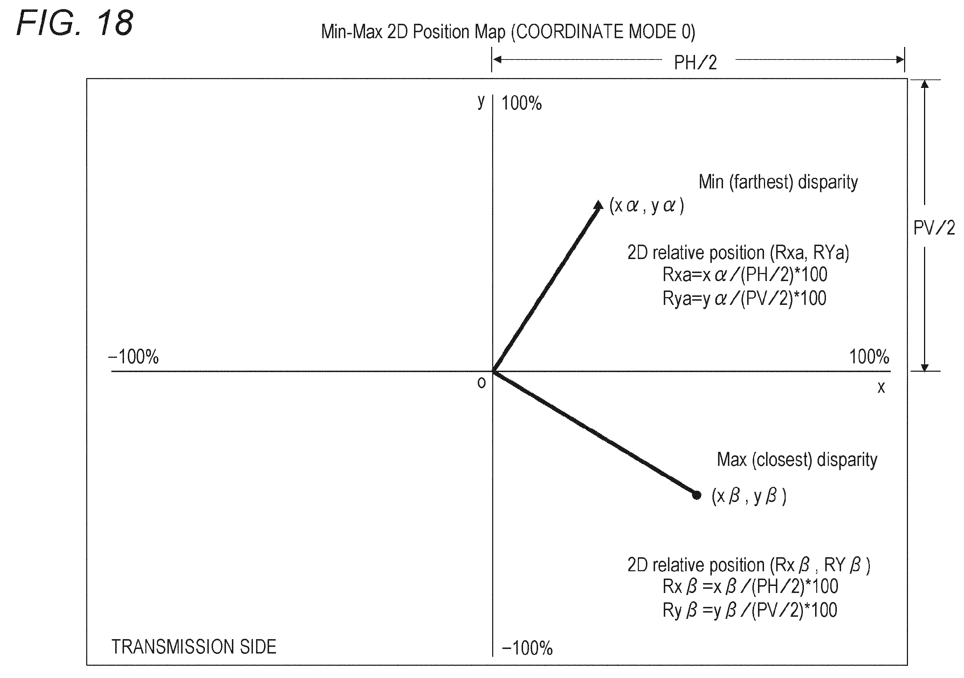

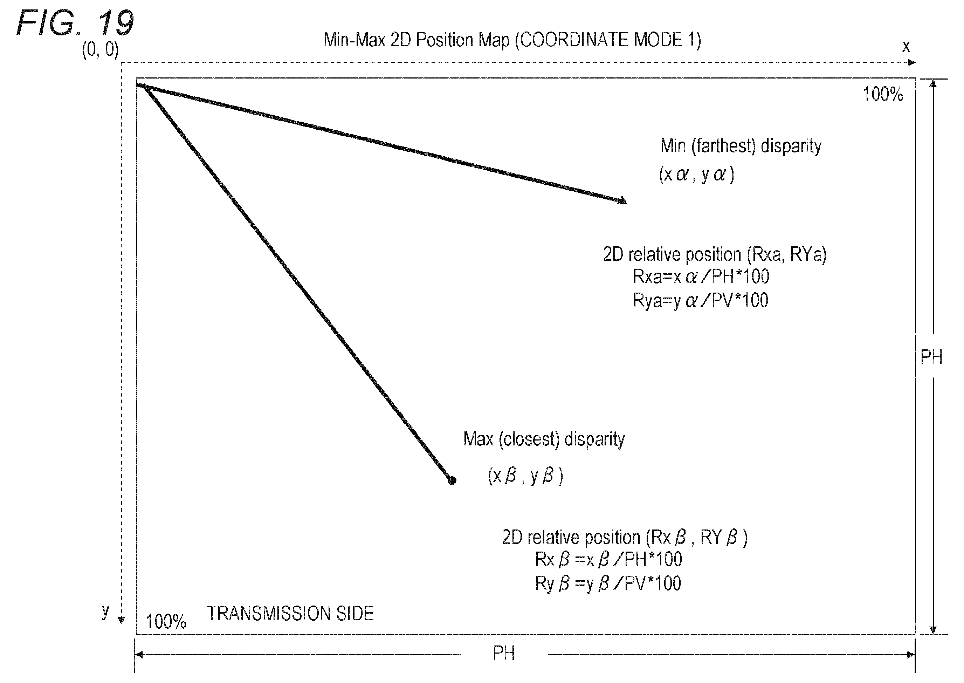

Fig. 18 illustrates an example of two-dimensional positions (2D Direction) of the first pixel position (xβ, yβ) and the second pixel position (xα, yα) in the whole image, in Coordinate Mode 0. In such a case, the coordinates (xβ, yβ) and the coordinates (xα, yα) represent the coordinates of the pixel positions when the image center O is set as the origin (0, 0). In addition, Fig. 19 illustrates an example of two-dimensional positions (2D Direction) of the first pixel position (xβ, yβ) and the second pixel position (xα, yα) in the whole image, in Coordinate Mode 1. In such a case, the coordinates (xβ, yβ) and the coordinates (xα, yα) represent the coordinates of the pixel positions when the top left side (top-left) is set as the origin (0, 0).

The disparity information set for the first pixel position (xβ, yβ) will be described. The position data, as described above, is formed by the horizontal distance data (Rxa) and the vertical distance data (Rya). The disparity information set generating unit 122, in Coordinate Mode 0, as illustrated in Fig. 18, acquires the horizontal distance data (Rxa) as "Rxa = xβ/(PH/2)*100" and acquires the vertical distance data (Rya) as "Rya = yβ/(PV/2)*100". In addition, the disparity information set generating unit 122, in Coordinate Mode 1, as illustrated in Fig. 19, acquires the horizontal distance data (Rxa) as "Rxa = xβ/(PH)* 100" and acquires the vertical distance data (Rya) as "Rya = yβ/(PV)*100".

In addition, the disparity information set generating unit 122 acquires disparity information (disparity vector) at specific display resolution for the first pixel position (xβ, yβ) as the disparity data (Disparity) for the first pixel position (xβ, yβ).

Next, the disparity information set for the second pixel position (xα, yα) will be described. The position data, as described above, is formed by the horizontal distance data (Rxa) and the vertical distance data (Rya). The disparity information set generating unit 122, in Coordinate Mode 0, as illustrated in Fig. 18, acquires the horizontal distance data (Rxa) as "Rxa = xα/(PH/2)* 100" and acquires the vertical distance data (Rya) as "Rya = yα/(PV/2)* 100". In addition, the disparity information set generating unit 122, in Coordinate Mode 1, as illustrated in Fig. 19, acquires the horizontal distance data (Rxa) as "Rxa = xα/(PH)* 100" and acquires the vertical distance data (Rya) as "Rya = yα/(PV)*100".

In addition, the disparity information set generating unit 122 acquires disparity information (disparity vector) at specific display resolution for the second pixel position (xα, yα) as the disparity data (Disparity) for the second pixel position (xα, yα).

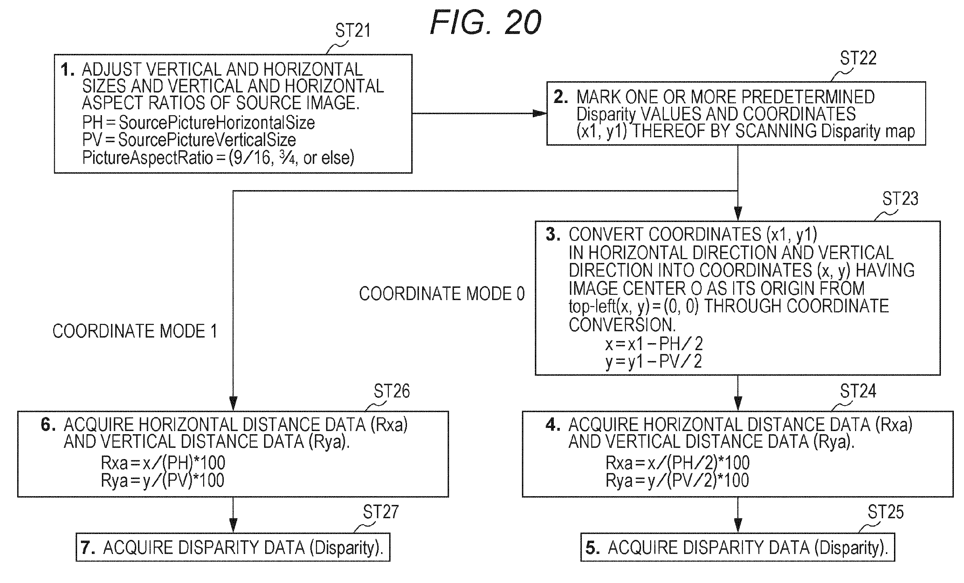

A flowchart of Fig. 20 illustrates the processing sequence of generating a disparity information set in "Case 5" in the disparity information set generating unit 122. The disparity information set generating unit 122, in Step ST21, checks the vertical size (PV = Source Picture Vertical Size), the horizontal size (PH = Source Picture Horizontal Size), and the aspect ratio (Picture Aspect Ratio) of a source image.

Next, the disparity information set generating unit 122, in Step ST22, marks the value of a predetermined disparity information (disparity vector) and the coordinates (x1, y1) thereof by scanning the disparity map. In these coordinates (x1, y1), the top left side (top-left) of the image is set as the origin (0, 0).

Next, the disparity information set generating unit 122 proceeds to the process of Step ST23 when it is in Coordinate Mode 0. In this Step ST23, the disparity information set generating unit 122 converts the coordinates (x1, y1) into coordinates (x, y) that have the image center O as its origin (0, 0). The conversion equations in this case are x = x1 - PH/2 and y = y1 - PV/2.

Next, the disparity information set generating unit 122, in Step ST24, acquires the horizontal distance data (Rxa) and the vertical distance data (Rya) for the pixel position (x, y). In such a case, "Rxa = xα/(PH/2)*100", and "Rya = yα/(PV/2)*100". In addition, the disparity information set generating unit 122, in Step ST25, acquires the disparity data (Disparity). In such a case, the disparity information (disparity vector) at specific display resolution for the coordinates (x, y) is acquired as the disparity data (Disparity).

In addition, when it is in Coordinate Mode 1 after the process of Step ST22, the disparity information set generating unit 122 proceeds to the process of Step ST26. In this case, the coordinates (x1, y1) are directly used as coordinates (x, y). In step ST26, the disparity information set generating unit 122 acquires horizontal distance data (Rxa) and vertical distance data (Rya) for the pixel position (x, y). In this case, "Rxa = xa/(PH)*100", and "Rya = yα/(PV)*100". In addition, the disparity information set generating unit 122, in Step ST27, acquires disparity data (Disparity). In this case, disparity information (disparity vector) at specific display resolution for the coordinates (x, y) is acquired as the disparity data (Disparity).

### [Case 6]

The disparity information set generating unit 122, as described above, generates a disparity information set for a predetermined pixel position corresponding to stereoscopic image data of a predetermined program. In the disparity information set, position data for the predetermined pixel position and disparity data for the predetermined pixel position are included. The predetermined pixel positions are arbitrarily set by a user's setting operation or are automatically set, and the number of the predetermined pixel positions is not limited.

Here, when it is in Coordinate Mode 0, the predetermined pixel position (x, y) is represented by coordinates in which an image center O is set as its origin (0, 0). In addition, when it is in Coordinate Mode 1, the predetermined pixel position (x, y) is represented by coordinates in which the top left side (top-left) of the image is set as its origin (0, 0).

In this "Case 6", the position data is formed by horizontal distance data (Rxa) that represents a horizontal distance from the origin (0, 0) and vertical distance data (Rya) that represents a vertical distance from the origin (0, 0). The horizontal distance data Rxa is represented as a ratio with respect to the size of the image in the horizontal direction. In Coordinate Mode 0, "Rxa = x/(PH/2)*100". In addition, in Coordinate Mode 1, "Rxa = x/(PH)*100". Here, PH represents the size of the image in the horizontal direction. In addition, the vertical distance data Rya is represented as a ratio to the image in the horizontal direction size. In Coordinate Mode 0, "Rya = y/(PV/2)*100". In addition, in Coordinate Mode 1, "Rya = y/(PV)*100". Here, PV illustrates the size of the image in the horizontal direction.

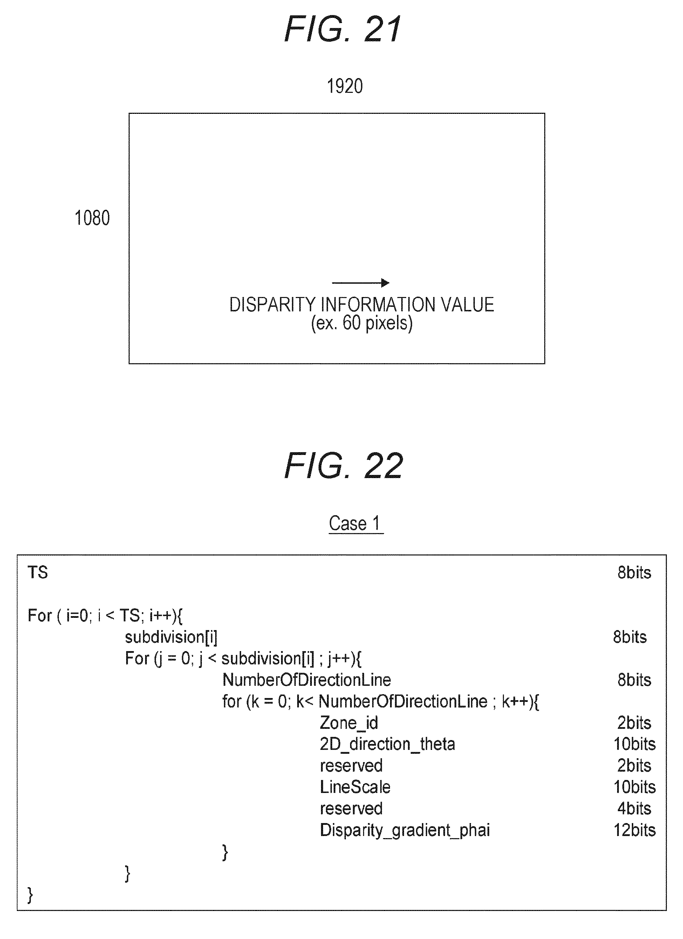

In this "Case 6", disparity data (Relative_Disparity_ratio) for the pixel position (x, y) is configured not to be a value of the disparity information (disparity vector) at a specific display resolution for the pixel position (x, y) but to be data that represents the ratio with respect to the horizontal resolution PH. For example, as illustrated in Fig. 21, in the case of full HD of 1920 x 1080, the disparity data (Relative_Disparity_ratio) is acquired as "Relative_Disparity_ratio = disparity information value/1920*Factor". For example, in a case where the disparity information value is +60 pixels, Relative_Disparity_ratio = 60/1920*Factor.

As above, in this "Case 6", the disparity information set generating unit 122 generates position data (the horizontal distance data and the vertical distance data) that is similar to that of the above-described "Case 5" as the position data for the predetermined pixel position. In addition, in this "Case 6", the disparity information set generating unit 122 generates data (Relative_Disparity_ratio) that represents a ratio of the disparity information value of the pixel position (x, y) to the horizontal display resolution PH as the disparity data for a predetermined pixel position.

Accordingly, the processing sequence of generating a disparity information set in "Case 6" in the disparity information set generating unit 122 is performed similarly to the processing sequence illustrated in the above-described flowchart of Fig. 20 except that the content of disparity data acquired in Step ST25 and Step ST27 is different from that of the flowchart of Fig. 20.

### [Structure of Disparity Information Set]

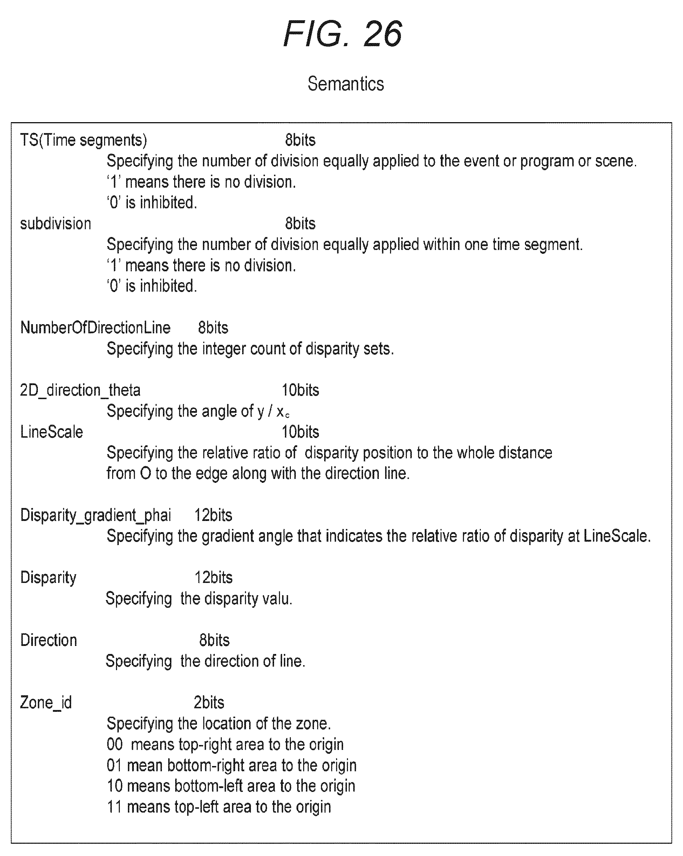

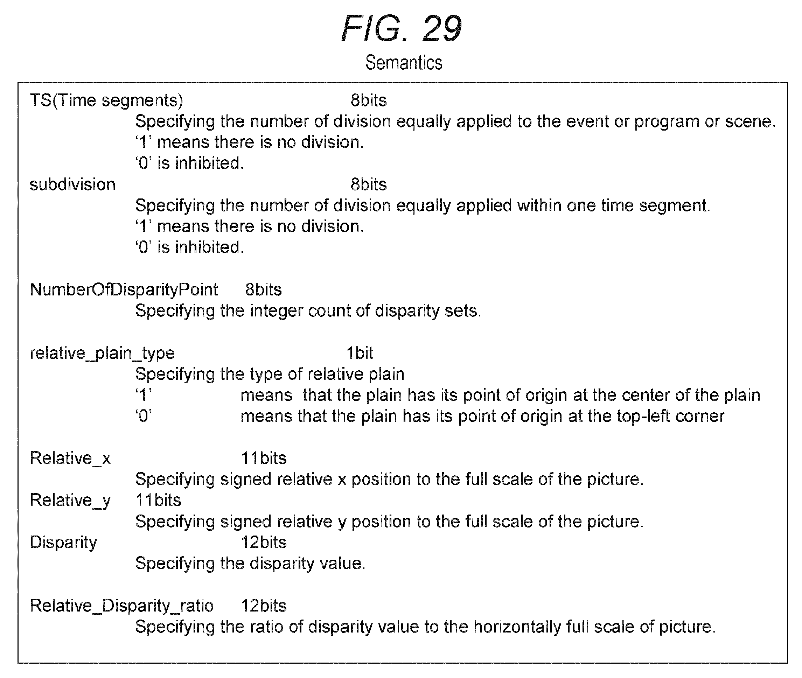

Next, examples of the content of the disparity information set that is generated by the disparity information set generating unit 122 will be described. Figs. 22 to 25, 27, and 28 illustrate examples of the content of the disparity information set. Figs. 26 and 29 illustrate major data specifying contents (semantics) in the examples of the content.

Fig. 22 illustrates an example of the content of the disparity information set that is generated in the above-described "Case 1". "TS (Time segment)" is 8-bit data that represents the number of equally-divided periods of an event, a program, a scene, or the like. "TS=1" represents that the period is not divided. "subdivision" is 8-bit data that represents the number of equally-divided periods of each time segment. "subdivision = 1" represents that the time segment is not divided.

"Number Of Direction Line" represents the total number of disparity information sets. For example, in a case where there are two disparity information sets including the first pixel position at which the value of the disparity information is the maximum (Max) and the pixel position (second pixel position) at which the value of the disparity information is the minimum (Min), it is assumed that "Number Of Direction Line = 1". The "Zone_id" is a 2-bit zone identifier that configures the direction data of the pixel position (x, y). As described above, "Zone_id = 00" represents the first quadrature, "Zone_id =01" represents the second quadrature, "Zone_id = 10" represents the third quadrature, and "Zone_id =11" represents the fourth quadrature.

"2D_direction_theta" is 10-bit data that represents tangent data (tan θ = y/x) configuring the direction data for the pixel position (x, y). "Line Scale" is 10-bit data that represents a relative distance (Line Scale = L/LineFull) from the origin (0, 0) to the pixel position (x, y). "Disparity_gradient_phai" is 12-bit data that represents a ratio (tan φ = D/L) of the value of the disparity information (disparity vector) for the pixel position (x, y) to the distance from the origin (0, 0) to the pixel position (x, y).

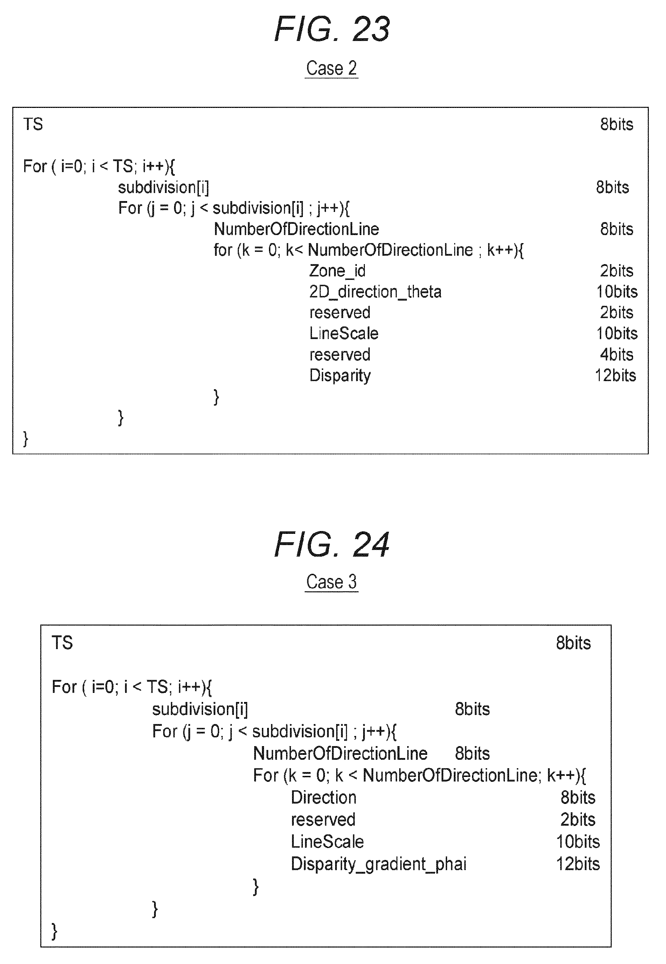

Fig. 23 illustrates an example of the content of a disparity information set that is generated in the above-described "Case 2". The example of the content of the disparity information set of Fig. 23 is similar to the example of the content of the disparity information set of Fig. 22 described above except that "Disparity_gradient_phai" is replaced by "Disparity".
"Disparity" is 12-bit data that represents the value of the disparity information (disparity vector).

Fig. 24 illustrates an example of the content of a disparity information set that is generated in the above-described "Case 3". The example of the content of the disparity information set of Fig. 24 is similar to the example of the content of the disparity information set of Fig. 22 described above except that "Zone_idD" and "2D_direction_theta" are replaced by "Direction". "Direction" is 8-bit data that represents the direction from the origin (0, 0) to the pixel position (x, y).

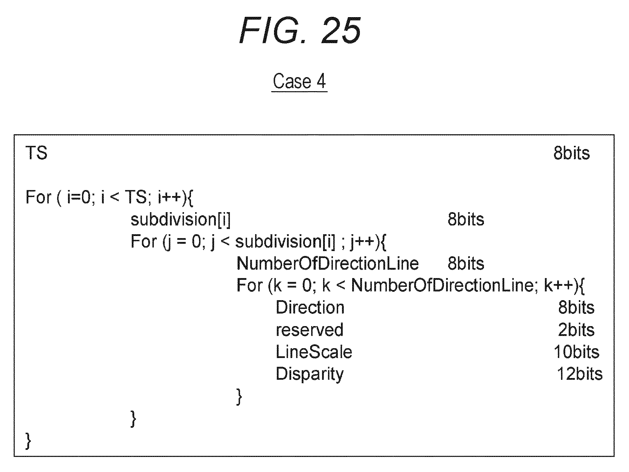

Fig. 25 illustrates an example of the content of a disparity information set that is generated in the above-described "Case 4". The example of the content of the disparity information set of Fig. 25 is similar to the example of the content of the disparity information set of Fig. 24 described above except that "Disparity_gradient_phai" is replaced by "Disparity".
"Disparity" is 12-bit data that represents the value of the disparity information (disparity vector) for a pixel position (x, y).

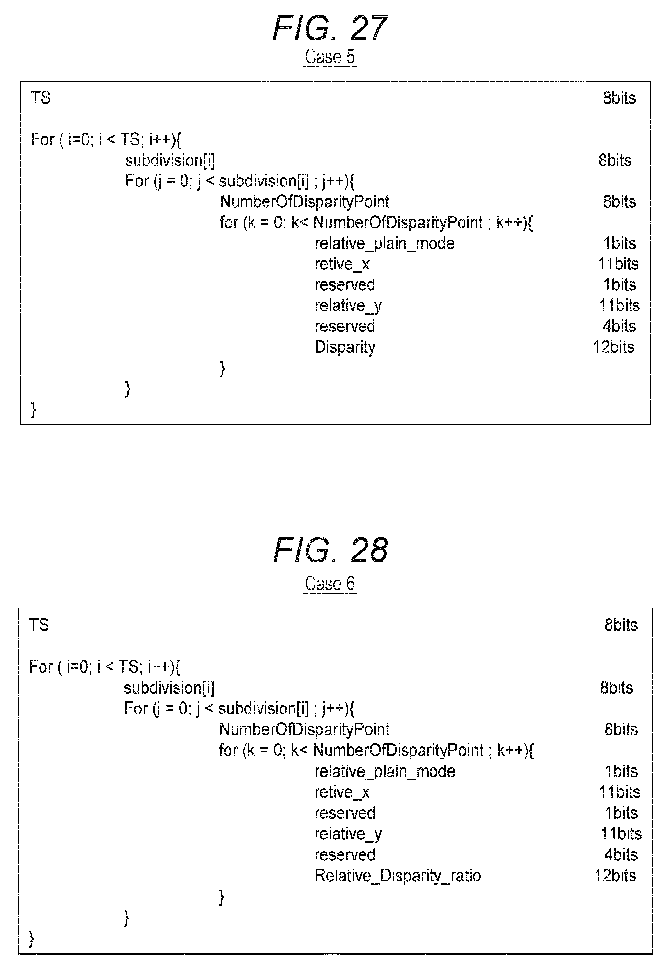

Fig. 27 illustrates an example of the content of the disparity information set that is generated in the above-described "Case 5". "TS (Time segment)" is 8-bit data that represents the number of equally-divided parts of an event, a program, a scene, or the like. "TS=1" represents that the period is not divided. "subdivision" is 8-bit data that represents the number of equally-divided parts of each time segment. "subdivision = 1" represents that the time segment is not divided.

"Number Of Disparity Point" represents the total number of disparity information sets. For example, in a case where there are two disparity information sets including the first pixel position at which the value of the disparity information is the maximum (Max) and the pixel position (second pixel position) at which the value of the disparity information is the minimum (Min), it is assumed that "Number Of Disparity Point = 1". "relative_plain_mode" is 1-bit data that represents the type of a relative plain. "relative_plain_mode =1" represents a plain of coordinates of Coordinate Mode 0 that have the image center O as its origin (0, 0). "relative_plain_mode = 0" represents a plain of coordinates of Coordinate Mode 1 that have the top left side (top-left) of the image as its origin (0, 0).

"Relative_x" is 11-bit data that represents a horizontal distance (Rxa) from the origin (0, 0) to a pixel position (x, y). This horizontal distance (Rxa) is represented as a ratio with respect to the size of the image in the horizontal direction. "Relative_y" is 11-bit data that represents a vertical distance (Rya) from the origin (0, 0) to a pixel position (x, y). This vertical distance (Rya) is represented as a ratio with respect to the size of the image in the vertical direction. "Disparity" is 12-bit data that represents the value of the disparity information (disparity vector) for the pixel position (x, y).

Fig. 28 illustrates an example of the content of a disparity information set that is generated in the above-described "Case 6". The example of the content of the disparity information set of Fig. 28 is similar to the example of the content of the disparity information set of Fig. 27 described above except that "Disparity" is replaced by "Relative_Disparity_ratio". "Relative_Disparity_ratio" is 12-bit data that represents the ratio of the value of the disparity information (disparity vector) for a pixel position (x, y) to the horizontal resolution PH.

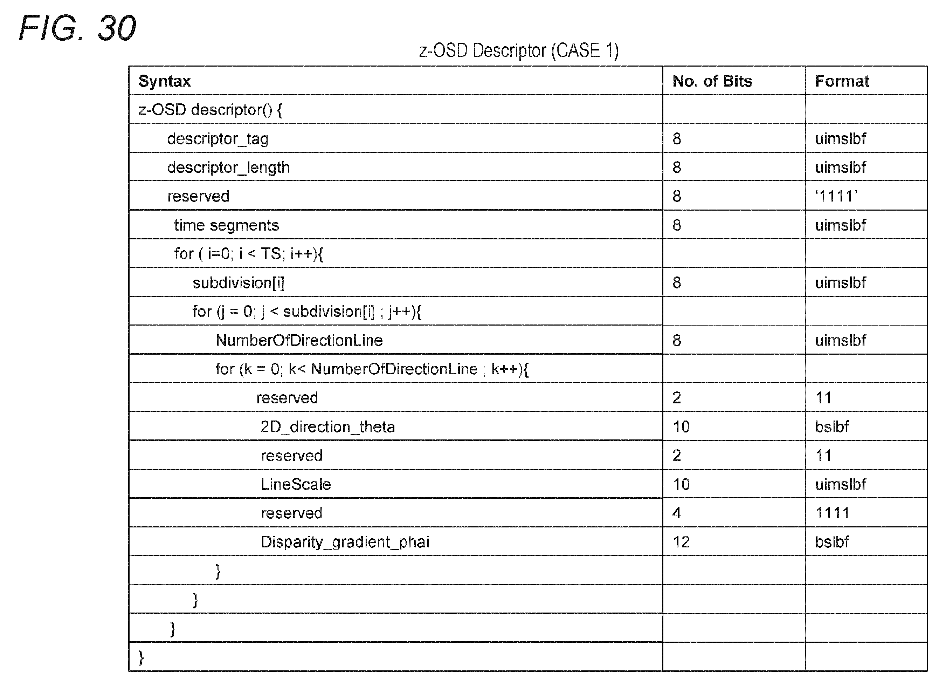

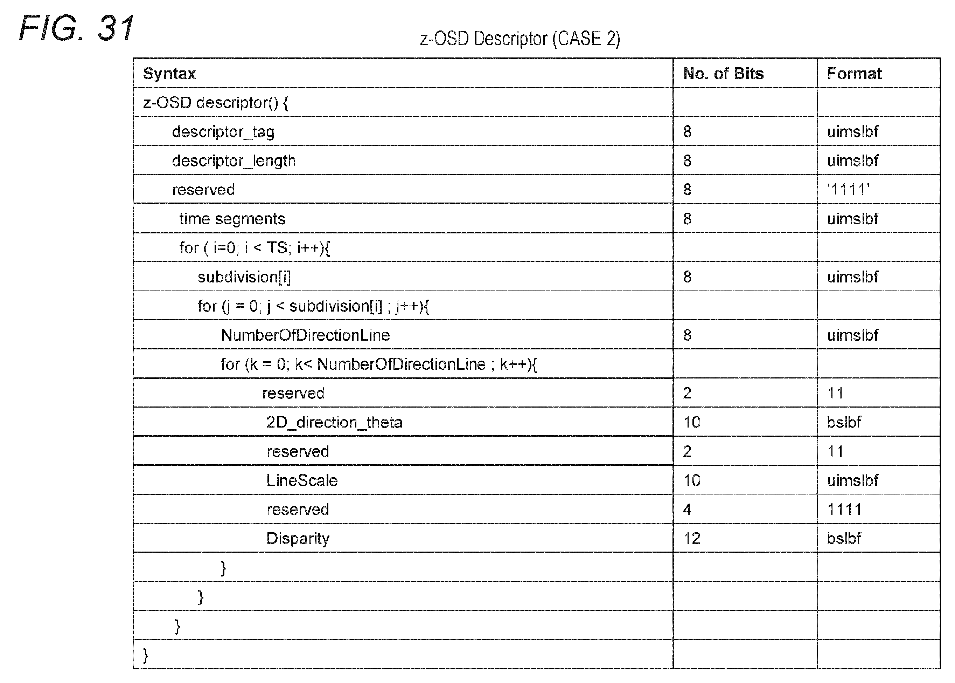

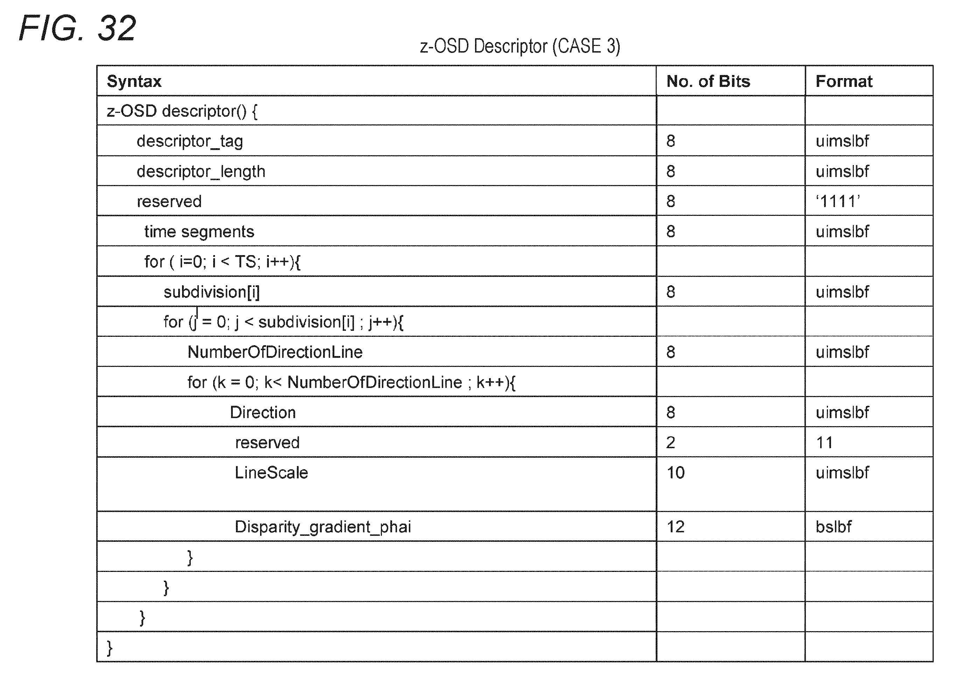

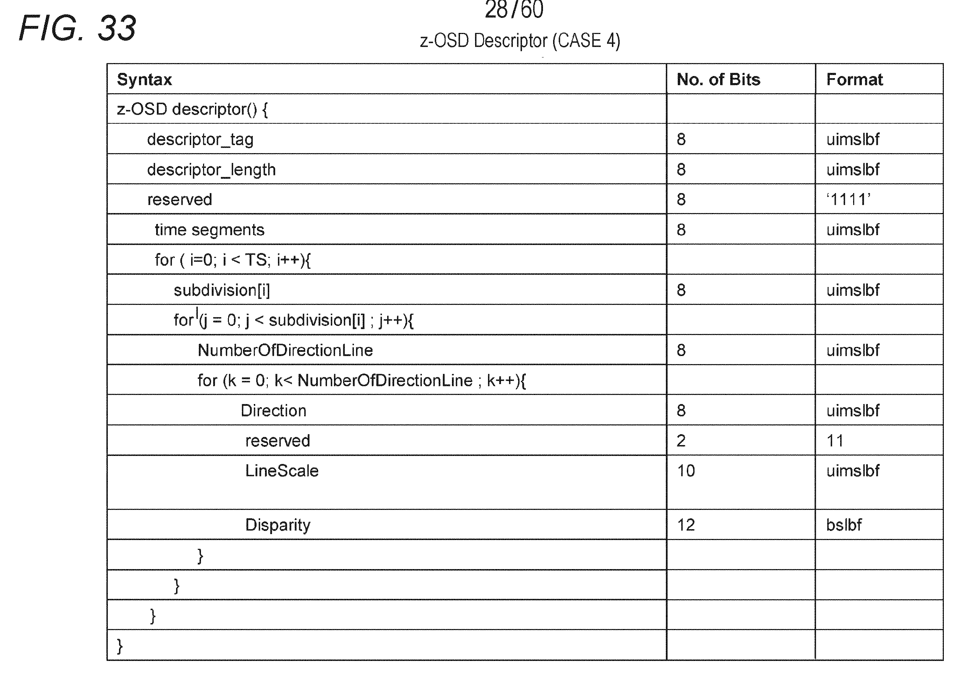

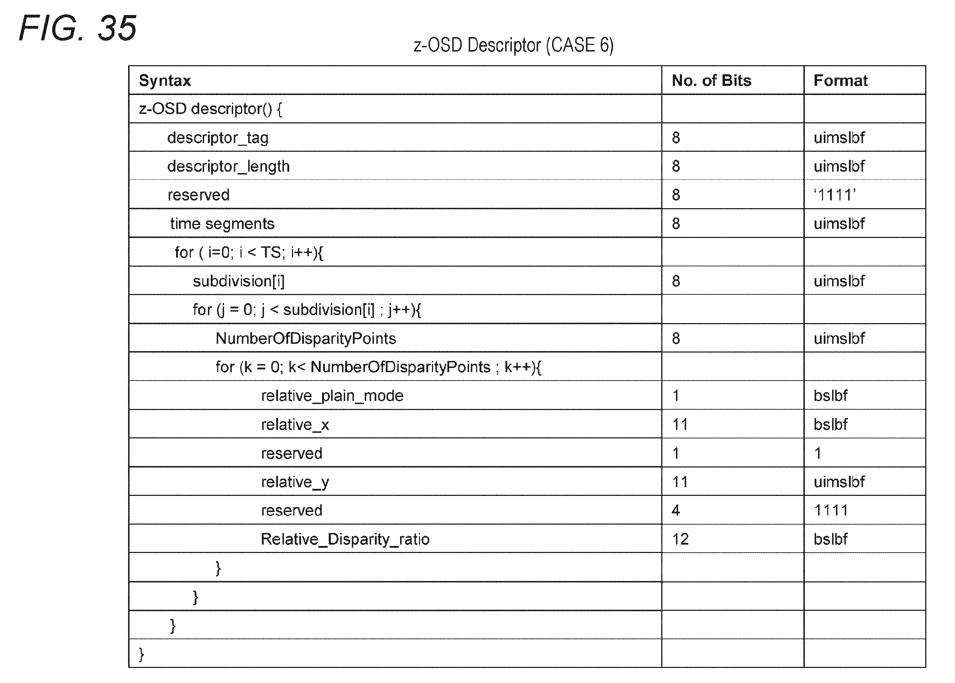

Figs. 30 to 35 illustrate examples of the descriptor (z-OSD Descriptor) including a disparity information set that is generated by the disparity information set generating unit 122 in "Case 1" to "Case 6" described above. "descriptor_tag" is 8-bit data that represents the type of a descriptor. Here, the descriptor is represented as a descriptor (z-OSD Descriptor) including a disparity information set. "descriptor_length" is 8-bit data that represents the length (size) of the information. As the information of this descriptor, the above-described disparity information set is inserted. Figs. 30 to 35 illustrate the descriptors (z-OSD Descriptors) that include disparity information sets generated in "Case 1" to "Case 6" described above.

In the transmission data generating unit 110 of Fig. 2, in the bit stream data BSD output from the multiplexer 126, together with stereoscopic image data of a predetermined program that includes left-eye image data and right-eye image data, a disparity information set for a predetermined pixel position that corresponds to the stereoscopic image data of the predetermined program is included. Accordingly, on the reception side, by using the disparity information set, the overlapping information overlapping the left-eye image and the right-eye image, for example, graphics information such as an OSD for which disparity adjustment has been performed in accordance with the perspective of each object within an image can be used. Therefore, in displaying graphics information such as an OSD, the consistency in the perspective of each object within the image can be maintained.

In addition, in the transmission data generating unit 110 of Fig. 2, the disparity information set included in the bit stream data BSD that is output from the multiplexer 122 is configured to include the position data that represents a relative position of a predetermined pixel position with respect to the whole image and the disparity data for the predetermined pixel position. Accordingly, the disparity information set is independent from the resolution of the stereoscopic image and is also independent from the display resolution of the monitor and the monitor size. Therefore, on the reception side, disparity adjustment can be easily performed by using the disparity information set regardless of the display resolution of the monitor or the monitor size.

### [Description of Set-Top Box]

Referring back to Fig. 1, the set-top box 200 receives a bit stream data (transport stream) BSD that is transmitted from the broadcasting station 100 while being carried in broadcast waves. In the bit stream data BSD, stereoscopic image data that includes left-eye image data and right-eye image data, audio data, and a disparity information set are included.

The set-top box 200 includes a bit stream processing unit 201. This bit stream processing unit 201 extracts stereoscopic image data, audio data, a disparity information set, and the like from the bit stream data. This bit stream processing unit 201, appropriately, generates data of the left-eye image and the right-eye image that graphics information such as an OSD overlaps. In such a case, there is disparity between the left-eye graphics information overlapping the left-eye image and the right-eye graphics information overlapping the right-eye image based on the disparity information set. By providing disparity between the left-eye graphics information and the right-eye graphics information right-eye subtitle as above, a user can recognize the graphics information overlapping the stereoscopic image, for example, in front of the image.

### [Example of Configuration of Set-Top Box]

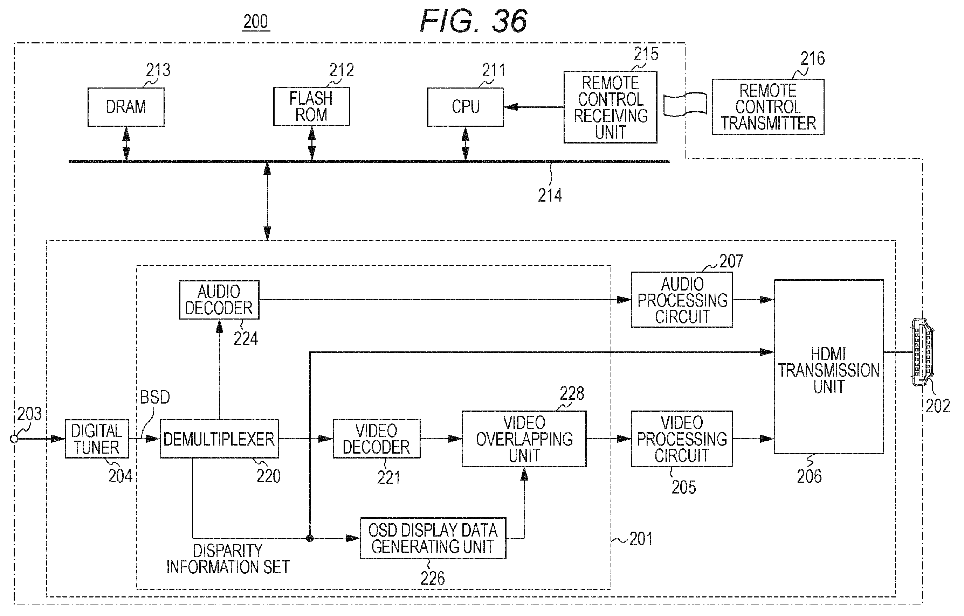

An example of the configuration of the set-top box 200 will be described. Fig. 36 illustrates an example of the configuration of the set-top box 200. This set-top box 200 includes a bit stream processing unit 201, an HDMI terminal 202, an antenna terminal 203, a digital tuner 204, a video processing circuit 205, an HDMI transmission unit 206, and an audio processing circuit 207. In addition, the set-top box 200 includes a CPU 211, a flash ROM 212, a DRAM 213, an internal bus 214, a remote control receiving unit 215, and a remote control transmitter 216.

The antenna terminal 203 is a terminal to which a television broadcast signal received by a reception antenna (not illustrated in the figure) is input. The digital tuner 204 processes a television broadcast signal input to the antenna terminal 203 and outputs predetermined bit stream data (transport stream) BSD corresponding to a channel selected by a user.

The bit stream processing unit 201, as described above, extracts the stereoscopic image data, the audio data, and the like from the bit stream data BSD and outputs the extracted data. This bit stream processing unit 201 appropriately composes display data of graphics information such as an OSD with the stereoscopic image data. At that time, the bit stream processing unit 201 provides disparity between left-eye graphics information overlapping the left-eye image and right-eye graphics information overlapping the right-eye image based on the disparity information set.

The video processing circuit 205 performs an image-quality adjusting process and the like for the stereoscopic image data that is output from the bit stream processing unit 201 if necessary and supplies the stereoscopic image data after the processing to the HDMI transmission unit 206. The audio processing circuit 207 performs a sound-quality adjusting process and the like for the audio data that is output from the bit stream processing unit 201 if necessary and supplies the audio data after the process to the HDMI transmission unit 206.

The HDMI transmission unit 206 transmits, for example, image data and audio data that are not compressed from the HDMI terminal 202 through communication that is in compliance with HDMI. In this case, since data is transmitted through a TMDS channel of the HDMI, the image data and the audio data are packed and are output from the HDMI transmission unit 206 to the HDMI terminal 202.

The CPU 211 controls the operation of each unit of the set-top box 200. The flash ROM 212 stores control software and data. The DRAM 213 configures a work area of the CPU 211. The CPU 211 expands software or data read out from the flash ROM 212 on the DRAM 213 and starts up the software, thereby controlling each unit of the set-top box 200.

The remote control receiving unit 215 receives a remote control signal (remote control code) that is transmitted from the remote control transmitter 216 and supplies the received remote control signal to the CPU 211. The CPU 211 controls each unit of the set-top box 200 based on the remote control code. The CPU 211, the flash ROM 212, and the DRAM 213 are connected to the internal bus 214.

The bit stream processing unit 201 will be described. This bit stream processing unit 201 includes a demultiplexer 220, a video decoder 221, an audio decoder 224, an OSD display data generating unit 226, and a video overlapping unit 228. The demultiplexer 220 extracts packets of a video and an audio from the bit stream data BSD and transmits the extracted packets to each decoder. In addition, the demultiplexer 220 extracts a disparity information set from the bit stream date BSD and transmits the extracted disparity information set to the OSD display data generating unit 226 and the above-described HDMI transmission unit 206.

The video decoder 221 reconfigures a video elementary stream based on the packet of the video that is extracted from the demultiplexer 220 and performs a decoding process, thereby acquiring stereoscopic image data that includes left-eye image data and right-eye image data. The audio decoder 224 reconfigures an audio elementary stream based on the packet of the audio that is extracted from the demultiplexer 220 and performs a decoding process so as to acquire audio data and outputs the acquired audio data to the outside of the bit stream processing unit 201.

The OSD display data generating unit 226 generates data of left-eye graphics information corresponding to the left-eye image data included in the stereoscopic image data and data of right-eye graphics information corresponding to the right-eye image data included in the stereoscopic image data. In such a case, the OSD display data generating unit 226 brings disparity to occur between the left-eye graphics information and the right-eye graphics information based on the disparity information set that is extracted by the demultiplexer 220.

Here, based on the position data and the disparity data included in the disparity information set, the OSD display data generating unit 226 acquires a position within the image region that corresponds to the disparity information set and reproduces a disparity information value for the position through a reverse process of the process performed on the transmission side.

The video overlapping unit 228 overlaps data of the left-eye and left-eye graphics information that are generated by the OSD display data generating unit 226 and the stereoscopic image data (the left-eye image data and the right-eye image data) acquired by the video decoder 221 each other, thereby acquiring stereoscopic image data for a display. Then, this video overlapping unit 228 outputs the stereoscopic image data for a display to the outside of the bit stream processing unit 201D.

The operation of the set-top box 200 will be briefly described. A television broadcast signal input to the antenna terminal 203 is supplied to the digital tuner 204. This digital tuner 204 processes the television broadcast signal and outputs a predetermined bit stream data (transport stream) BSD corresponding to a channel selected by a user.

The bit stream data BSD output from the digital tuner 204 is supplied to the bit stream processing unit 201. In this bit stream processing unit 201, stereoscopic image data, audio data, a disparity information set, and the like are extracted from the bit stream data BSD. In the bit stream processing unit 201, when appropriate, display data of graphics information such as an OSD is composed with the stereoscopic image data.

At that time, in the bit stream processing unit 201, disparity is brought to occur between the left-eye graphics information overlapping the left-eye image and the right-eye graphics information overlapping the right-eye image based on the disparity information set. Accordingly, the consistency in the perspective of the graphics information that is displayed on a stereoscopic image in an overlapping manner with the perspective of each object within the image can be maintained in an optimal state.

The stereoscopic image data for a display, which is acquired by the bit stream processing unit 201, is supplied to the video processing circuit 205. In this video processing circuit 205, an image quality adjusting process and the like are performed for the stereoscopic image data for a display if necessary. The stereoscopic image data for a display after the process, which is output from the video processing circuit 205, is supplied to the HDMI transmission unit 206.

In addition, audio data acquired by the bit stream processing unit 201 is supplied to the audio processing circuit 207. In this audio processing circuit 207, a sound-quality adjusting process and the like are performed for the audio data if necessary. The audio data after the process, which is output from the audio processing circuit 207, is supplied to the HDMI transmission unit 206. Then, the stereoscopic image data and the audio data that are supplied to the HDMI transmission unit 206 are transmitted from the HDMI terminal 202 to the HDMI cable 400 through a TMDS channel of the HDMI.

### [Description of Television Receiver]

Referring back to Fig. 1, the television receiver 300 receives stereoscopic image data transmitted from the set-top box 200 through the HDMI cable 400. This television receiver 300 includes a 3D signal processing unit 301. This 3D signal processing unit 301 performs a process (decoding process) corresponding to the transmission type for the stereoscopic image data, thereby generating left-eye image data and right-eye image data. The 3D signal processing unit 301 acquires left-eye image data and right-eye image data that configure the stereoscopic image data.

### [Example of Configuration of Television Receiver]

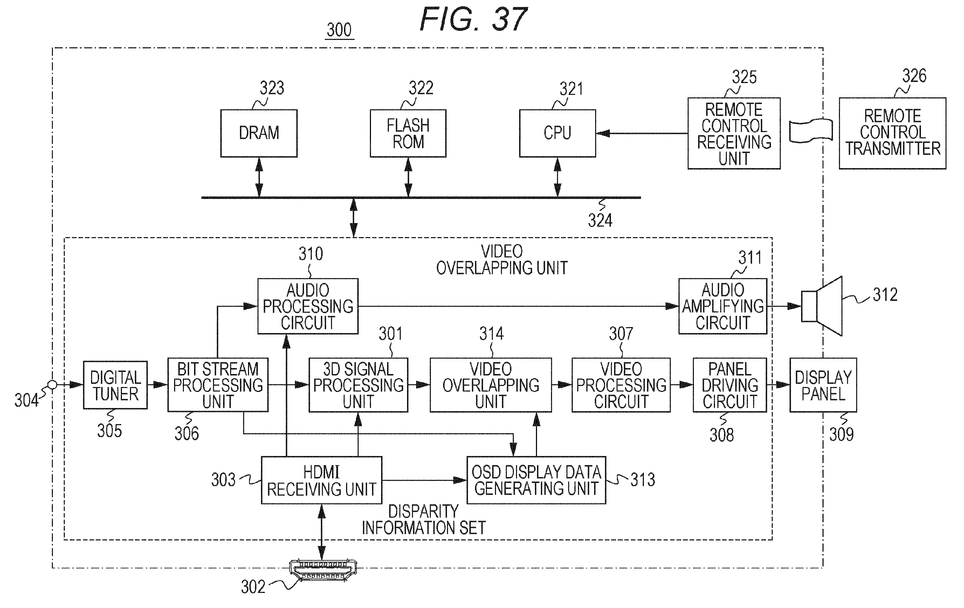

An example of the configuration of the television receiver 300 will be described. Fig. 37 illustrates an example of the configuration of the television receiver 300. This television receiver 300 includes: a 3D signal processing unit 301; an HDMI terminal 302; an HDMI receiving unit 303; an antenna terminal 304; a digital tuner 305; and a bit stream processing unit 306.

In addition, this television receiver 300 includes: an OSD display data generating unit 313; a video overlapping unit 314; a video processing circuit 307; a panel driving circuit 308; a display panel 309; an audio processing circuit 310; an audio amplifying circuit 311; and a speaker 312. Furthermore, the television receiver 300 includes: a CPU 321, a flash ROM 322, a DRAM 323; an internal bus 324; a remote control receiving unit 325; and a remote control transmitter 326.

The antenna terminal 304 is a terminal to which a television broadcast signal received by a reception antenna (not illustrated in the figure) is input. The digital tuner 305 processes a television broadcast signal input to the antenna terminal 304 and outputs predetermined bit stream data (transport stream) corresponding to a channel selected by a user.

The bit stream processing unit 306 has a configuration that is similar to that of the bit stream processing unit 201 of the set-top box 200 of Fig. 36. This bit stream processing unit 306 extracts stereoscopic image data (left-eye image data and right-eye image data), audio data, a disparity information set, and the like from the bit stream data.

The HDMI receiving unit 303 receives image data and audio data, which are not compressed, supplied to the HDMI terminal 302 through the HDMI cable 400 through communication that is in compliance with the HDMI. For example, the version of the HDMI receiving unit 303 is HDMI 1.4 and is in the state in which stereoscopic image data can be handled. The HDMI receiving unit 303 will be described later in detail.

This 3D signal processing unit 301 performs a decoding process for the stereoscopic image data that is received by the HDMI receiving unit 303 or is acquired by the bit stream processing unit 306, thereby generating left-eye image data and right-eye image data. In this case, the 3D signal processing unit 301 performs a decoding process corresponding to the transmission system format for the stereoscopic image data acquired by the bit stream processing unit 306. In addition, the 3D signal processing unit 301 performs a decoding process corresponding to a TMDS transmission data structure to be described later for the stereoscopic image data received by the HDMI receiving unit 303.

The OSD display data generating unit 313 generates data of left-eye graphics information corresponding to the left-eye image data included in the stereoscopic image data and data of right-eye graphics information corresponding to the right-eye image data included in the stereoscopic image data. The graphics information is overlapping information used for an OSD display of a menu, a program table, or the like. In such a case, the OSD display data generating unit 313 brings disparity to occur between the left-eye graphics information and the right-eye graphics information based on the disparity information set that is acquired by the bit stream processing unit 306 or is received by the HDMI receiving unit 303.

Here, based on the position data and the disparity data included in the disparity information set, the OSD display data generating unit 313 acquires a position within the image region that corresponds to the disparity information set and acquires a value of the disparity information for the position through a reverse process of the process performed on the transmission side.

The video overlapping unit 314 overlaps data of the left-eye and left-eye graphics information that are generated by the OSD display data generating unit 313 and the stereoscopic image data (the left-eye image data and the right-eye image data) acquired by the 3D signal processing unit 301 each other, thereby acquiring stereoscopic image data for a display.

The video processing circuit 307 generates image data used for displaying a stereoscopic image based on the left-eye image data and the right-eye image data that are generated by the 3D signal processing unit 301. In addition, the video processing circuit 307 performs an image-quality adjusting process and the like for the image data if necessary. The panel driving circuit 308 drives the display panel 309 based on the image data that is output from the video processing circuit 307. The display panel 309, for example, is configured by a liquid crystal display (LCD), a plasma display panel (PDP), or the like.

The audio processing circuit 310 performs a necessary process such as D/A conversion for the audio data that is received by the HDMI receiving unit 303 or is acquired by the bit stream processing unit 306. The audio amplifying circuit 311 amplifies an audio signal that is output from the audio processing circuit 310 and supplies the amplified audio signal to the speaker 312.

The CPU 321 controls the operation of each unit of the television receiver 300. The flash ROM 322 stores control software and data. The DRAM 323 configures a work area of the CPU 321. The CPU 321 expands software or data read out from the flash ROM 322 on the DRAM 323 and starts up the software, thereby controlling each unit of the television receiver 300.

The remote control receiving unit 325 receives a remote control signal (remote control code) that is transmitted from the remote control transmitter 326 and supplies the received remote control signal to the CPU 321. The CPU 321 controls each unit of the television receiver 300 based on the remote control code. The CPU 321, the flash ROM 322, and the DRAM 323 are connected to the internal bus 324.

The operation of the television receiver 300 illustrated in Fig. 37 will be briefly described. The HDMI receiving unit 303 receives stereoscopic image data and audio data that are transmitted from the set-top box 200 connected to the HDMI terminal 302 through the HDMI cable 400. The stereoscopic image data received by the HDMI receiving unit 303 is supplied to the 3D signal processing unit 301. In addition, the audio data received by the HDMI receiving unit 303 is supplied to the audio processing circuit 310.

A television broadcast signal that is input to the antenna terminal 304 is supplied to the digital tuner 305. In this digital tuner 305, a television broadcast signal is processed, and predetermined bit stream data (transport stream) corresponding to a channel selected by a user is output.

The bit stream data output from the digital tuner 305 is supplied to the bit stream processing unit 306. In this bit stream processing unit 306, stereoscopic image data (left-eye image data and right-eye image data), audio data, a disparity information set, and the like are extracted from the bit stream data. The stereoscopic image data acquired by the bit stream processing unit 306 is supplied to the 3D signal processing unit 301. In addition, the audio data acquired by the bit stream processing unit 306 is supplied to the audio processing circuit 310.

The 3D signal processing unit 301 performs a decoding process for the stereoscopic image data that is received by the HDMI receiving unit 303 or is acquired by the bit stream processing unit 306, thereby generating left-eye image data and right-eye image data. The left-eye image data and the right-eye image data are supplied to the video overlapping unit 314.

The OSD display data generating unit 313 generates data of left-eye graphics information corresponding to the left-eye image data included in the stereoscopic image data and data of right-eye graphics information corresponding to the right-eye image data included in the stereoscopic image data. In this case, the OSD display data generating unit 313 brings disparity to occur between the left-eye graphics information and the right-eye graphics information based on the disparity information set that is acquired by the bit stream processing unit 306 or is received by the HDMI receiving unit 303.

The video overlapping unit 314 overlaps data of the left-eye and left-eye graphics information that are generated by the OSD display data generating unit 313 and the stereoscopic image data (the left-eye image data and the right-eye image data) acquired by the 3D signal processing unit 301 each other, thereby acquiring stereoscopic image data for a display. This stereoscopic image data for a display is supplied to the video processing circuit 307. In the video processing circuit 307, image data used for displaying a stereoscopic image is generated based on the left-eye image data and the right-eye image data, and an image-quality adjusting process is performed as necessary.

The image data acquired by the video processing circuit 307 is supplied to the panel driving circuit 308. Accordingly, a stereoscopic image is displayed by the display panel 309. For example, on the display panel 309, the left-eye image according to the left-eye image data and a right-eye image according to the right-eye image data are alternately displayed in a time divisional manner. By user wearing shutter glasses of which a left-eye shutter and a right-eye shutter are alternately open in synchronization with the display of the display panel 309, only the left-eye image can be viewed in the left eye, and only the right-eye image can be viewed in the right eye, whereby a stereoscopic image can be recognized.

In addition, in the audio processing circuit 310, a necessary process such as D/A conversion is performed for audio data that is received by the HDMI receiving unit 303 or is acquired by the bit stream processing unit 306. After this audio data is amplified by the audio amplifying circuit 311, the amplified audio data is supplied to the speaker 312. Accordingly, audio corresponding to the display image displayed on the display panel 309 is output from the speaker 312.

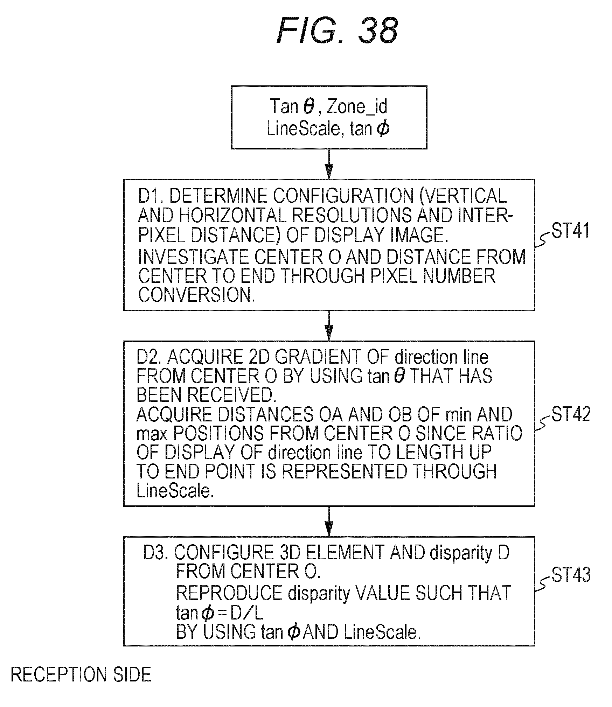

Here, the processing of a disparity information set, which is performed by the OSD display data generating unit 313 (including the OSD display data generating unit 226 of the set-top box 200), will be described. For example, a case will be described in which a disparity information set is generated in "Case 1" described above. In such a case, as illustrated in Fig. 38, in the disparity information set, tangent data (tanθ) that configures the direction data and a zone identifier (Zone_id) are included. In addition, in the disparity information set, distance data (Line Scale) and disparity data (Disparity Gradient: tanφ) are included.

The OSD display data generating unit 313, in Step ST41, determines the configuration (the vertical and horizontal resolution and an inter-pixel distance) of a display image and checks an image center O and calculates a distance from the image center O to the end through the conversion into the number of pixels.

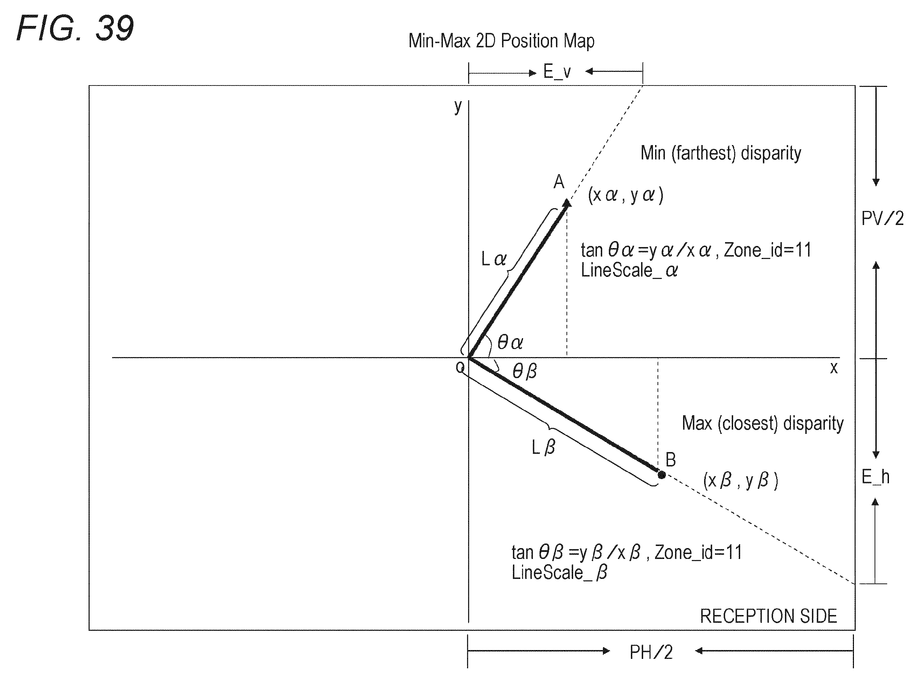

Next, the OSD display data generating unit 313, in Step ST42, checks a quadrature in which the position is located based on the zone identifier (Zone-id) and, as illustrated in Fig. 39, acquires the slope of a straight line "direction line" extending from the image center O based on the tangent data (tanθ). In addition, the OSD display data generating unit 313 acquires distances Lα (OA) and Lβ (OB) as illustrated in Fig. 39 based on the distance data (Line Scale) and the length of the straight line "direction line" up to the end point of the display. Accordingly, the OSD display data generating unit 313 recognizes a position (xβ, yβ) at which the disparity information value is the maximum and a position (xα, yα) at which the disparity information value is the minimum.

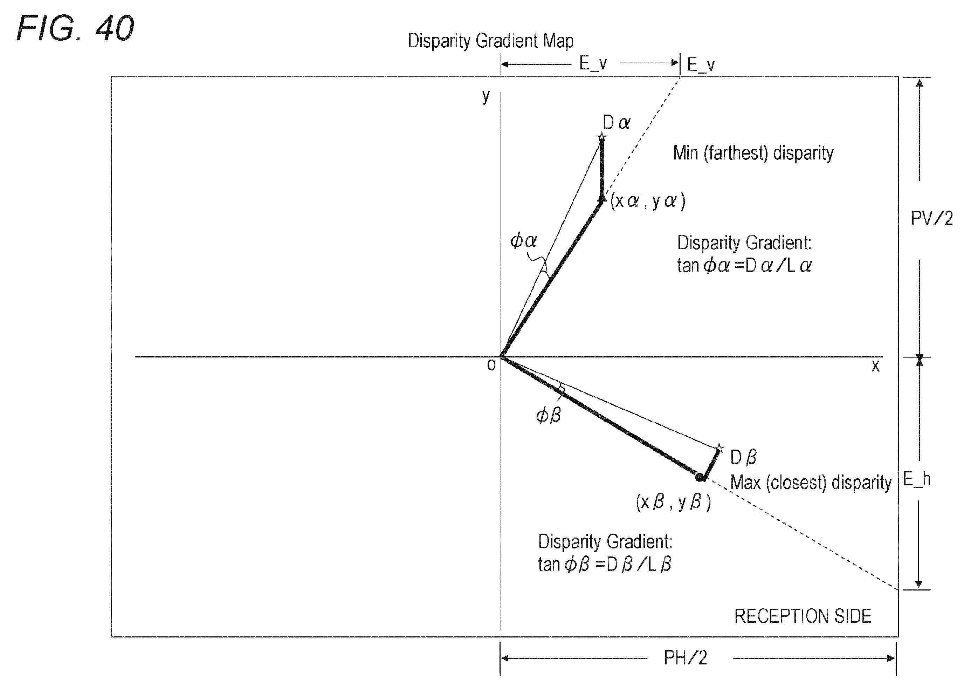

Next, the OSD display data generating unit 313, in Step ST43, as illustrated in Fig. 40, reproduces disparity information values Dα and Dβ by using the disparity data (tanφα, tanφβ) and the distances Lα (OA) and Lβ (OB).

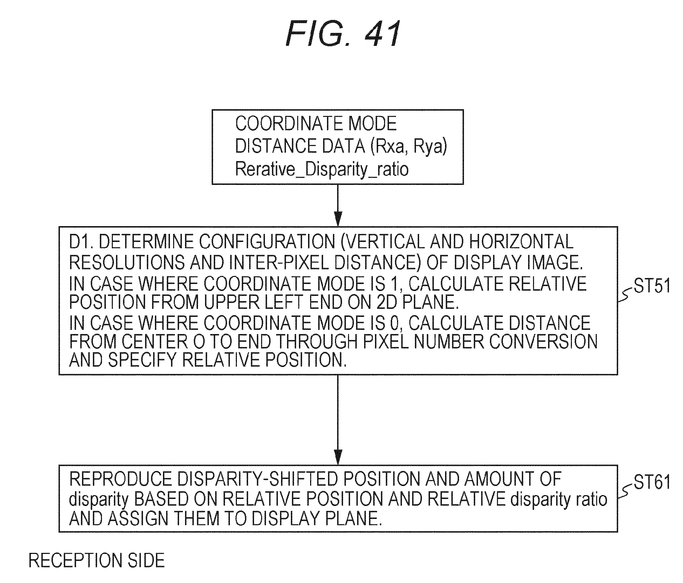

In addition, for example, a case will be described in which a disparity information set is generated in "Case 6" described above. In such a case, as illustrated in Fig. 41, in the disparity information set, coordinate mode data, horizontal distance data Rxa, vertical distance data Rya, and disparity data (Relative_Disparity_ratio) are included.

The OSD display data generating unit 313, in Step ST51, determines the configuration (vertical and horizontal resolution and an inter-pixel distance) of a display image. Then, in a case where the coordinate mode is Coordinate Mode 1, the OSD display data generating unit 313 calculates a relative position from the upper left end on a two-dimensional plane (see Fig. 19). On the other hand, in a case where the coordinate mode is Coordinate Mode 0, the OSD display data generating unit 313 calculates a distance from the image center O to the end through the conversion into the number of pixels so as to specify the device position (See Fig. 18).

Next, the OSD display data generating unit 313, in Step ST52, acquires a disparity-shifted position and reproduces the amount of disparity so as to be assigned to a display plane, based on the distance data Rxa and Rya and the disparity data (Relative_Disparity_ratio).

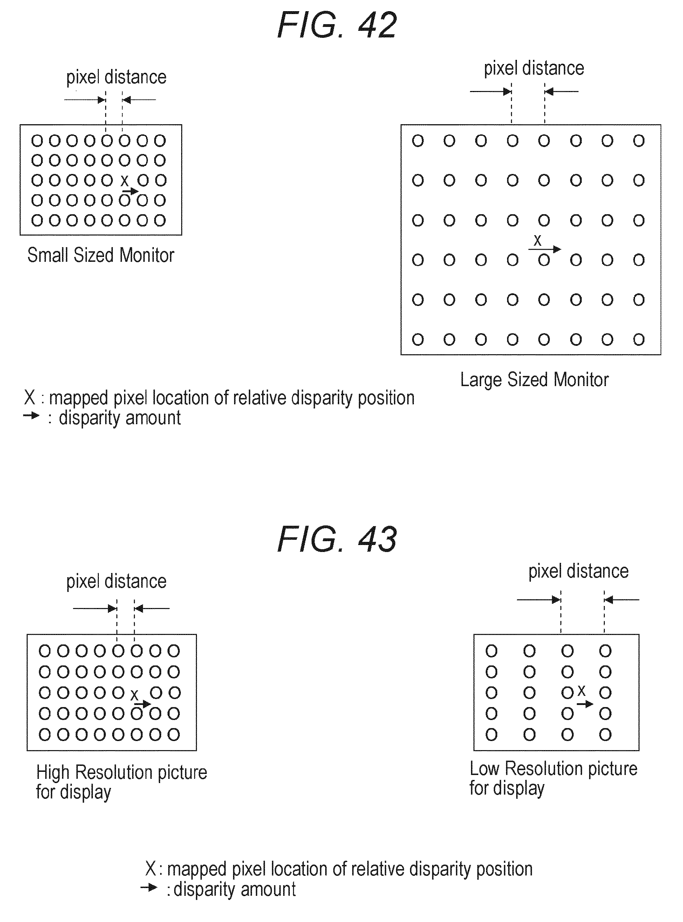

Here, the relation between the disparity information and the position based on a difference in the monitor size will be described. For example, as illustrated in Fig. 42, a small sized monitor and a large sized monitor will be considered. In a case where the resolutions of the monitors are the same, the pixel gap of the small sized monitor is small, and the pixel gap of the large sized monitor is large. The disparity information position is appropriately acquired on the display monitor. Then, the received disparity information value is converted into an appropriate disparity information value that matches the depth of a stereoscopic image on the display monitor.

In addition, the relation between the disparity information and the position based on a difference in the resolution will be described. For example, as illustrated in Fig. 43, a high-resolution monitor and a low-resolution monitor will be considered. In a case where the sizes of the monitors are the same, the pixel gap of the high-resolution monitor is small, and the pixel gap of the low-resolution monitor is large. The disparity information position is appropriately acquired on the display monitor. Then, the received disparity information value is converted into an appropriate disparity information value that matches the depth of a stereoscopic image on the display monitor.

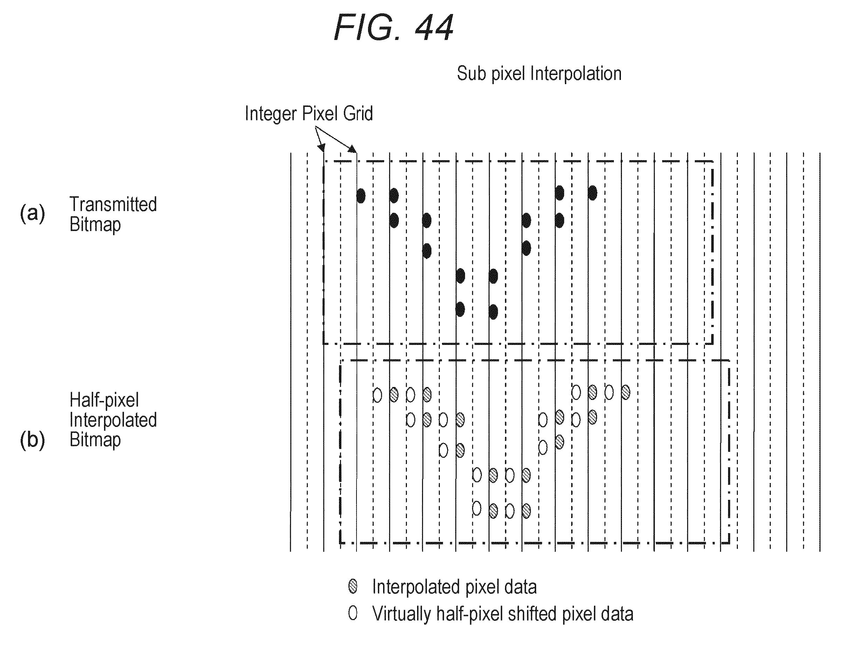

There is a case where the calculated disparity information position or the disparity information value is a decimal. In such a case, the OSD display data generating unit 226 uses an interpolation process for shift adjustment that is performed for bringing disparity to occur between left-eye graphics information overlapping the left-eye image and right-eye graphics information overlapping the right-eye image based on the disparity information. Accordingly, shift adjustment with the precision of a sub-pixel can be performed. Fig. 44 schematically illustrates an example of an interpolation process in a case where pixel data is shifted by a 1/2 pixel in the horizontal direction. In Fig. 44(a), black circles denote received data. In Fig. 44(b), white circles illustrate a state in which the received data is simply shifted by a 1/2 pixel in the horizontal direction. However, there is no data denoted by the white circle that is located at a pixel position. Thus, the shift adjusting unit 225 performs an interpolation process for the data denoted by white circles and generates data located at pixel positions denoted by hatched circles in Fig. 44(b) so as to be data after the shift adjustment.

### [Example of Configuration of HDMI Transmission Unit and HDMI Receiving unit]

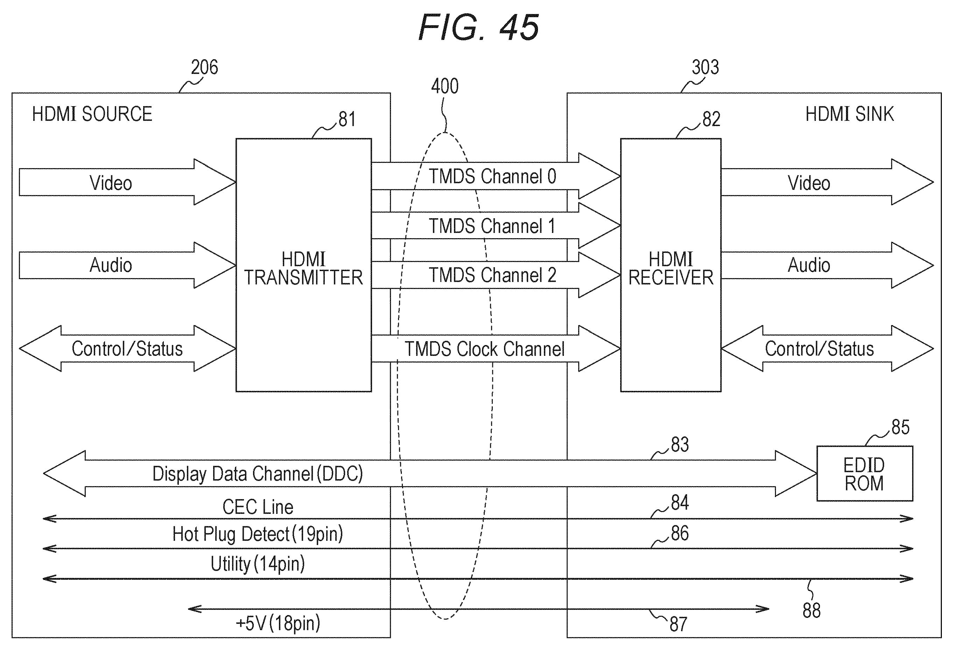

Fig. 45 illustrates an example of the configuration of the HDMI transmission unit (HDMI source) 206 of the set-top box 200 and the HDMI receiving unit (HDMI sink) 303 of the television receiver 300 in the stereoscopic image displaying system 10 illustrated in Fig. 1.

The HDMI transmission unit 206 unidirectionally transmits differential signals corresponding to pixel data of an image corresponding to uncompressed one screen to the HDMI receiving unit 303 through a plurality of channels in an effective image interval (hereinafter, appropriately, also referred to as an active video interval). Here, the effective image interval is a interval acquired by excluding a horizontal blanking interval and a vertical blanking interval from an interval from one vertical synchronization signal to the next vertical synchronization signal. In addition, the HDMI transmission unit 206 unidirectionally transmits differential signals corresponding to at least audio data and control data that are accompanied with an image, other auxiliary data, and the like to the HDMI receiving unit 303 through a plurality of channels in the horizontal blanking interval or the vertical blanking interval.

As transmission channels of the HDMI system that is formed by the HDMI transmission unit 206 and the HDMI receiving unit 303, there are the following transmission channels. In other words, there are three TMDS channels #0 to #2 as transmission channels used for unidirectionally transmitting pixel data and audio data in a serial manner in synchronization with a pixel clock from the HDMI transmission unit 206 to the HDMI receiving unit 303. In addition, as a transmission channel used for transmitting a pixel clock, there is a TMDS clock channel.

The HDMI transmission unit 206 includes an HDMI transmitter 81. The transmitter 81, for example, converts pixel data of an uncompressed image into corresponding differential signals and unidirectionally transmits the differential signals in a serial manner to the HDMI receiving unit 303 that is connected through the HDMI cable 400 through three TMDS channels #0, #1, and #2 as a plurality of channels.

In addition, the transmitter 81 converts audio data accompanied with an uncompressed image, necessary control data, other auxiliary data, and the like into corresponding differential signals and unidirectionally transmits the differential signals to the HDMI receiving unit 303 in a serial manner through three TMDS channels #0, #1, and #2.

Furthermore, the transmitter 81 transmits a pixel clock, which is synchronized with pixel data transmitted through three TMDS channels #0, #1, and #2, to the HDMI receiving unit 303 that is connected through the HDMI cable 400 through the TMDS clock channel. Here, in one TMDS channel #i (i = 0, 1, or 2), pixel data of 10 bits is transmitted during one clock of the pixel clock.

The HDMI receiving unit 303, in the active video interval, receives the differential signals corresponding to pixel data, which are unidirectionally transmitted from the HDMI transmission unit 206 through a plurality of channels. In addition, this HDMI receiving unit 303, in the horizontal blanking interval or the vertical blanking interval, receives differential signals corresponding to audio data or control data, which are unidirectionally transmitted from the HDMI transmission unit 206 through a plurality of channels.

In other words, the HDMI receiving unit 303 includes an HDMI receiver 82. This HDMI receiver 82 receives differential signals corresponding to pixel data and differential signals corresponding to audio data and control data that are unidirectionally transmitted from the HDMI transmission unit 206 through TMDS channels #0, #1, and #2. In this case, the HDMI receiver 82 receives differential signals in synchronization with the pixel clock that is transmitted from the HDMI transmission unit 206 through the TMDS clock channel.

As a transmission channel of the HDMI system, other than the above-described TMDS channels #0 to #2 and the TMDS clock channel, there is a transmission channel called a display data channel (DDC) 83 or a CEC line 84. The DDC 83 is formed by two signal lines, which are included in the HDMI cable 400 and not illustrated in the figure. The DDC 83 is used by the HDMI transmission unit 206 for reading out enhanced extended display identification data (E-EDID) from the HDMI receiving unit 303.

In other words, the HDMI receiving unit 303 includes an EDID read only memory (ROM) 85 storing E-EDID that is performance information relating to the performance (Configuration/capability) thereof, other than the HDMI receiver 81. The HDMI transmission unit 206, for example, in response to a request from the CPU 211 (see Fig. 36), reads out the E-EDID from the HDMI receiving unit 303 that is connected through the HDMI cable 400 through the DDC 83.

The HDMI transmission unit 206 transmits the read-out E-EDID to the CPU 211. The CPU 211 stores the E-EDID in the flash ROM 212 or the DRAM 213. The CPU 211 can recognize the setting of the performance of the HDMI receiving unit 303 based on the E-EDID. For example, the CPU 211 recognizes whether or not the television receiver 300 including the HDMI receiving unit 303 can handle stereoscopic image data and, in a case where the stereoscopic image data can be handled, a TMDS transmission data structure to which the television receiver can be responded, and the like.

The CEC line 84 is formed from one signal line, which is not illustrated in the figure and is included in the HDMI cable 400, and is used for bidirectional communication of control data between the HDMI transmission unit 206 and the HDMI receiving unit 303. This CEC line 84 configures a control data line.

In addition, in the HDMI cable 400, a line (HPD line) 86 that is connected to a pin called hot plug detect (HPD) is included. A source device can detect a connection of a sink device by using the line 86. In addition, this HPD line 86 is also used as an HEAC line that configures a bidirectional communication line. Furthermore, in the HDMI cable 400, a line (power line) 87 that is used for supplying power from the source device to the sink device is included. In addition, in the HDMI cable 400, a utility line 88 is included. This utility line 88 is also used as an HEAC+ line that configures a bidirectional communication line.

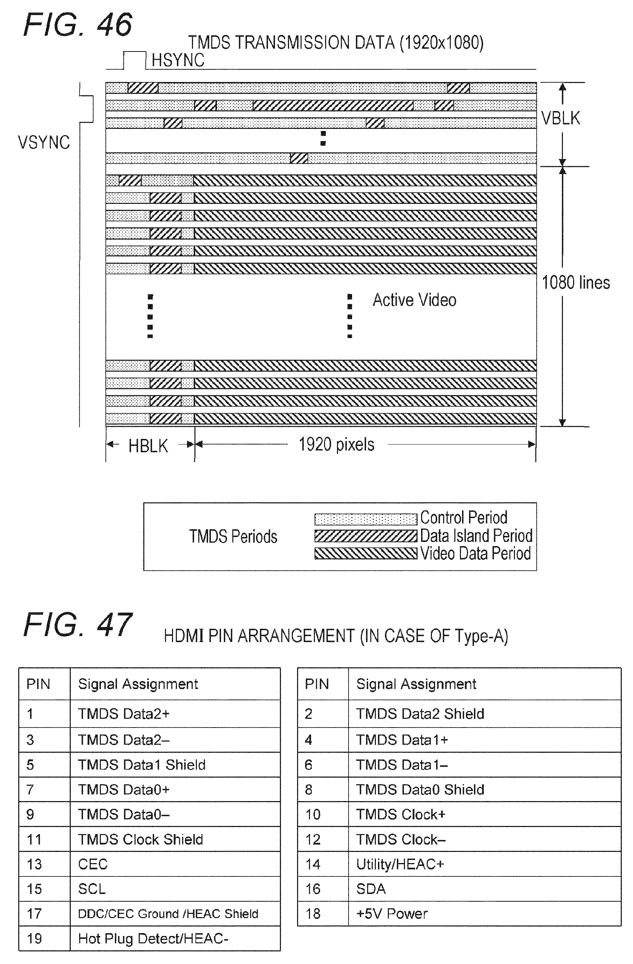

Fig. 46 illustrates an example of the structure of the TMDS transmission data. Fig. 46 illustrates various transmission data intervals in a case where image data of horizontal 1920 pixels × vertical 1080 lines is transmitted through the TMDS channels #0, #1, and #2.

In a video field to which transmission data is transmitted through three TMDS channels #0, #1, and #2 of the HDMI, there are periods of three types in accordance with the types of transmission data. These periods of three types are a video data period, a data island period, and a control period.

Here, the video field period is an interval from a rising edge (active edge) of a vertical synchronization signal to a rising edge of the next vertical synchronization signal. This video field period is divided into a horizontal blanking period, a vertical blanking period, and an active video period. This active video period is an interval that is acquired by excluding the horizontal blanking period and the vertical blanking period from the video field period.

The video data period is assigned to the active video interval. In this video data period, data of effective pixels (Active pixel) corresponding to 1920 pixels × 1080 lines that configure image data corresponding to one uncompressed screen is transmitted.

The data island period and the control period are assigned to a horizontal blanking interval and a vertical blanking interval. In the data island period and the control period, auxiliary data is transmitted. In other words, the data island period is assigned to a part of the horizontal blanking interval and the vertical blanking interval. In this data island period, data not relating to control among auxiliary data, for example, a packet of audio data and the like are transmitted.

The control period is assigned to the other parts of the horizontal blanking interval and the vertical blanking period. In the control period, data relating to control among the auxiliary data, for example, a vertical synchronization signal, a horizontal synchronization signal, a control packet, and the like are transmitted.

Fig. 47 illustrates the pin arrangement of an HDMI terminal. The pin arrangement illustrated in Fig. 47 is referred to as type-A. TMDS Data#i+ and TMDS Data#i- that are differential signals of the TMDS channel #i are transmitted through two lines as differential lines. These two lines are connected to a pin (a pin having a pin number of 1, 4, or 7) to which TMDS Data#i+ is assigned and a pin (a pin having a pin number of 3, 6, or 9) to which TMDS Data#i- is assigned.

In addition, the CEC line 84 through which a CEC signal as control data is transmitted is connected to a pin having a pin number of 13. Furthermore, a line through which a Serial Data (SDA) signal such as an E-EDID is transmitted is connected to a pin having a pin number of 16. A line through which a Serial Clock (SCL) signal as a clock signal used for the synchronization at the time of transmitting and receiving the SDA signal is connected to a pin having a pin number of 15. DDC83 described above is configured by the line through which the SDA signal is transmitted and the line through which the SCL signal is transmitted.

Furthermore, as described above, the HPD line (HEAC line) 86 used by the source device for detecting a connection of a sink device is connected to a pin having a pin number of 19. In addition, the utility line (HEAC+ line) 88 is connected to a pin having a pin number of 14. In addition, the line 87 used for supplying power as described above is connected to a pin having a pin number of 18.

### [E-EDID Structure]

As described above, the HDMI transmission unit 206, for example, in accordance with a request from the CPU 211 (see Fig. 36), reads out the E-EDID from the HDMI receiving unit 303, which is connected through the HDMI cable 400, through the DDC 83. Then, the CPU 211, based on the E-EDID, recognizes the setting of the performance of the HDMI receiving unit 303, for example, whether or not a stereoscopic image data can be handled.

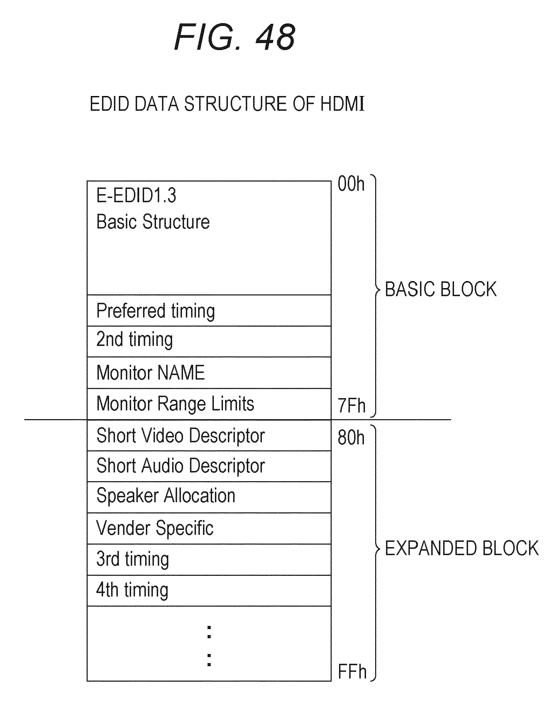

Fig. 48 illustrates an example of the data structure of the E-EDID. This E-EDID is formed by a basic block and an expanded block. In the basic block, data defined by the specification of E-EDID 1.3 represented by "E_EDID 1.3 Basic Structure" is arranged in the lead. In the basic block, subsequently, timing information used for maintaining the compatibility with conventional EDID that is represented by "Preferred timing" is arranged. In addition, in the basic block, subsequently, timing information other than "Preferred timing" used for maintaining the compatibility with conventional EDID represented by "2nd timing" is arranged.

In the basic block, after "2nd timing", information that represents the name of a display device that is represented by "Monitor NAME" is arranged. In the basic block, subsequently, information representing the number of pixels used for a display in a case where the aspect ratio is 4 : 3 or 16 : 9, which is denoted by "Monitor Range Limits", is arranged.

In the lead of the expanded block, "Short Video Descriptor" is arranged. This is information that represents an image size (resolution) that can be displayed, a frame rate, and an interlaced mode/progressive mode. Subsequently, "Short Audio Descriptor" is arranged. This is information such as a reproducible audio codec type, a sampling frequency, a cut-off band, codec bit numbers, and the like. Subsequently, information relating to left and right speaker, which is denoted by "Speaker Allocation", is arranged.

In addition, in the expanded block, after "Speaker Allocation", data that is uniquely defined for each maker, which is denoted by "Vender Specific", is arranged. In the expanded block, subsequently, timing information used for maintaining the compatibility with conventional EDID represented by "3rd timing", is arranged. In addition, in the expanded bock, subsequently, timing information used for maintaining the compatibility with conventional EDID represented by "4th timing", is arranged.

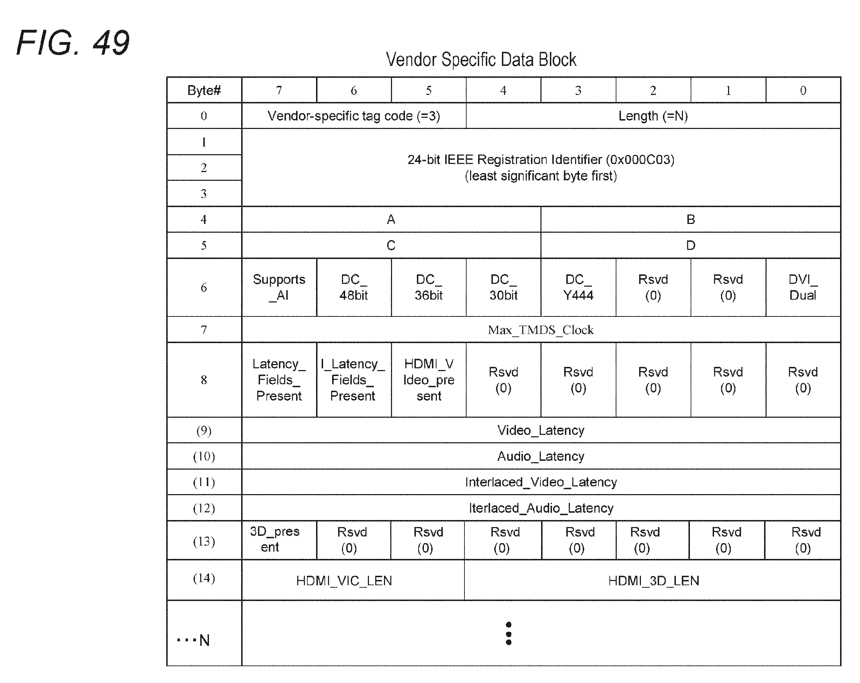

Fig. 49 illustrates an example of the data structure of the vendor-specific region (HDMI Vendor Specific Data Block). In this vendor-specific region, blocks 0 to N that are one-byte blocks are disposed.

In block 0, a header that represents a data region of data "Vendor Specific", which is denoted by "Vendor-Specific tag code (= 3)", is arranged. In addition, in block 0, information that represents the length of the data "Vendor Specific", which is denoted by "Length (= N)" is arranged. In addition, in blocks 1 to 3, information representing a registered number of "0x000C03" for HDMI(R), which is denoted by "24bit IEEE Registration Identifier (0x000C03) LSB first", is arranged. Furthermore, in blocks 4 and 5, information that represents the 24-bit physical addresses of sink devices, which are denoted by "A", "B", "C", and "D" is arranged.

In block 6, a flag that represents the function to which the sink device corresponds, which is denoted by "Supports-AI", is arranged. In addition, in block 6, information that designates the number of bits per one pixel, which is denoted by "DC-48 bit", "DC-36 bit", and "DC-30 bit", is arranged. Furthermore, in this block 6, a flag that represents whether or not a sink device is in correspondence with the transmission of an image of YCbCr4:4:4, which is denoted by "DC-Y444", is arranged. In addition, in this block 6, a flag that represents whether or not a sink device is in correspondence with a dual digital visual interface (DVI), which is denoted by "DVI-Dual", is arranged.

In addition, in block 7, information that represents the highest frequency of the pixel clock of the TMDS, which is denoted by "Max-TMDS-Clock", is arranged. Furthermore, in the sixth bit and the seventh bit in block 8, a flag that represents whether there is delay of a video and an audio, which is denoted by "Latency", is arranged. In addition, in the fifth bit in block 8, a flag that represents whether or not an additional HDMI video format (3D, 4k × 2k) can be handled, which is denoted by "HDMI_Video_present", is arranged.

In addition, in block 9, delay time data of a progressive video, which is denoted by "Video Latency", is arranged, and in block 10, audio delay time data that is accompanied with a progressive video, which is denoted by "Audio Latency", is arranged. Furthermore, in block 11, delay time data of an interlaced video, which is denoted by "Interlaced Video Latency", is arranged. In addition, in block 12, audio delay time data that is accompanied with an interlaced video, which is denoted by "Interlaced Audio Latency", is arranged.

Furthermore, in the 7th bit in block 13, a flag that represents whether or not 3D image data can be handled, which is denoted by "3D_present", is arranged. In addition, in the 7th bit to the 5th bit in block 14, size information of a block, which is not illustrated in the figure and is arranged in block 15 and the subsequent blocks thereof, representing a data structure other than the mandatory 3D data structure that can be handled, which is denoted by "HDMI_VIC_LEN", is arranged. In addition, the 4th bit to the 0th bit in block 14, size information of a block, which is not illustrated in the figure and is arranged in block 15 and the subsequent blocks, representing a video format of 4k × 2k that can be handled, which is denoted by "HDMI_3D_LEN" is arranged.

### [TMDS Transmission Data Structure of Stereoscopic Image Data]

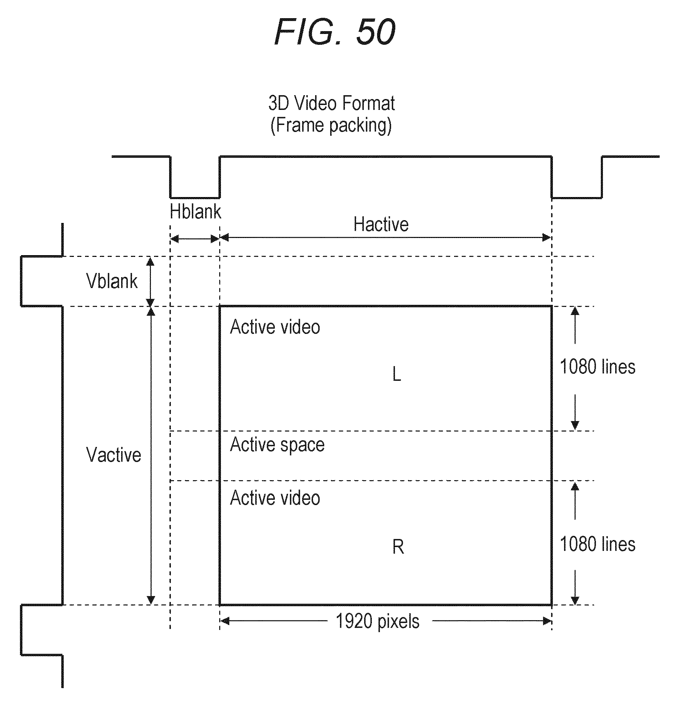

Fig. 50 illustrates a 3D video format of a frame packing type as one of the TMDS transmission data structure of stereoscopic image data. This 3D video format is a format that is used for transmitting image data of the left eye (L) and the right eye (R) of the progressive type as stereoscopic image data.

In this 3D video format, as image data of the left eye (L) and the right eye (R), image data having a pixel format of 1920 × 1080 p and 1080 × 720 p is transmitted. In addition, in Fig. 50, an example is illustrated in which each one of left eye (L) image data and right eye (R) image data is of 1920 lines × 1080 pixels.

According to this 3D video format, transmission data in units of video field intervals each including a horizontal blanking interval (Hblank), a vertical blanking interval (Vblank), and an active video interval (Hactive × Vactive) that are broken by a vertical synchronization signal is generated. In this 3D video format, the active video interval includes two active video regions (Active video) and one active space region (Active space) interposed therebetween. The left-eye (L) image data is arranged in a first active video region, and the right-eye (R) image data is arranged in a second active video region.

Although not described in detail here, in HDMI 1.4, in addition to the above-described 3D video format of Fig. 50, a 3D video format as a TMDS transmission data structure of stereoscopic image data is defined. For example, there are a line alternative type, a side-by-side (Full) type, a frame packing type for an interlaced format, and the like.

In the set-top box 200 of Fig. 36, a configuration is employed in which stereoscopic image data and audio data of a baseband are transmitted to the television receiver 300 through the HDMI interface. From the set-top box 200 to the television receiver 300, all or some of disparity information sets used by the bit stream processing unit 201 are transmitted through the HDMI interface so as to be used.

In the set-top box 200 of Fig. 36, a disparity information set is supplied to the HDMI transmission unit 206 by the bit stream processing unit 201. Then, by the HDMI transmission unit 206, together with the stereoscopic image data and the audio data, the disparity information set is delivered from the HDMI terminal 202 to the HDMI cable 400. In addition, in the television receiver 300 of Fig. 37, the disparity information set received by the HDMI receiving unit 303, as described above, is supplied to the OSD display data generating unit 313 so as to be used.

### [Method of Transmitting Disparity Information Set in HDMI]

As methods for transmitting a disparity information set through an HDMI interface, for example, the following methods (1) and (2) may be considered.
(1) Method Using HDMI Vendor Specific InfoFrame
(2) Method Using Active Space of 3D Video Format Such As Frame Packing Type

First, the method using HDMI Vendor Specific InfoFrame mentioned as (1) will be described. In this method, in an HDMI Vendor Specific InfoFrame packet, it is assumed that HDMI_Video_Format = "010", 3D_Meta_present = 1, and a Vendor Specific InfoFrame extension is assigned. In such a case, 3D_Metadata_type is defined, for example, as "010" that is not in use, and information of a disparity information set (disparrity set) is designated.

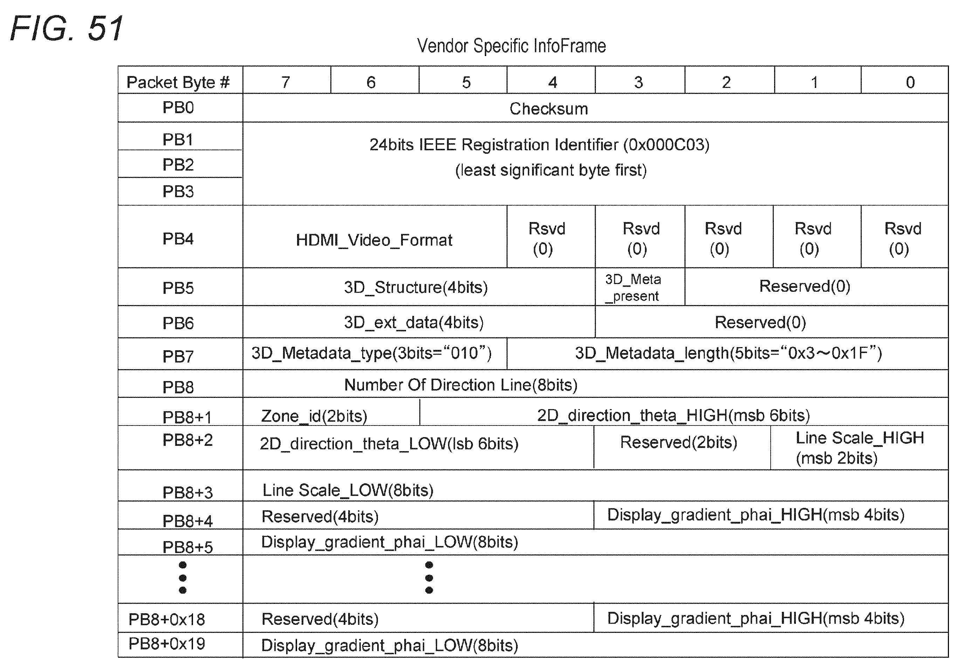

Fig. 51 illustrates a packet structure of the HDMI Vendor Specific InfoFrame. Since the HDMI Vendor Specific InfoFrame is defined in CEA-861-D, a detailed description will not be presented.

In 7th bit to 5th bit of the 4th byte (PB4), information "HDMI_Video_Format" of 3 bits representing the type of image data is arranged. In a case where image data is 3D image data, the information of 3 bits is set as "010". In addition, in a case where the image data is the 3D image data, in the 7th bit to the 4th bit of the 5th bye (PB5), information "3D_Structure" of 4 bits that represents the structure of the TMDS transmission data is arranged. For example, in the case of the frame packing type (see Fig. 50), the information of 4 bits is set as "0000".

In addition, in the 3rd bit of the 5th byte (PB5), "3D_Meta_present" is arranged, and, in a case where a Vendor Specific InfoFrame extension is designated, this 1 bit is set as "1". In addition, in the 7th bit to the 5th bit of the 7th byte (PB7), "3D_Metadata_type" is arranged. In a case where the information of the disparity information set (disparrity set) is designated, the information of 3 bits, for example, is set as "010" that is not in use.

In addition, in the 4th byte to the 0th byte of the 7th byte (PB7), "3D_Metadata_length" is arranged. Based on the information of these 5 bits, the length of the 3D_Metadata region that is arranged thereafter is represented. For example, in a case where "3D_Metadata length = 27 (0x1B)", a disparity information set is transmitted from the position disposed immediately thereafter so as to have a size of 27 bytes. For example, positions of the disparity information set (see Fig. 22) corresponding to five pixels in "Case 1" are arranged in the illustrated pattern.

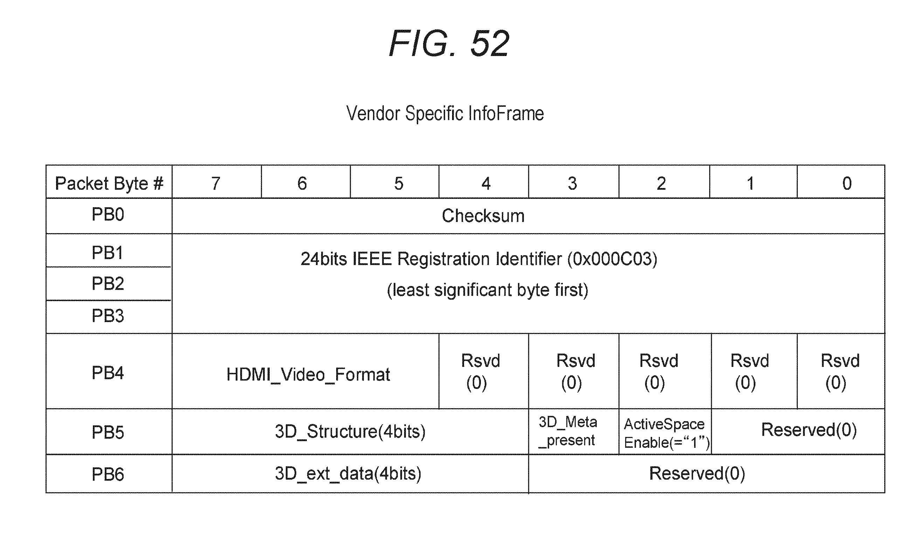

Next, the method using the active space mentioned in (2) will be described. In this method, as the packet structure of the HDMI Vendor Specific InfoFrame is illustrated in Fig. 52, in the 2nd bit of the 5th byte (PB5), which is a reserved bit in the current state, "ActiveSpaceEnable" is defined, and the information of the 1 bit is set as "1". In addition, by using the active space region that is reserved in the current state, an information region is newly defined, and the disparity information set is arranged therein.

The active space region configures the active video interval together with the active video region in which the left-eye image data and the right-eye image data are arranged. Here, the active video region configures a main video region, and the active space region configures an auxiliary video region. Although the active space region changes in accordance with the image size of a video, and, in the case of an image size of 1920 × 1080, the active space region has a capacity corresponding to 45 lines (86400 bytes) that is close to one frame.

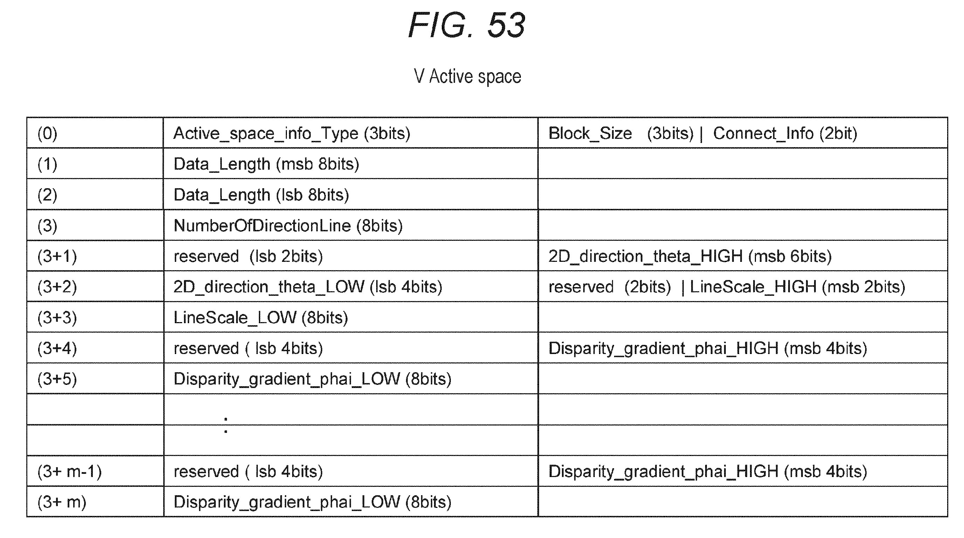

For example, the maximum data size of the disparity information set (see Fig. 22) in "Case 1" is 1 + 5*256 = 1281 bytes, and falls inside the active space region. Fig. 53 illustrates an example of the arrangement of a disparity information set in the active space region. In byte 0, the information of "Active_space_info_Type" of 3 bits, "Block_Size" of 3 bits, and "Connect_Info" of 2 bits is arranged. In bytes 1 and 2, higher 8 bits and lower 8 bits of "Data_Length" having 16 bits are arranged which represents the length of the area in which a disparity information set disposed thereafter is arranged.

As described above, in the image transmission and reception system 10 illustrated in Fig. 1, from the broadcasting station 100 (transmission data generating unit 201) to the set-top box 200 or the television receiver 300, together with the stereoscopic image data of a predetermined program that includes left-eye image data and right-eye image data, a disparity information set for a predetermined pixel position that corresponds to the stereoscopic image data of the predetermined program is transmitted. Accordingly, on the reception side, by using the disparity information set, the overlapping information on overlapping the left-eye image and the right-eye image, for example, graphics information included in an OSD or the like for which disparity adjustment has been performed in accordance with the perspective of each object within an image can be used. Accordingly, for example, in a display of graphics information, for example, OSD or like, the consistency in the perspective of each object within the image can be maintained.

In addition, in the image transmission and reception system 10 illustrated in Fig. 1, the disparity information set transmitted from the broadcasting station 100 (transmission data generating unit 201) to the set-top box 200 or the television receiver 300 includes position data representing a relative position of the predetermined pixel position with respect to the whole image and disparity data for the predetermined pixel position. Accordingly, the disparity information set is independent from the resolution of a stereoscopic image and is also independent from the display resolution of the monitor or the monitor size. Therefore, on the reception side, disparity adjustment can be easily performed by using the disparity information set regardless of the display resolution of the monitor or the monitor size.

In addition, in the image transmission and reception system 10 illustrated in Fig. 1, from the set-top box 200 to the television receiver 300, together with the stereoscopic image data of a predetermined program, a disparity information set for a predetermined pixel position corresponding thereto is transmitted through the HDMI cable 400. Accordingly, in an image display device such as a television receiver 300, by using the disparity information set, the overlapping information on overlapping the left-eye image and the right-eye image, for example, graphics information included in an OSD or the like for which disparity adjustment has been performed in accordance with the perspective of each object within an image can be used. Accordingly, for example, in a display of graphics information, for example, OSD or like, the consistency in the perspective of each object within the image can be maintained.

### <2. Modified Example>

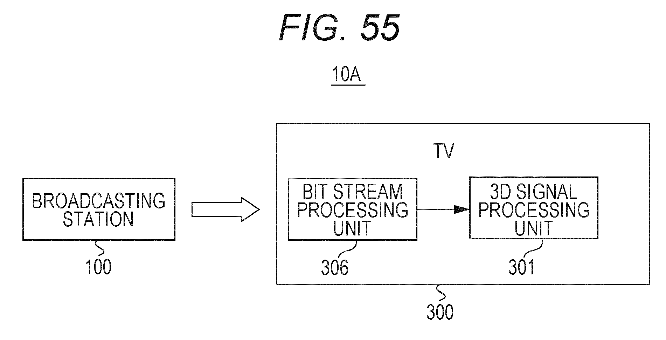

In addition, in the above-described embodiment, the stereoscopic image displaying system 10 has been illustrated to be configured by the broadcasting station 100, the set-top box 200, and the television receiver 300. However, the television receiver 300, as illustrated in Fig. 37, includes the bit stream processing unit 306 that serves the same as the bit stream processing unit 201 arranged inside the set-top box 200. Accordingly, as illustrated in Fig. 55, a stereoscopic image displaying system 10A that is configured by the broadcasting station 100 and the television receiver 300 may be considered.

In addition, in the above-described embodiment, an example has been illustrated in which the descriptor including the disparity information set is inserted at a predetermined position of the PSI information or the SI information of the transport stream (bit stream data). However, a case may be considered in which the disparity information set is transmitted with being inserted into the video elementary stream including the stereoscopic image data, a subtitle elementary stream including subtitle data, or the like. Hereinafter, a case will be described in which a disparity information set is generated in "Case 5". Although not illustrated in detail, the present invention can be similarly applied also to a case where a disparity information set is generated in any other case.

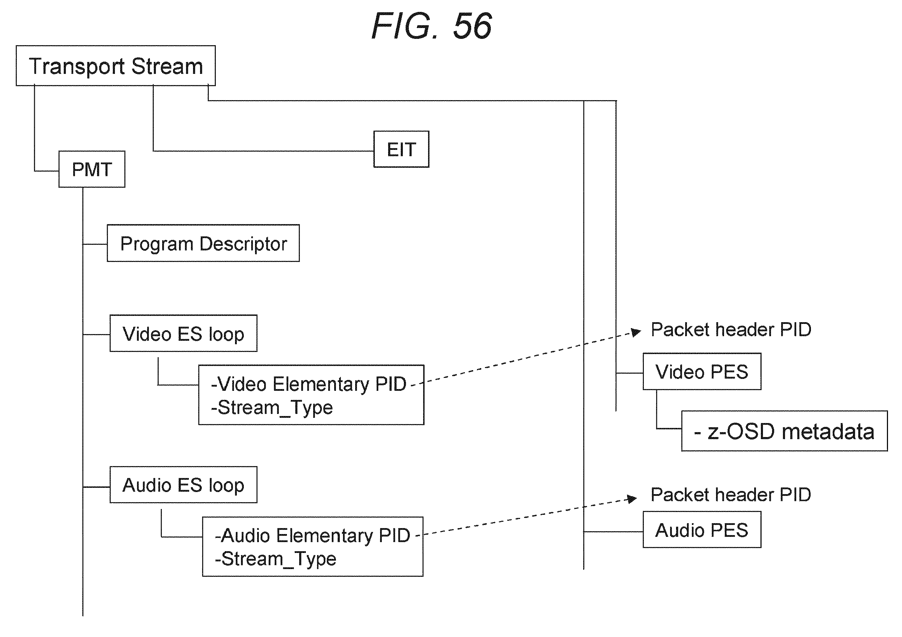

First, a case will be described in which a disparity information set is transmitted with being inserted into a video elementary stream (video data stream) including stereoscopic image data. Fig. 56 illustrates an example of the configuration of a transport stream (bit stream data) in such a case. As illustrated in the example of the configuration, meta data (z-OSD metadata) including a disparity information set is inserted into a video elementary stream. Here, the meta data is embedded as user data.

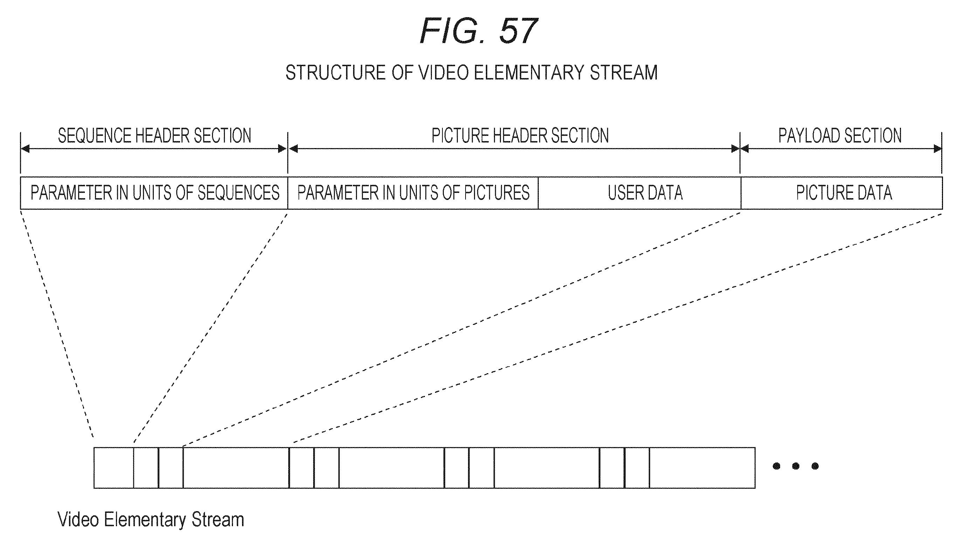

Fig. 57 schematically illustrates an example of the structure of a video elementary stream. In the video elementary stream, a sequence header section including parameters in units of sequences is arranged. Following the sequence header section, a picture header that includes parameters in units of pictures and user data is arranged. Following this picture header section, a payload section that includes picture data is arranged. Hereinafter, the picture header section and the payload section are repeatedly arranged.

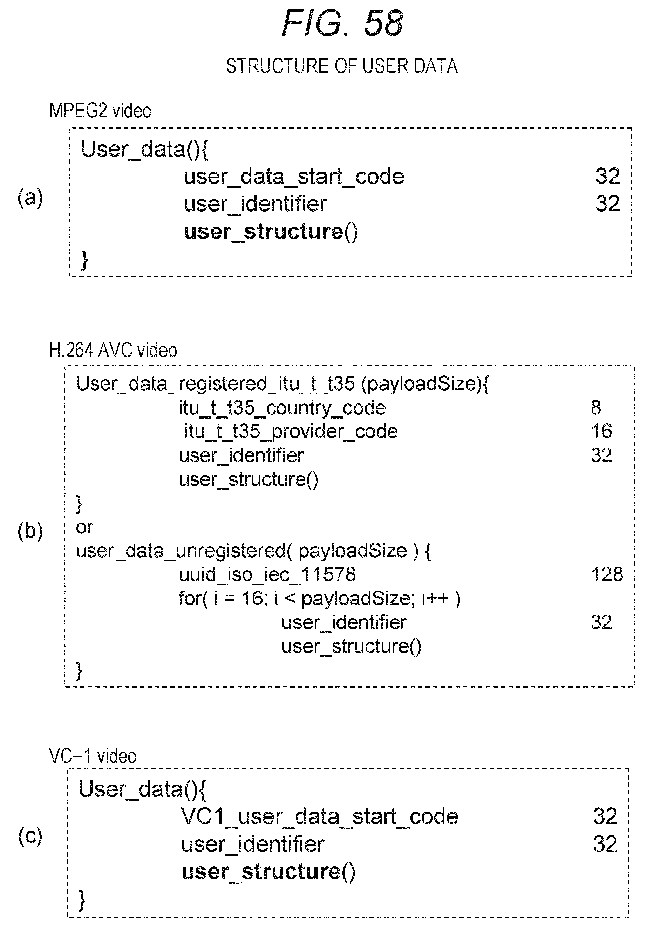

The above-described disparity information set, for example, is embedded in the user data region of the picture header section. Fig. 58 illustrates an example of the configuration of the user data. Fig. 58(a) illustrates the configuration of the user data in a case where an encoding type is MPEG2. Fig. 58(b) illustrates the configuration of the user data in a case where an encoding type is H.264 AVC (MPEG4-AVC). In addition, Fig. 58(c) illustrates the configuration of the user data in a case where an encoding type is VC-1.

Although not described in detail, the configuration of the user data for each type is almost the same. In other words, first, a code representing the start of user data is arranged, and, after that, an identifier "user_identifier" that represents the type of data is arranged, and, after that, a data main body "user_structure" is arranged.

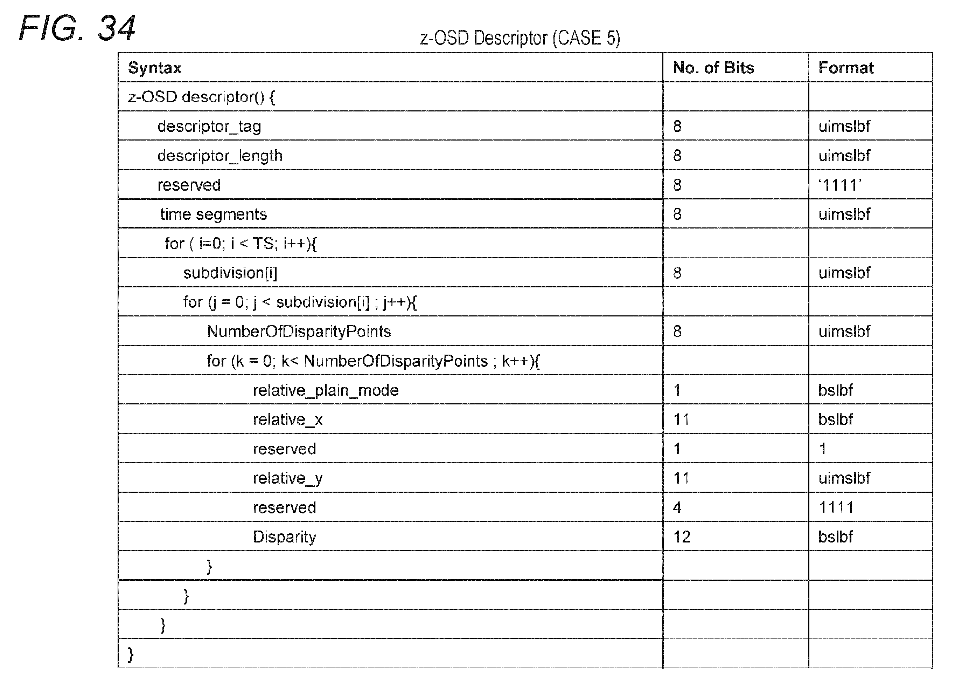

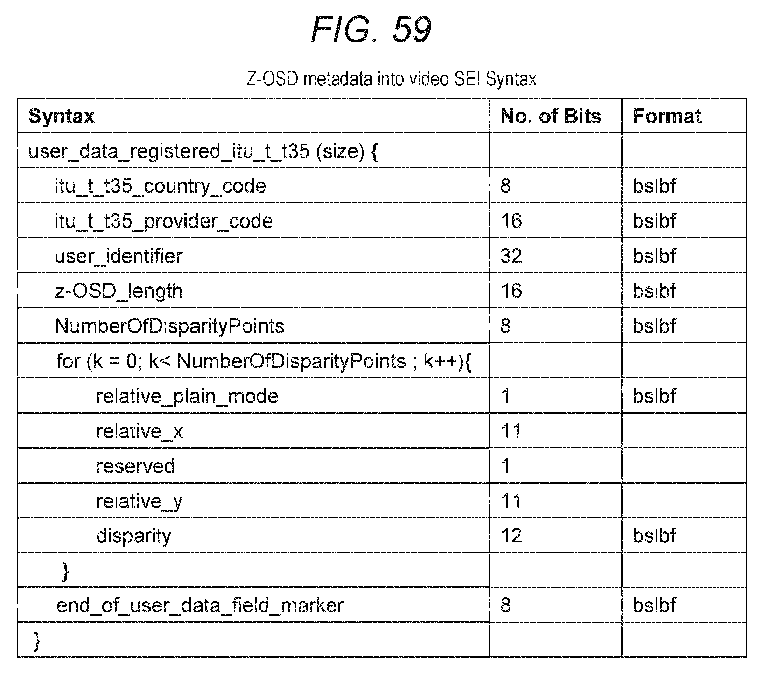

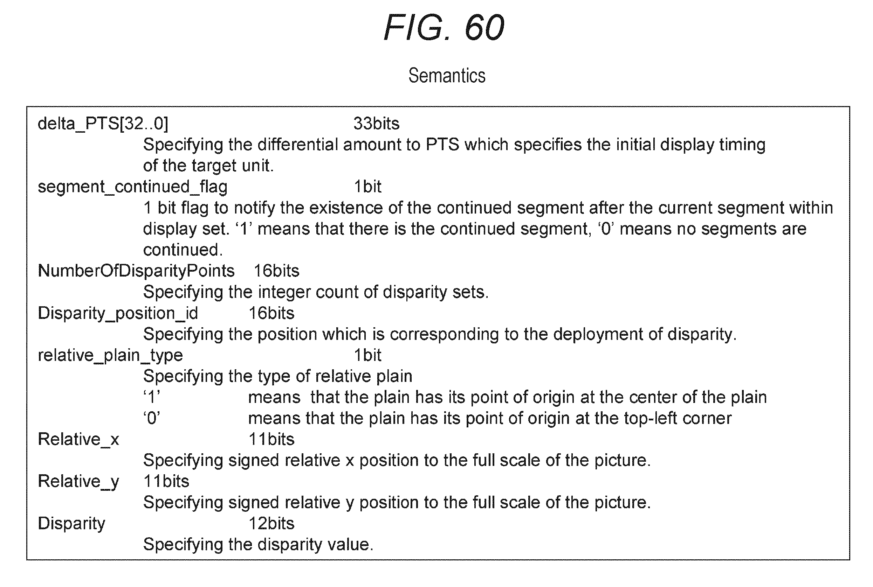

Fig. 59 illustrates an example of the structure (Syntax) of user data that includes a disparity information set. In this structure, similarly to the descriptor (z-OSD Descriptor) illustrated in Fig. 34, the disparity information set generated in "Case 5" described above is included. Main data defining contents (Semantics) of this example of the structure is illustrated in Fig. 60.

"Number Of Disparity Points" represents a total number of disparity information sets. For example, in a case where there are two disparity information sets including the first pixel position at which the value of the disparity information is the maximum (Max) and the pixel position (second pixel position) at which the value of the disparity information is the minimum (Min), it is assumed that Number Of Disparity Points = 1. "relative_plain_mode" is one bit data illustrating the type of a relative plane. "relative_plain_mode =1" represents Coordinate Mode 0 and a plane of coordinates in which the image center O is set as its origin (0, 0). "relative_plain_mode = 0" represents Coordinate Mode 1 and a plane of coordinates in which the top left side (top_left) of the image is set as its origin (0, 0).

"Relative_x" is 11-bit data that represents a horizontal distance (Rxa) from the origin (0, 0) to the pixel position (x, y). This horizontal distance (Rxa) is represented as a ratio with respect to the size of the image in the horizontal direction. "Relative_y" is 11-bit data that represents a vertical distance (Rya) from the origin (0, 0) to the pixel position (x, y). This vertical distance (Rya) is represented as a ratio with respect to the size of the image in the vertical direction. "Disparity" is 12-bit data that illustrates the value of the disparity information (disparity vector) for the pixel position (x, y).

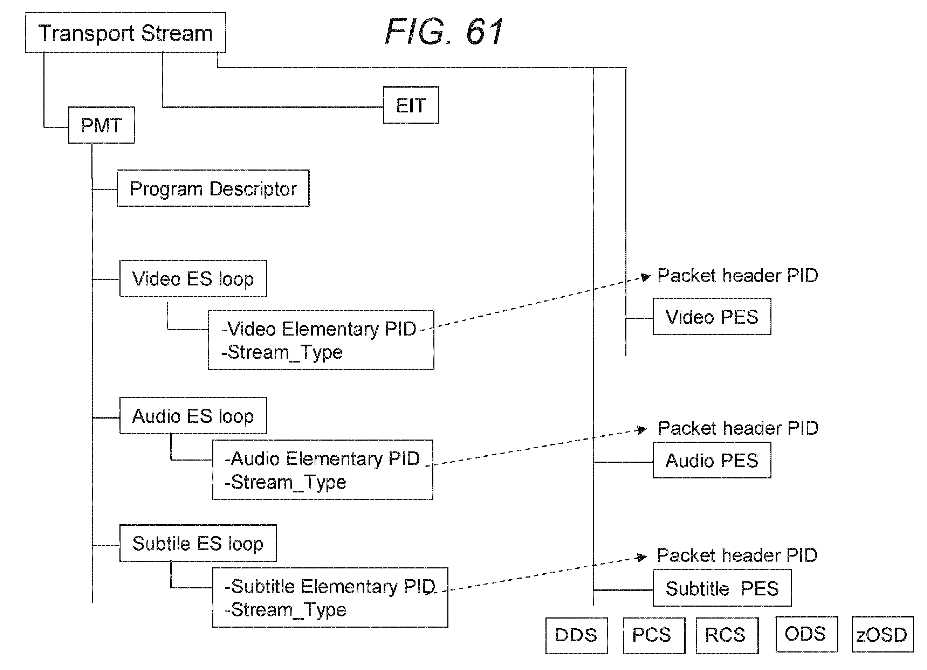

Next, a case will be described in which a disparity information set is transmitted with being inserted into a subtitle elementary stream (subtitle data stream) including subtitle data. Fig. 61 illustrates an example of the configuration of the transport stream (bit stream data) in such a case. As illustrated in this example of the configuration, a segment (zOSD: z-OSD segment), which includes a disparity information set, newly defined is inserted into the subtitle stream.

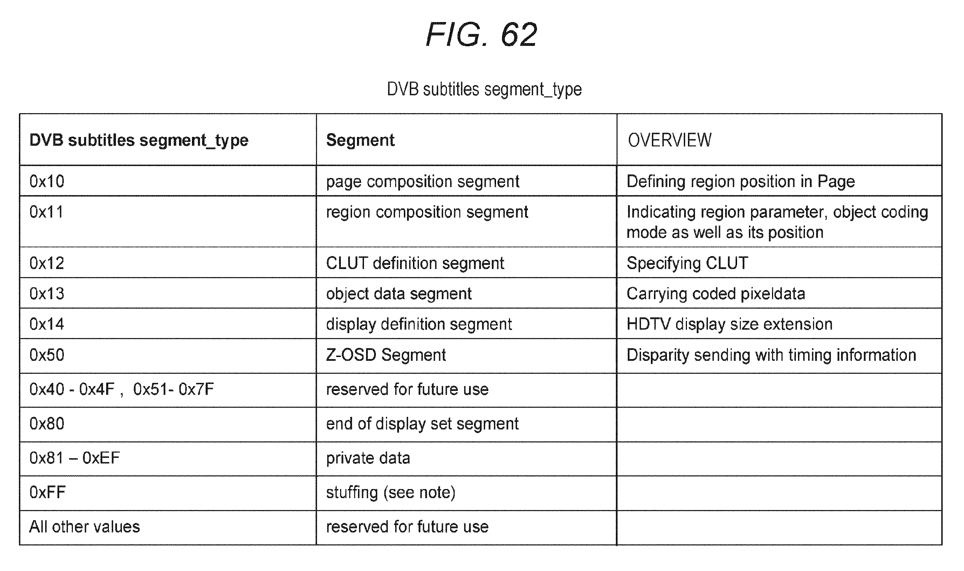

In other words, in the subtitle elementary stream, known segments are included such as a display definition segment (DDS), a page composition segment (PCS), a region composition segment (RCS), and an object data segment (ODS). In addition, in the subtitle elementary stream, a segment (zOSD) that is included in the disparity information set is included. For example, as illustrated in Fig. 62, the type of the segment of zOSD is "0x50".

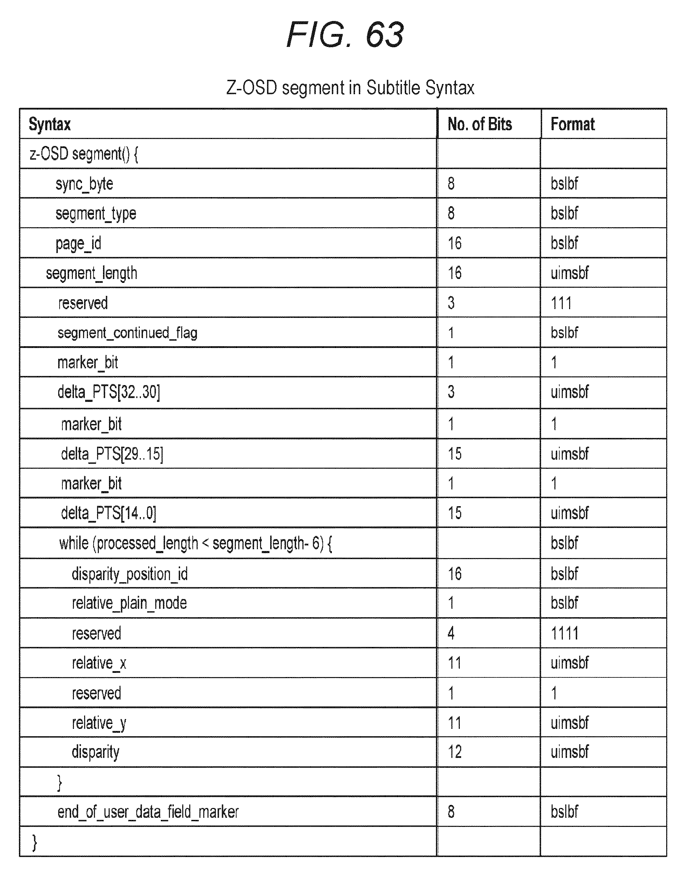

Fig. 63 illustrates an example of the structure (syntax) of the zOSD (z-OSD segment). Main data defining contents (semantics) of the zOSD are illustrated in Fig. 60. "segment_continued_flag" is flag information of one bit that represents whether or not the segment of zOSD is located after the current segment. "segment_continued_flag =1" represents that a segment is present. "segment_continued_flag = 0" represents that a segment is not present. On the reception side, it can be checked whether or not segments or packets in which the disparity information is included are continuously present based on the flag information, and accordingly, the possibility of update of the disparity information and the like can be checked in advance.

"delta_PTS[32..0]" is 32-bit data that represents a difference (change) in the PTS (time information) included in the header section which specifies the display timing of a subtitle. "Disparity_position_id" is 16-bit data that illustrates a pixel position corresponding to the disparity information set. In addition, the 32-bit data is arranged so as to be divided into three.

"relative_plain_mode" is one-bit data that represents the type of a relative plane. It represents Coordinate Mode 0 and a plane in which the image center O is set as the origin (0, 0). "relative_plain_mode = 0" represents Coordinate Mode 1 and a plane of coordinates in which the top left side (top-left) of the image is set as the origin (0, 0).

"Relative_x" is 11-bit data that represents a horizontal distance (Rxa) from the origin (0, 0) to the pixel position (x, y). This horizontal distance (Rxa) is represented as a ratio with respect to the size of the image in the horizontal direction. "Relative_y" is 11-bit data that represents a vertical distance (Rya) from the origin (0, 0) to the pixel position (x, y). This vertical distance (Rya) is represented as a ratio with respect to the size of the image in the vertical direction. "Disparity" is 12-bit data that illustrates the value of the disparity information (disparity vector) for the pixel position (x, y).

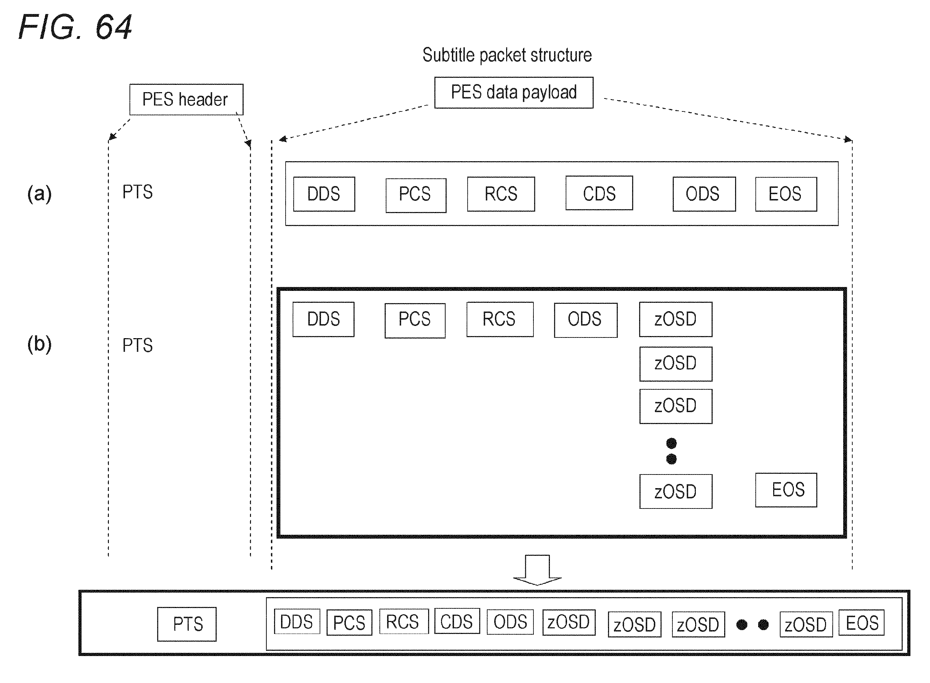

Fig. 64(a) illustrates an example of the configuration of a conventional subtitle data stream. In a PES header, time information (PTS) is included. In addition, as PES payload data, segments of DDS, PCS, RCS, ODS, and EOS are included. Fig. 64(b) illustrates an example of the configuration of a subtitle data stream in which the above-described zOSD is included. In a PES header, time information (PTS) is included. In addition, as PES payload data, segments of DDS, PCS, RCS, ODS, zOSD, and EOS are included.

In the example of the configuration illustrated in Fig. 64(b), as PES payload data, first, segments of DDS, PCS, RCS, ODS, and zOSD are transmitted. Thereafter, a predetermined number of segments of zOSD in which a time differential value (delta_PTS) and the content of the disparity information set are updated can be transmitted. Finally, the segment of EOS is also transmitted in the segment ofzOSD. In the example of the configuration illustrated in Fig. 64(b), the disparity information sets that are sequentially updated can be transmitted by sequentially transmitting the segments of zOSD without transmitting the whole subtitle data stream. In this case, while "segment_continued_flag = 0" in the last zOSD, it is "segment_continued_flag = 1" in previous zOSD.

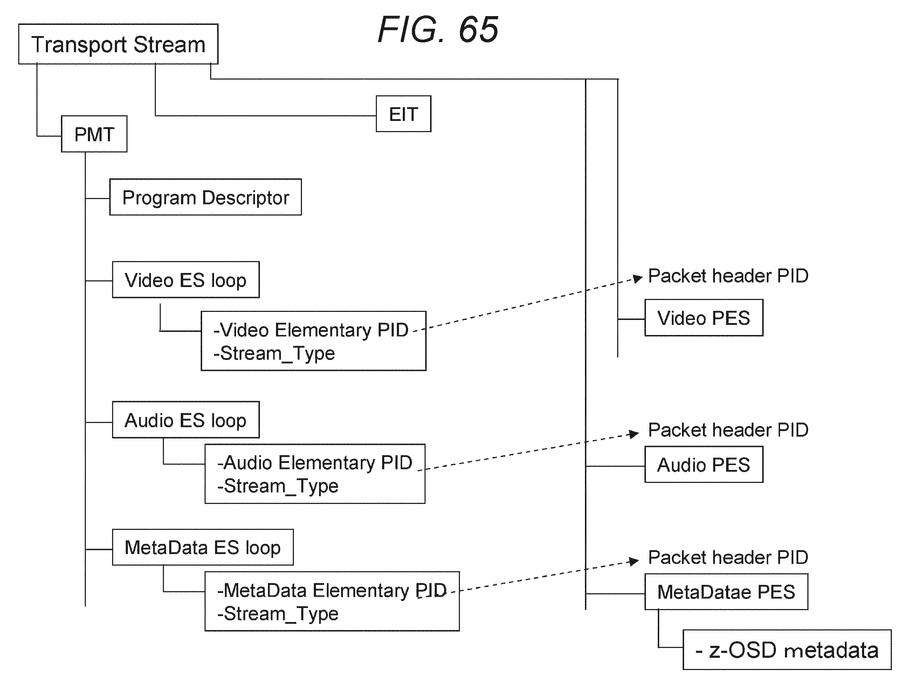

Next, a case will be described in which disparity information sets are transmitted as an independent metadata stream. Fig. 65 illustrates an example of the configuration of the transport stream (bit stream data) in such a case. As illustrated in the example of the configuration, there is a metadata elementary stream into which metadata (z-OSD metadata) including the disparity information set is inserted.

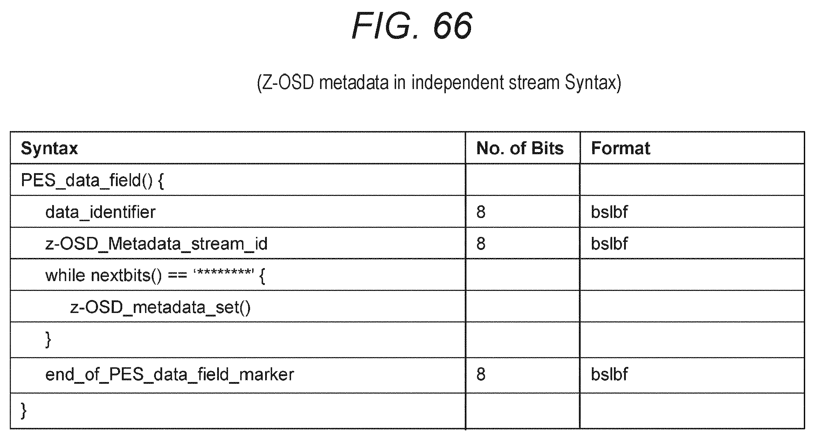

Fig. 66 illustrates an example of the structure (syntax) of a metadata elementary stream into which metadata (z-OSD metadata) including a disparity information set is inserted. Main data defining contents (Semantics) of this example of the structure is illustrated in Fig. 60. "z-OSD_Metadata_stream_id" represents a metadata elementary stream into which metadata (z-OSDmetadata) is inserted. "z-OSD_Metadata_set()" represents metadata that includes a disparity information set.

Fig. 67 illustrates an example of the detailed structure of "z-OSD_Metadata_set()". "segment_continued_flag" is flag information of one bit that represents whether or not the segment of zOSD is located after the current segment. "segment_continued_flag =1" represents that a segment is present. "segment_continued_flag = 0" represents that a segment is not present. On the reception side, it can be checked whether or not segments or packets in which the disparity information set is included are continuously present based on the flag information, and accordingly, the possibility of update of the disparity information and the like can be checked in advance.

"delta_PTS[32..0]" is 32-bit data that represents a difference (change) in the PTS (time information) included in the header section which specifies the display timing of a subtitle. "Disparity_position_id" is 16-bit data that illustrates a pixel position corresponding to the disparity information set. In addition, the 32-bit data is arranged so as to be divided into three.

"relative_plain_mode" is one-bit data that represents the type of a relative plane. It represents Coordinate Mode 0 and a plane of coordinates in which the image center O is set as the origin (0, 0). "relative_plain_mode = 0" represents Coordinate Mode 1 and a plane of coordinates in which the top left side (top-left) of the image is set as the origin (0, 0).

"Relative_x" is 11-bit data that represents a horizontal distance (Rxa) from the origin (0, 0) to the pixel position (x, y). This horizontal distance (Rxa) is represented as a ratio with respect to the size of the image in the horizontal direction. "Relative_y" is 11-bit data that represents a vertical distance (Rya) from the origin (0, 0) to the pixel position (x, y). This vertical distance (Rya) is represented as a ratio with respect to the size of the image in the vertical direction. "Disparity" is 12-bit data that illustrates the value of the disparity information (disparity vector) for the pixel position (x, y).

As described above, by inserting a segment or a packet that includes a disparity information set into a subtitle elementary stream or an independent metadata stream, the disparity information set can be transmitted. Here, the disparity information set includes position data that represents a relative position of a predetermined pixel position with respect to the whole image and disparity data for the predetermined pixel position.

However, disparity information is not limited to the disparity information set, and it is apparent that disparity information of any other type can be similarly transmitted. In other words, disparity information to be transmitted, for example, may be formed by position data that represents a position or an area or the disparity data for the position or the area, and the position data is not limited to the case of representing a relative position with respect to the whole image but may represent the absolute position within the image or the like.

In addition, in the above-described embodiment, as a method of transmitting a disparity information set from the set-top box 200 to the television receiver 300A, the method using an HDMI Vendor Specific InfoFrame and the method using an active space have been described. Other than that, a case may be considered in which transmission is performed through bidirectional communication line that is configured by an HPD line 86 (HEAC- line) and the utility line 88 (HEAC+ line).

In addition, in the above-described embodiment, a case has been described in which the set-top box 200 and the television receiver 300 are connected through the digital interface of the HDMI. However, it is apparent that the present invention can be applied also to a case where they are connected through a digital interface (wired or wireless) that is similar to the digital interface of the HDMI.

Furthermore, in the above-described embodiment, an example has been described in which all or some of the disparity information sets used by the bit stream processing unit 201 are transmitted through the HDMI interface from the set-top box 200 to the television receiver 300. However, it is apparent that the technique for transmitting a disparity information set through the HDMI interface as above can be applied to the combination of other source devices and sink devices. For example, as the source device, a disc player of a BD, a DVD, or the like, a gaming device, and the like can be considered, and, as the sink device, a monitor device, a projector apparatus, and the like can be considered.

### INDUSTRIAL APPLICABILITY

According to the present invention, a display of overlapping information, for example, graphics information included in an OSD or the like at the time of displaying a stereoscopic image can be performed well, and it can be applied to a stereoscopic image displaying system and the like.

### REFERENCE SIGNS LIST

- 10 and 10A: Stereoscopic image displaying system
- 100: Broadcasting station
- 110: Transmission data generating unit
- 111L and 111R: Camera
- 112: Video framing unit
- 113: Disparity map generating unit
- 114: Microphone
- 115: Data fetching unit
- 115a: Data recording medium
- 116 to 118: Change-over switch
- 119: Video encoder
- 120: Audio encoder
- 122: Disparity information set generating unit
- 126: Multiplexer
- 200: Set-top box (STB)
- 201: Bit stream processing unit
- 202: HDMI terminal
- 203: Antenna terminal
- 204: Digital tuner
- 205: Video processing circuit
- 206: HDMI transmission unit
- 207: Audio processing circuit
- 211: CPU
- 215: Remote control receiving unit
- 216: Remote control transmitter
- 220: Demultiplexer
- 221: Video decoder
- 224: Audio decoder
- 226: OSD display data generating unit
- 228: Video overlapping unit
- 300: Television receiver (TV)
- 301: 3D signal processing unit
- 302: HDMI terminal
- 303: HDMI receiving unit
- 304: Antenna terminal
- 305: Digital tuner
- 306: Bit stream processing unit
- 307: Video processing circuit
- 308: Panel driving circuit
- 309: Display panel
- 310: Audio processing circuit
- 311: Audio amplifying circuit
- 312: Speaker
- 313: OSD display data generating unit
- 314: Video overlapping unit
- 321: CPU
- 325: Remote control receiving unit
- 326: Remote control transmitter
- 400: HDMI cable

## Claims

1. A stereoscopic image data transmission device comprising:
an image data output unit that outputs stereoscopic image data of a predetermined program that includes left-eye image data and right-eye image data;
a disparity information set output unit that outputs a disparity information set for a predetermined pixel position corresponding to the stereoscopic image data of the predetermined program that is output from the image data output unit; and
a transmission unit that transmits the stereoscopic image data output from the image data output unit and the disparity information set output from the disparity information set output unit,
wherein the disparity information set includes position data that represents a relative position of the predetermined pixel position with respect to a whole image and disparity data for the predetermined pixel position.

2. The stereoscopic image data transmission device according to claim 1, wherein the position data is formed by direction data that represents a direction of the predetermined pixel position from an origin by using an image center as the origin and distance data that represents a distance from the origin to the predetermined pixel position.

3. The stereoscopic image data transmission device according to claim 2, wherein the disparity data is data that represents a ratio of a value of the disparity information for the predetermined pixel position to the distance from the origin.

4. The stereoscopic image data transmission device according to claim 2, wherein the disparity data is a value of the disparity information at specific display resolution for the predetermined pixel position.

5. The stereoscopic image data transmission device according to claim 1, wherein the position data is formed by horizontal distance data that represents a horizontal distance of the predetermined pixel position from the origin and vertical distance data that represents a vertical distance of the predetermined pixel position from the origin.

6. The stereoscopic image data transmission device according to claim 5, wherein the disparity data is data that represents a ratio of a value of the disparity information for the predetermined pixel position with respect to specific display resolution.

7. The stereoscopic image data transmission device according to claim 5, wherein the disparity data is a value of the disparity information for the predetermined pixel position at specific display resolution.

8. The stereoscopic image data transmission device according to claim 1, wherein the predetermined pixel positions are a first pixel position at which a value of the disparity information is maximum and a second pixel position at which the value of the disparity information is minimum.

9. The stereoscopic image data transmission device according to claim 1, wherein the disparity information set output unit outputs the disparity information set of each divided period acquired by equally dividing a period of the predetermined program in a hierarchical manner.

10. The stereoscopic image data transmission device according to claim 1,
wherein the transmission unit transmits a transport stream that includes the stereoscopic image data of the predetermined program output from the image data transmission unit and inserts a descriptor that includes the disparity information set output from the disparity information set output unit at a predetermined position of PSI information or SI information that is inserted into the transport stream.

11. The stereoscopic image data transmission device according to claim 1, wherein the transmission unit transmits the disparity information set with being included in an elementary stream that is used for transmitting predetermined information.

12. The stereoscopic image data transmission device according to claim 11,
wherein the other information is the stereoscopic image data, and
the disparity information set is inserted into a user data region of a header section of the elementary stream.

13. The stereoscopic image data transmission device according to claim 11,
wherein the predetermined information is subtitle data or independent data, and
the elementary stream includes a segment or a packet into which the disparity information set is inserted.

14. A method of transmitting stereoscopic image data, the method comprising:
outputting stereoscopic image data of a predetermined program that includes left-eye image data and right-eye image data;
outputting a disparity information set for a predetermined pixel position corresponding to the stereoscopic image data of the predetermined program that is output in the outputting of stereoscopic image data; and
transmitting the stereoscopic image data output in the outputting of stereoscopic image data and the disparity information set output in the outputting of a disparity information set,
wherein the disparity information set includes position data that represents a relative position of the predetermined pixel position with respect to a whole image and disparity data for the predetermined pixel position.

15. A stereoscopic image data reception device comprising:
a receiving unit that receives stereoscopic image data of a predetermined program that includes left-eye image data and right-eye image data and a disparity information set for a predetermined pixel position corresponding to the stereoscopic image data of the predetermined program;
an overlapping information data output unit that outputs data of left-eye overlapping information corresponding to the left-eye image data that is included in the stereoscopic image data received by the receiving unit and data of right-eye overlapping information corresponding to the right eye image data that is included in the stereoscopic image data received by the receiving unit; and
a data overlapping unit that overlaps the data of the left-eye overlapping information and the data of the right-eye overlapping information, which are output from the overlapping information data output unit, and the left-eye image data and the right-eye image data included in the stereoscopic image data received by the receiving unit each other,
wherein the disparity information set includes position data that represents a relative position of the predetermined pixel position with respect to the whole image and disparity data for the predetermined pixel position, and
the overlapping information data output unit brings disparity to occur between the left-eye overlapping information and the right-eye overlapping information based on the disparity information set received by the receiving unit.

16. A stereoscopic image data reception device comprising:
a receiving unit that receives stereoscopic image data of a predetermined program that includes left-eye image data and right-eye image data and a disparity information set for a predetermined pixel position corresponding to the stereoscopic image data of the predetermined program; and
a transmission unit that transmits the left-eye image data, the right-eye image data, and the disparity information set that are received by the receiving unit to an external device through a transmission line,
wherein the disparity information set includes position data that represents a relative position of the predetermined pixel position with respect to the whole image and disparity data for the predetermined pixel position.

17. The stereoscopic image data reception device according to claim 16,
wherein the transmission unit transmits the image data through a plurality of channels to the external device through the transmission line by using differential signals, and
the transmission unit transmits the disparity information set to the external device by inserting the disparity information set in a blanking period of the image data.

18. The stereoscopic image data reception device according to claim 16,
wherein the transmission unit includes:
a transmission data generating unit that generates transmission data in units of a video field period including a horizontal blanking interval, a vertical blanking interval, and an active video interval that are broken in accordance with a vertical synchronization signal; and
a transmission data transmitting unit that transmits the transmission data generated by the transmission data generating unit to the external device through the transmission line through a plurality of channels by using differential signals,
the active video interval includes a main video region and an auxiliary video region, and
the transmission data generating unit arranges image data in the main video region and arranges the disparity information set relating to the image data arranged in the main video region in the auxiliary video region.

19. A stereoscopic image data transmission device comprising:
an image data output unit that outputs stereoscopic image data of a predetermined program that includes left-eye image data and right-eye image data;
a disparity information output unit that outputs disparity information corresponding to the stereoscopic image data of the predetermined program that is output from the image data output unit; and
a transmission unit that transmits the stereoscopic image data output from the image data output unit and the disparity information output from the disparity information output unit,
wherein the transmission unit inserts a segment or a packet that includes the disparity information into an elementary stream used for transmitting predetermined information, and
the segment or the packet further includes timing information that represents usage timing of the disparity information.

20. The stereoscopic image data transmission device according to claim 19, wherein the segment or the packet further includes flag information that represents whether or not segments or packets are continuously present.
